(19) Europäisches Patentamt
European Patent Office
Office européen des brevets

(11) EP 4 206 209 A1

(12) EUROPEAN PATENT APPLICATION
published in accordance with Art. 153(4) EPC

(43) Date of publication:
**05.07.2023 Bulletin 2023/27**

(21) Application number: **21946249.6**

(22) Date of filing: **26.11.2021**

(51) International Patent Classification (IPC):
***C07F 9/564*** *(2006.01)* ***C07B 59/00*** *(2006.01)*
***G01N 30/06*** *(2006.01)*

(86) International application number:
**PCT/CN2021/133645**

(87) International publication number:
**WO 2023/082354 (19.05.2023 Gazette 2023/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.11.2021 CN 202111346190**

(71) Applicant: **Ascentawits Pharmaceuticals, Ltd.**
**Shenzhen, Guangdong 518118 (CN)**

(72) Inventors:
- **RUAN, Meizhen**
  **Shenzhen, Guangdong 518118 (CN)**
- **CAI, Xiaohong**
  **Shenzhen, Guangdong 518118 (CN)**
- **DUAN, Jianxin**
  **Shenzhen, Guangdong 518118 (CN)**
- **JUNG, Donald T**
  **Cupertino, California 95014 (US)**
- **LI, Anrong**
  **Shenzhen, Guangdong 518118 (CN)**
- **MENG, Teng**
  **Shenzhen, Guangdong 518118 (CN)**
- **SUN, Lin**
  **Shenzhen, Guangdong 518118 (CN)**
- **LI, Bing**
  **Shenzhen, Guangdong 518118 (CN)**

(74) Representative: **Nederlandsch Octrooibureau**
**P.O. Box 29720**
**2502 LS The Hague (NL)**

# (54) DEUTERATED COMPOUND, AND PREPARATION METHOD THEREFOR AND USE THEREOF

(57) The present invention relates to a deuterated compound, and preparation method and use thereof. The deuterated compound I has a structure as shown in Formula (I), wherein A is H or D, and at least one of eight As is D; M is H or an alkali metal, an alkaline earth metal, or an ammonium radical. The present invention provides use of the deuterated compound I as an internal standard for measuring the content of a metabolite II in a biological sample, wherein the metabolite II has a structure as shown in a Formula (II); wherein A is H; M is H or an alkali metal, an alkaline earth metal, or an ammonium radical. The present invention uses the deuterated compound I as an internal standard to quantitatively analysis the content of metabolite II at lower content in biological samples, which can not only meet the requirements for the lower limit of quantitation, but also meet the requirements for DMPK studies in clinical trials.

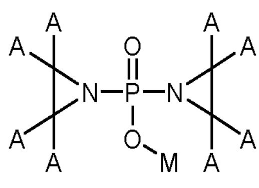
(I),
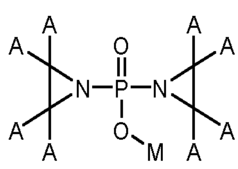
(II).

EP 4 206 209 A1

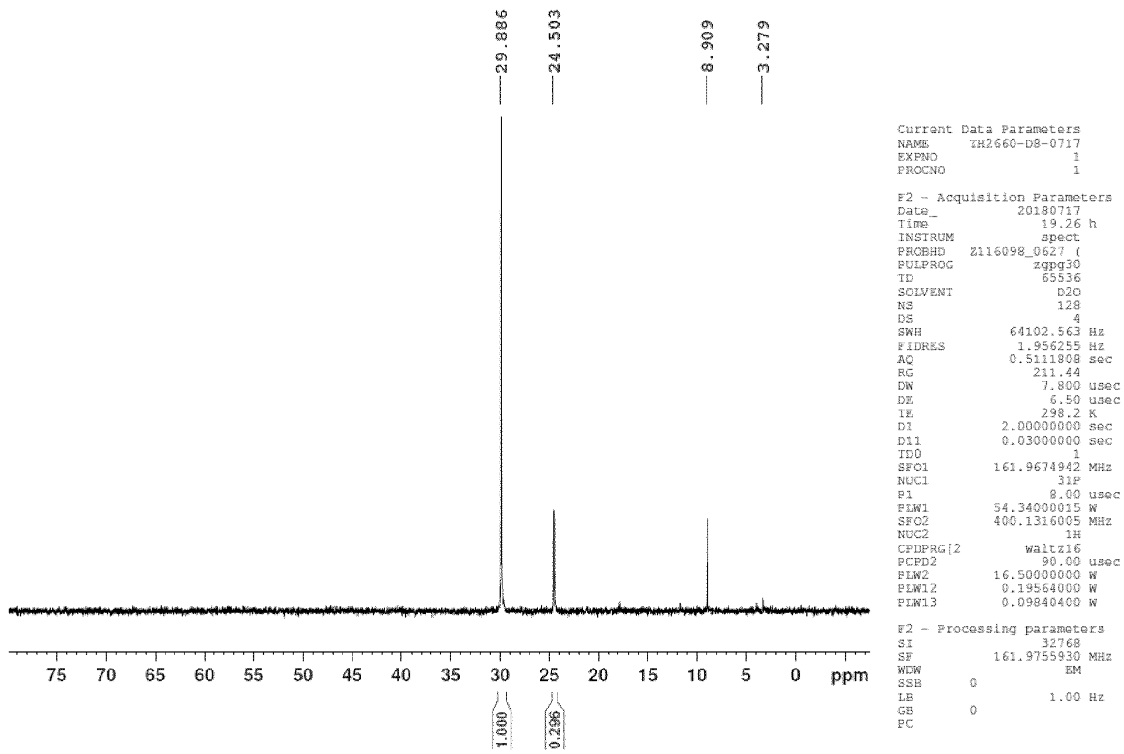
29.886
24.503
8.909
3.279
Current Data Parameters
NAME TH2660-D8-0717
EXPNO 1
PROCNO 1
F2 - Acquisition Parameters
Date_ 20180717
Time 19.26 h
INSTRUM spect
PROBHD Z116098_0627 (
PULPROG zgpg30
TD 65536
SOLVENT D2O
NS 128
DS 4
SWH 64102.563 Hz
FIDRES 1.956255 Hz
AQ 0.5111808 sec
RG 211.44
DW 7.800 usec
DE 6.50 usec
TE 298.2 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC
75 70 65 60 55 50 45 40 35 30 25 20 15 10 5 0 ppm
1.000
0.296

FIG.1

## Description

## TECHNICAL FIELD

The present invention relates to the field of assay technology, and in particular to a deuterated compound, and preparation method and use thereof.

## BACKGROUND

In human clinical trials, it is necessary to measure the contents of drugs and drug metabolites in biological samples (such as blood, urine and tissues) of a subject, and further conduct Drug Metabolism and Pharmacokinetics (DMPK) studies based on the measured contents of drugs and drug metabolites. Such studies are vital for developing new drugs.

Liquid chromatography, the most common method, can detect almost all types of drugs and drug metabolites, with the help of the ultra-high separation power of High Performance Liquid Chromatography (HPLC) or Ultra-High-Performance Liquid Chromatography (UHPLC), and the detection capacity of Ultraviolet Absorption Detector (UVD), Diode Array Detector (PDAD), Fluorescence Detector (FLD), Evaporative Light Scattering Detector (ELSD), Differential Refractometer (DR), or Mass Spectrometry Detector (MSD).

AST2660 (also known as AST-2660) is a metabolite of AST-3424 (also known as OBI-3424 or TH-3424) (Meng, F., Li, W. F., Jung, D., Wang, C. C., Qi, T., Shia, C. S., Hsu, R. Y, Hsieh, Y C., & Duan, J. (2021), A novel selective AKR1C3-activated prodrug AST-3424/OBI-3424 exhibits broad anti-tumor activity, American Journal of Cancer Research, 11(7), 3645-3659), and is a chemical ingredient that exerts the activity of prodrug AST-3424.

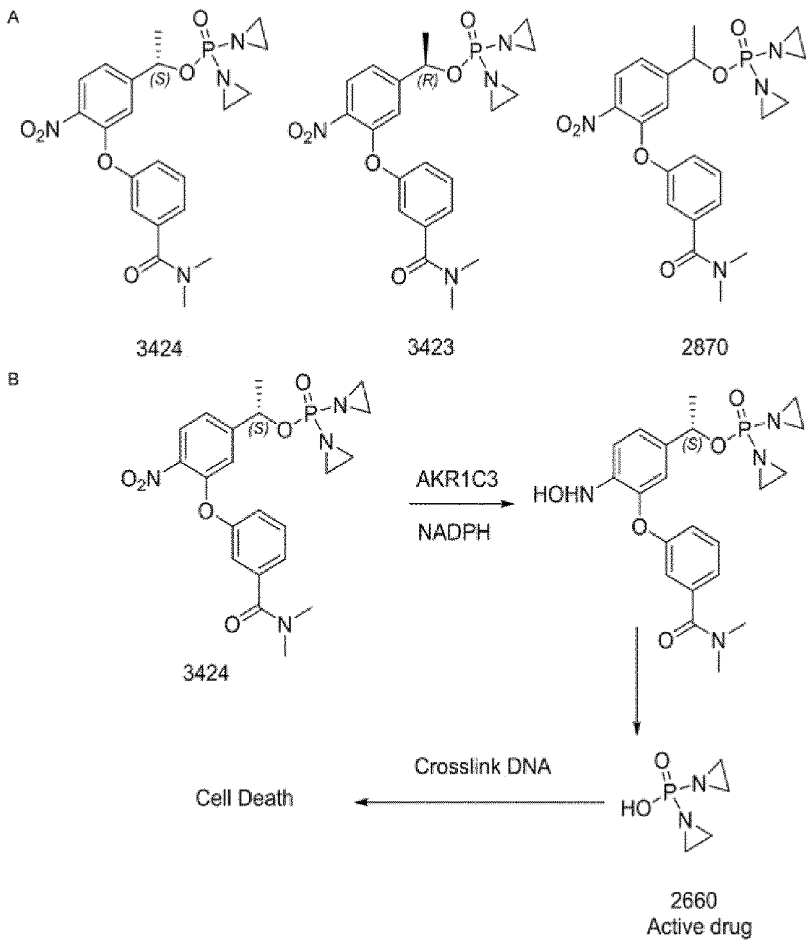


Chemical Scheme in which AST-3424 is metabolized into AST-2660 (i.e., 2660 shown in the figure)

In clinical trials (where OBI-3424 is under investigation in Phase II clinical trial NCT03592264 in the US (sponsored by OBI Pharma, Inc., a Taiwan-based biopharma company, in patients with castration-resistant prostate cancer (CRPC) and liver cancer), and in Phase II clinical trial NCT04315324 in the US (sponsored by the Southwest Oncology Group (SWOG), in patients with T-cell Acute Lymphoblastic Leukaemia (T-ALL)); and AST-3424 is under investigation in Phase II clinical trial CTR20191399 in China (sponsored by Ascentawits Pharmaceuticals, Ltd., in patients with solid tumors), and in Phase II clinical trial CTR20201915 in China (sponsored by Ascentawits Pharmaceuticals, Ltd., in patients with T-cell Acute Lymphoblastic Leukaemia (T-ALL) and B-cell Acute Lymphoblastic Lymphoma (B-ALL)), AST-3424 is used in an amount ranging from 1 mg to 100 mg.

The internal standard or external standard method used in conventional liquid chromatography cannot satisfy the requirements for quantitative analysis of drug metabolites in biological samples when a drug is dosed in lower amounts. Therefore, there is a need for developing an assay method which can not only meet the requirements for the lower limit of quantitation, but also meet the requirements for DMPK studies of the above drugs.

## SUMMARY OF THE INVENTION

To this end, the present invention provides a deuterated compound, and preparation method and use thereof. It has been tested and validated that deuterated compound I as an internal standard can be used for quantitative analysis of metabolite II in biological samples at the minimum detection limit of 0.5 ng/ml, which satisfies the requirements for DMPK studies.

The deuterated compound I provided by the present invention as the deuterated internal standard in DMPK analysis has adequate stability, can be stored for a longer time under experimental conditions (having stable quality and properties when stored at -20°C and -70°C), and can meet the requirements for long-term storage of samples and various operating temperatures (ambient temperatures for labs) in DMPK laboratories used in clinical trials.

Generally speaking, the present invention, which actually satisfies the requirements for DMPK studies of the above-mentioned metabolite II under the lower limit of quantitation (being present in low amounts, the sample having to be stored for a longer time as it needs to undergo centralized analysis, and satisfying the actual requirements of laboratory operations), provides a system for measuring low content levels of metabolite II in biological samples, comprising: a deuterated internal standard, LC-MS/MS instrument and method, curve-fitting algorithm for quantitation, and operating procedures.

According to the present invention, deuterated compound I is used for quantitative analysis of metabolite II in biological samples, which can meet the requirements for quantitative analysis under the lower limit of quantitation, and is also suitable for DMPK studies in clinical trials.

The present invention provides a deuterated compound I having a structure as shown in Formula (I):

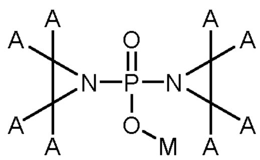
(I),

wherein A is H or D, and at least one of eight As is D;
M is H or an alkali metal, an alkaline earth metal, or an ammonium radical.

The deuterated compound I is a deuterated bis(aziridine-1-yl)phosphinic acid or a salt thereof; the salt-forming cation is an alkali metal such as $Na^+$, $K^+$, or alkaline earth metal ion $Ca^{2+}$, or ammonium ion $NH_4^+$. Preferably, M is Na, K, Li, or an ammonium radical.

Depending on the biological samples and different reagents added in the subsequent operations, the deuterated compound may be present in the form of an acid or a salt; and correspondingly, the deuterated compound is an acid or a salt.

Preferably, at least three of the eight As in the deuterated compound I are D. As the deuterated internal standard, the corresponding mass-to-nucleus ratio m/z in the mass spectra should be distinguishable from non-deuterated compounds. In fact, the mass spectral peak is not a single value, but in the shape of a mountain that descends towards both sides around the main peak, and the abscissa value m/z of the main peak is the value of the compound, set as x; when a hydrogen atom (protium) in the compound is replaced by deuterium, the abscissa value m/z of its main peak is x+1. Apparently, since the main peak is in the shape of a mountain, x and x+1 will overlap with each other, and as a result they might be indistinguishable. According to the method for calculating the molecular weight of the compound (i.e., summing up the relative atomic masses of all the atoms in the compound), it can be concluded that the more the number

of the atoms, the more the isotopic atom species with different relative atomic masses the corresponding atoms have, the shape of the main peak descending towards both sides will become more "robust", and the broader the overlapping area with the main peak of another compound will be. One possible approach to narrow the overlapping area is to extend the distance between the two main peaks. For the deuterated compound, it is necessary to increase the number of its deuterium atoms. The present invention has found, based on the individualized situation of the deuterated compound I, and through experimental verification and calculation, that the non-deuterated compound (metabolite II) can be better distinguished from deuterated compound I when the deuterated compound I contains 3 D (deuterium) atoms. If there are fewer D (deuterium) atoms in the deuterated compound I, a mass spectrum with higher resolution is required to be provided.

Preferably, the number of D in the deuterated compound I is 4 or 8.

More preferably, the deuterated compound I is a compound having a structure as shown in Formula (I-1) or (I-2):

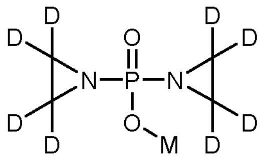
(I-1),
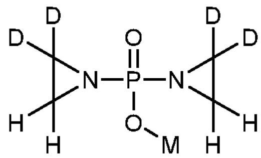
(I-2).

Particularly, the deuterated compound I is selected from compounds having the following structures:

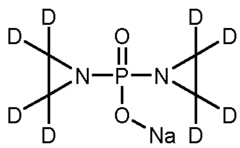
,
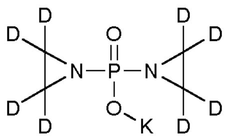
,
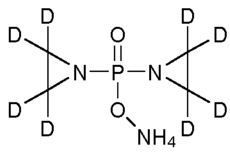
,

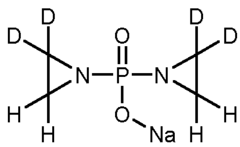
,
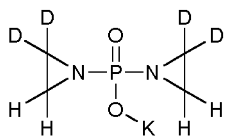
,
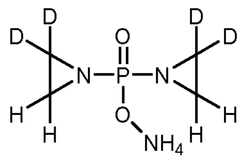
.

The present invention further provides a method for preparing a deuterated compound I, comprising the steps of:

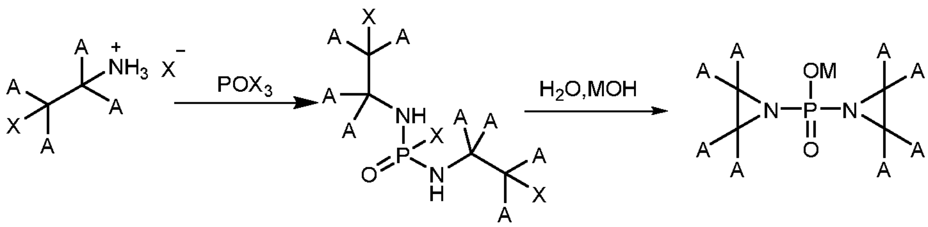


I-a I-b I

reacting compound I-a with phosphorus oxyhalide $POX_3$ to obtain compound I-b;

hydrolyzing compound I-b in an aqueous solution with or without a base to correspondingly obtain the deuterated compound I;

wherein compound I-a is deuterated 2-halogenated ethylamine or an inorganic acid salt, sulfate, phosphate thereof, or the like; A is H or D; and at least one of four As of compound I-a is D; and at least one of eight As of compounds I-b and compound I is D;

wherein the base in the hydrolysis reaction is selected from MOH, where M is an alkali metal, an alkaline earth metal or an ammonium radical; MH, where M is an alkali metal; MOR, where R is an alkyl group with 1-4 carbon atoms,

and M is an alkali metal, carbonate or bicarbonate of alkali metal; and

X is halogen.

In the first reaction, compound I-a (deuterated 2-haloethylamine or its hydrohalides) is reacted with phosphorus oxyhalide $POX_3$ to obtain compound I-b. This reaction process may involve one or more reactions.

Deuterated 2-haloethylamine or 2-haloethylamine inorganic acid salts that can be used are determined based on the solvent used in the reaction.

Since this reaction is a violent exothermic reaction, 2-haloethylamine or 2-haloethylamine hydrohalide is dissolved in a solvent to lower the temperature. Subsequently, phosphorus oxyhalide $POX_3$ or a solution of phosphorus oxyhalide is slowly added dropwise, and reacted under stirring (the temperature of the packed reaction system is -78 to -20°C). The solvent used in the reaction is an organic solvent, for example, one or a mixture of two or more of dichloromethane, chloroform, chlorobenzene, 1,2-dichloroethane, ethyl acetate, n-hexane or cyclohexane.

The phosphorus oxyhalide $POX_3$ comprises phosphorus oxybromide $POBr_3$ and phosphorus oxychloride $POCl_3$. Deuterated 2-haloethylamine inorganic acid salts include deuterated 2-haloethylamine hydrohalic acids (hydrochloride, hydrobromide), inorganic oxo acid salts (such as sulfate and phosphate); preferably, the compound I-a is hydrochloride or hydrobromide of deuterated 2-haloethylamine.

As an acid is generated in the first reaction, a base is added to adjust the pH of the reaction. The bases added include inorganic bases and organic bases. Inorganic bases are selected from weak bases, such as alkaline earth metal hydroxides (calcium hydroxide), alkali metal carbonates, and bicarbonate salts (sodium carbonate, potassium carbonate, sodium bicarbonate, and potassium bicarbonate). Preferably, the organic base is one or a mixture of two or more of methylamine, ethylamine, propylamine, isopropylamine, N,N-diethylamine, triethylamine, n-butylamine, isobutylamine, 4-dimethylaminopyridine, N,N-diisopropylethylamine, 1,8-diazabicyclo[5.4.0]undec-7-ene, N,N,N',N'-tetramethylethylenediamine, tetramethylguanidine, pyridine, N-methyldicyclohexylamine or dicyclohexylamine.

The reaction procedures include: dissolving 2-haloethylamine or 2-haloethylamine hydrohalide in a solvent to lower the temperature, then slowly dropwise adding phosphorus oxyhalide $POX_3$ or a solution of phosphorus oxyhalide $POX_3$ to further lower the temperature, adding a base or a basic solution after lowering the temperature, and effecting the reaction under stirring.

Preferably, the organic solvent is one or a mixture of two or more of dichloromethane, chloroform, chlorobenzene, 1,2-dichloroethane, ethyl acetate, n-hexane or cyclohexane and tetrahydrofuran.

The reaction of compound I-a with phosphorus oxyhalide $POX_3$ is performed under an atmosphere, wherein the atmosphere is one of air, nitrogen or argon; preferably, the atmosphere is one of nitrogen or argon; more preferably, the atmosphere is nitrogen.

In the second step, compound I-b is hydrolyzed in an aqueous solution with or without a base to correspondingly obtain the deuterated compound I.

The hydrolysis reaction must take place with the addition of water. Thus, the reaction is carried out with the participation of water. If only water is added without adding a base, M in the deuterated compound I after the reaction is H, and the compound is correspondingly present in the form of an acid; if a base is added, a salt will be formed in the corresponding reaction. The base in the hydrolysis reaction is selected from MOH, where M is an alkali metal, an alkaline earth metal or an ammonium radical; MH, where M is an alkali metal; MOR, where R is an alkyl group with 1-4 carbon atoms, and M is an alkali metal, carbonate or bicarbonate of alkali metal. Preferably, the base is NaOH or KOH.

The present invention further provides a use of measuring the content of the deuterated compound I, i.e., measuring the content of the deuterated compound I by using a $^{31}P$-NMR method; preferably, measuring the content of the deuterated compound I in a solution containing the deuterated compound I by using a $^{31}P$-NMR method; or measuring the content of the deuterated compound I by using a liquid chromatography, wherein the liquid chromatography conditions are as follows:

a hydrogen acceptor type stationary phase chromatography column is used;
mobile phase A is a methanol solution of ammonium acetate, and mobile phase B is acetonitrile;
mobile phases A and B are used for gradient elution, which gradually increased from 15% by volume ratio to 90% by volume ratio of mobile phase A, and then gradually decreased to 15% by volume ratio of mobile phase A.

The deuterated compound is quantitatively analyzed after it has been prepared and purified. Many methods are suitable for quantitative analysis. The deuterated compound can either be directly weighed after purification, or directly analyzed by HPLC.

As the finished product of the deuterated compound I prepared by this invention is present in an aqueous solution, it cannot be rapidly analyzed by typical HPLC or accurate weighing method. It was found by experimental verification that the $^{31}P$-NMR method can be used to measure the content with the required accuracy in a rapid and

convenient manner.

The present invention further provides a method for measuring the content of the deuterated compound I, comprising the steps of:

detecting $^{31}P$-NMR of the deuterated compound I and the phosphorus-containing compound with known content to obtain their spectra; and

substituting the content of the phosphorus-containing compound with known content to calculate and obtain the content of the deuterated compound I, based on the peak area ratio of the chemical shift characteristic peaks of the deuterated compound I to those of the phosphorus-containing compound in the $^{31}P$-NMR spectra.

The phosphorus-containing compound is preferably a compound containing one phosphorus atom, and more preferably is hexamethylphosphoric triamide.

Preferably, the deuterated compound I and the phosphorus-containing compound with known content are added to the solvent and tested for their $^{31}P$-NMR spectra.

Preferably, the deuterated compound I and the phosphorus-containing compound with known content are added to water and tested for their $^{31}P$-NMR spectra after they have been dissolved.

The deuterated compound I is quantitatively analyzed by using a phosphorus-containing compound as the internal standard of $^{31}P$-NMR. Evidently, the number of phosphorus atoms in the selected phosphorus-containing compound is preferably 1, so that the $^{31}P$-NMR spectra have relatively simple signal peaks, and thus are convenient for quantitation. Furthermore, the chemical shift of the $^{31}P$-NMR spectral signal peak of the phosphorus-containing compound should be spaced wide enough apart from the chemical shift of the $^{31}P$-NMR spectral signal peak of the deuterated compound I so that the two signal peaks are easily distinguishable.

When the spectra are assayed by $^{31}P$-NMR method, the number of scan times has certain impacts on the $^{31}P$-NMR spectral signal peak of the phosphorus-containing compound and also on the $^{31}P$-NMR spectral signal peak of the deuterated compound I. It has been verified by experiments that the number of scan times should be greater than 64 times.

The present invention further provides use of the deuterated compound I as an internal standard for detecting a metabolite II in a biological sample; preferably, the present invention provides use of the deuterated compound I as an internal standard for measuring a content of a metabolite of an DNA alkylating agent prodrug in a biological sample, wherein the metabolite II has a structure as shown in Formula (II):

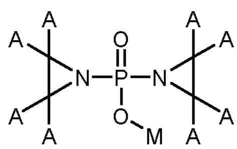 (II),

wherein A is H; M is H or an alkali metal, an alkaline earth metal, or an ammonium radical.

"Predrug" (also known as prodrug, drug precursor, precursor drug, etc.) refers to a compound that has pharmacological effects only after it has been converted *in vivo.* The prodrug itself is biologically inactive or less active, but becomes active after it has been metabolized within the body. The purpose of this process is to increase the bio-availability and targeting capacity of the drug while lowering its toxicity and side effects. Currently, prodrugs can be classified into two major families: carrier-prodrugs and bioprecursors.

The DNA alkylating agent prodrug of the present invention refers to a prodrug that releases a DNA alkylating agent (i.e., metabolite II) after metabolism.

The present invention further provides use of the deuterated compound I as an internal standard for measuring a content of a metabolite of an AKR1C3-activated DNA alkylating agent prodrug or a hypoxia-activated DNA alkylating agent prodrug in a biological sample by LC-MS/MS analysis, wherein the metabolite II has a structure as shown in Formula (II):

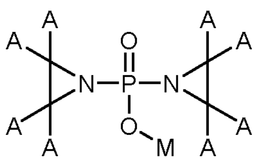 (II),

wherein A is H; M is H or an alkali metal, an alkaline earth metal, or an ammonium radical; wherein the deuterated compound I is selected from

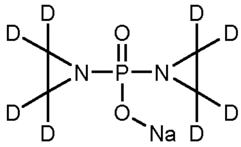 , 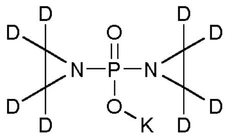 , 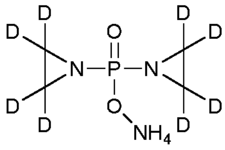 ,

wherein the metabolite II is selected from

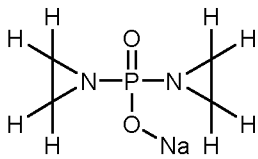 , 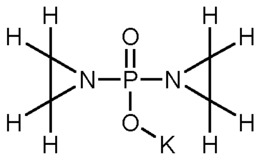 , 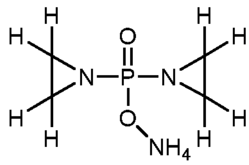 .

The AKR1C3-activated DNA alkylating agent prodrug is selected from the compounds having the following structures as shown in Formulae 1-5:

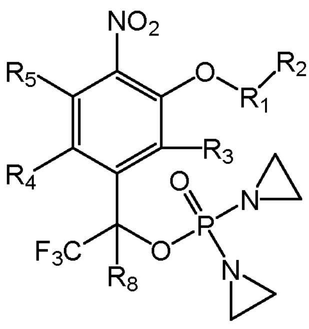 (1) 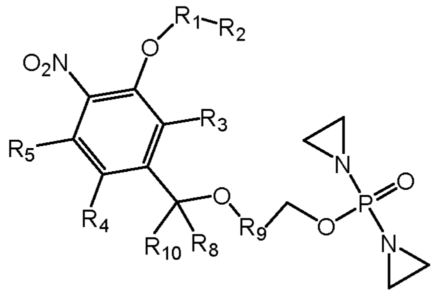 (2),

wherein the definitions of $R_1$, $R_2$, $R_3$, $R_4$, $R_5$, $R_8$, $R_9$, and $R_{10}$ are as described in the claims of Patent Application PCT/CN2020/089692 with Publication No.WO2020228685A1. Specifically, the groups are defined as follows:

$R_1$ is $C_6$-$C_{10}$ aryl or Z-substituted aryl, 4-15 membered heterocycle or Z-substituted heterocycle, 5-15 membered heteroaryl or Z-substituted heteroaryl, or a 7-15 membered fused ring or Z-substituted fused ring;

$R_2$ is hydrogen, a halogen atom, cyano or isocyano, hydroxy, sulfhydryl, amino, OTs, OMS, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, $C_6$-$C_{10}$ aryl or Z-substituted aryl, 4-15 membered heterocycle or Z-substituted heterocycle, 5-15 membered heteroaryl or Z-substituted heteroaryl, ether having from 1 to 6 carbon atoms or Z-substituted alkoxy having from 1 to 6 carbon atoms, $-CONR^6R^7$, $-SO_2NR^6R^7$, $-SO_2R^6$, $-OCOO-R^6$, $-COOR^6$, $-NR^6COR^7$, $-OCOR^6$, $-NR^6SO_2R^7$ or $-NR^6SO_2NR^6R^7$, or $R^2$ together with the atom in the group $R^1$ to which it is bonded to form a 7-15 membered fused ring or Z-substituted fused ring;

$R_3$ is hydrogen, halogen, cyano or isocyano, hydroxy, sulfhydryl, amino, OTs, OLCMS, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, $C_6$-$C_{10}$ aryl or Z-substituted aryl, 4-15 membered heterocycle or Z-substituted heterocycle, 5-15 membered heteroaryl or Z-substituted heteroaryl, $C_1$-$C_6$ alkoxy or Z-substituted $C_1$-$C_6$ alkoxy, $-CONR^6R^7$, $-SO_2NR^6R^7$, $-SO_2R^6$, $-OCO-R^6$, $-OCOO-R^6$, $-COOR^6$, $-NR^6COR^7$, $-OCOR^6$, or $-NR^6SO_2R^7$;

$R_4$ and $R_5$ are each independently hydrogen, a halogen atom, cyano or isocyano, hydroxy, sulfhydryl, amino, OTs, OLCMS, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, $C_6$-$C_{10}$ aryl or Z-substituted aryl, 4-15 membered heterocycle or Z-substituted heterocycle, 5-15 membered heteroaryl or Z-substituted heteroaryl, $C_1$-$C_6$ alkoxy or Z-substituted $C_1$-$C_6$ alkoxy, $-CONR^6R^7$, $-SO_2NR^6R^7$, $-SO_2R^6$, $-OCOO-R^6$, $-COOR^6$, $-NR^6COR^6$, $-OCOR^6$ or $-NR^6SO_2R^7$, or $R^4$ and $R^5$ together with the atom in the benzene ring to which they are bonded to form a 7-15 membered fused ring or Z-substituted fused ring;

$R_6$ and $R_7$ are each independently hydrogen, cyano or isocyano, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, $C_6$-$C_{10}$ aryl or Z-substituted aryl, 4-15 membered heterocycle or Z-substituted heterocycle, 5-15 membered heteroaryl or Z-substituted heteroaryl, or $C_1$-$C_6$ alkoxy or Z-substituted $C_1$-$C_6$ alkoxy, or $R^6$ and $R^7$ together with the atom to which they are bonded to form 5-7 membered heterocyclyl or Z-substituted 5-7 membered heterocyclyl;

$R_8$ and $R_{10}$ are each independently hydrogen, deuterium, aryl or Z-substituted aryl, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, and at least one of $R^8$ and $R^{10}$ must be hydrogen or deuterium;

$R_9$ is substituted $C_6$-$C_{10}$ aryl which is substitued with at least one fluorine atom or nitro group, substituted 4-15 membered heterocycle which is substitued with at least one fluorine atom or nitro group, or substituted 5-15 membered heteroaryl which is substituted with at least one fluorine atom or nitro group;

the substituent Z is a halogen atom, cyano or isocyano, hydroxy, sulfhydryl, amino, OTs, OMS, $C_1$-$C_3$ alkyl or substituted alkyl, $C_1$-$C_3$ alkoxy or substituted alkoxy, $C_2$-$C_3$ alkenyl or substituted alkenyl, $C_2$-$C_3$ alkynyl or substituted alkynyl, $C_3$-$C_8$ cycloalkyl or substituted cycloalkyl, an aromatic ring, heterocycle, a heteroaromatic ring and fused ring or a substituted aromatic ring, heterocycle, or a heteroaromatic ring and fused ring, the pattern of substitution being mono- or di-substitution;

the substitution in the substituted $C_6$-$C_{10}$ aryl, substituted 4-15 membered heterocycle or substituted 5-15 membered heteroaryl in $R_9$ is a halogen atom, nitro, cyano or isocyano, hydroxy, amino, $C_1$-$C_3$ alkyl or alkoxy, alkenyl, alkynyl, cycloalkyl or benzene ring, substituted benzene ring, $C_1$-$C_3$ alkoxy or halogen atom-substituted alkoxy.

In particular, the compounds of Formulae (1) and (2) are selected from the group consisting of:

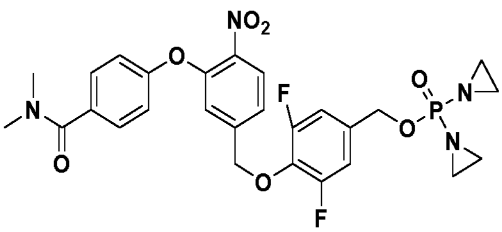
,
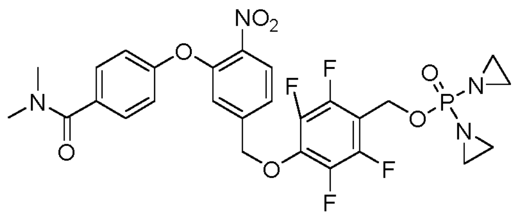
,

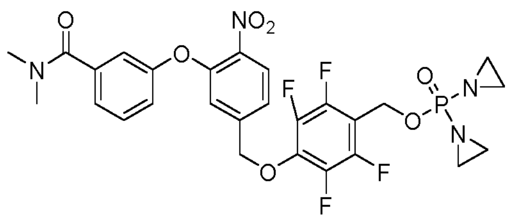
,
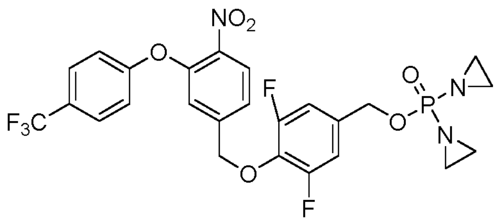
,

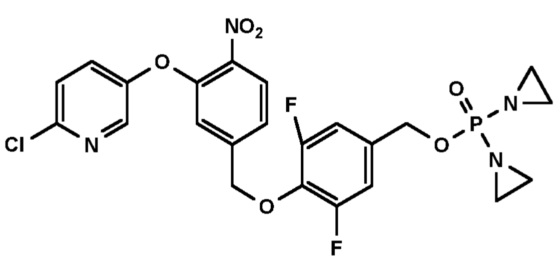
,
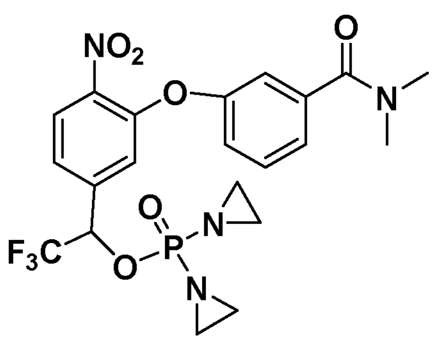

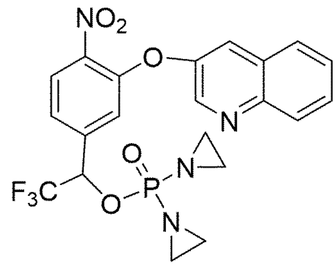,
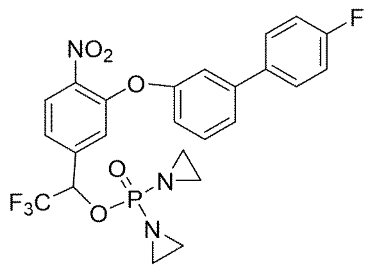,
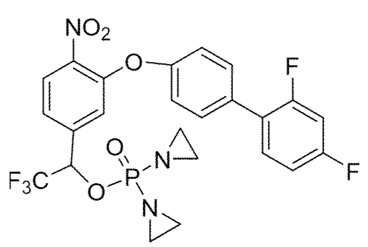

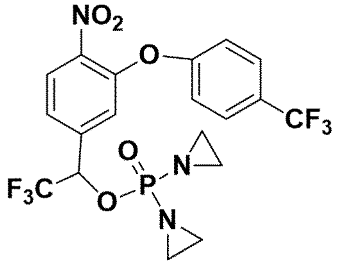
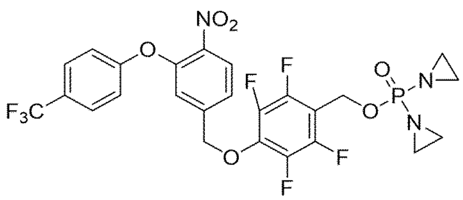
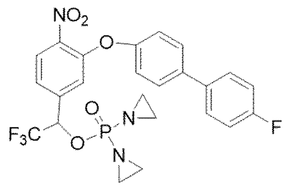

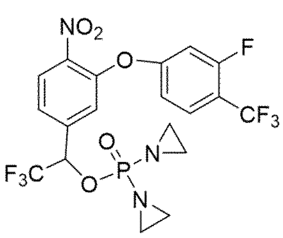
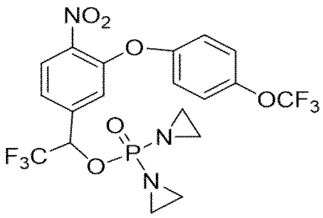
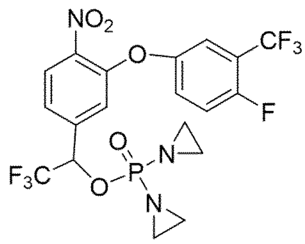

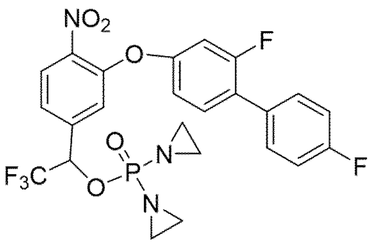
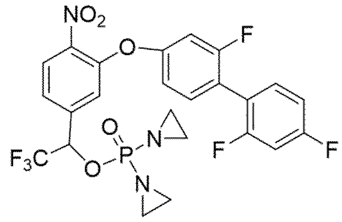
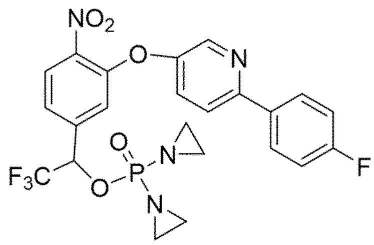

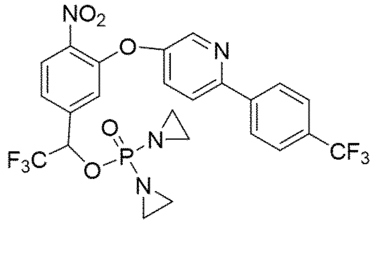
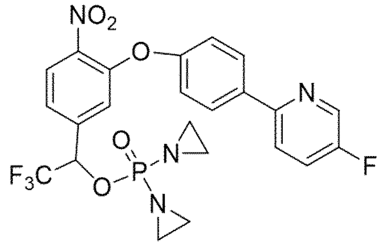
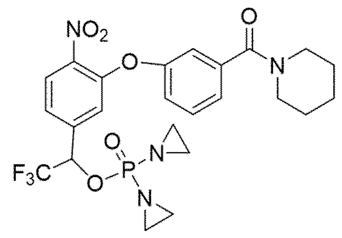

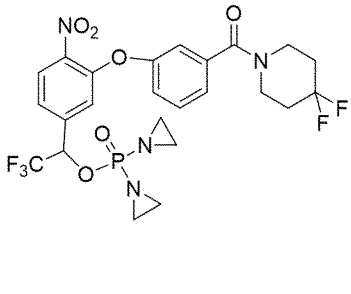
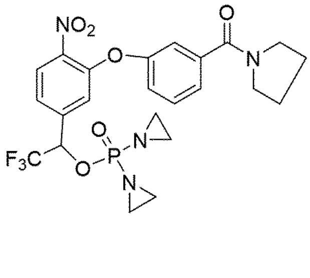
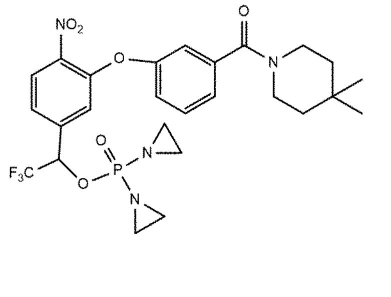

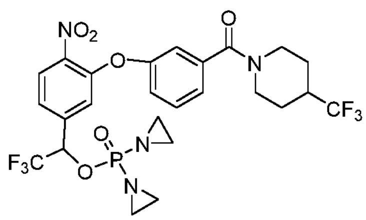

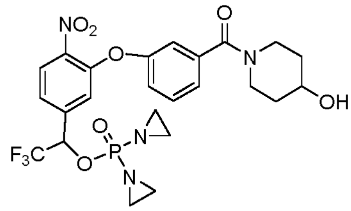

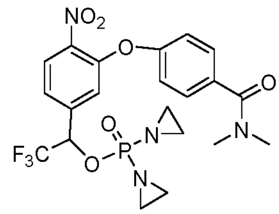

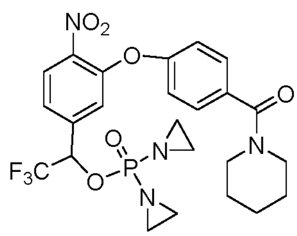

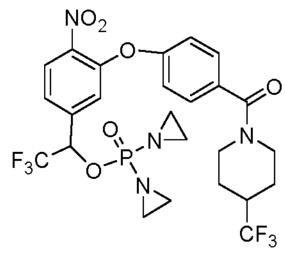

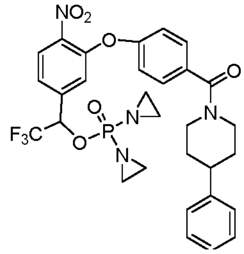

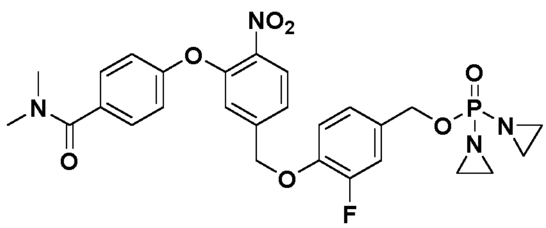

,

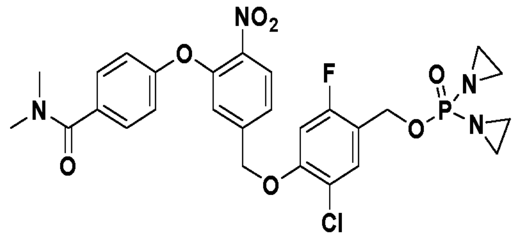

,

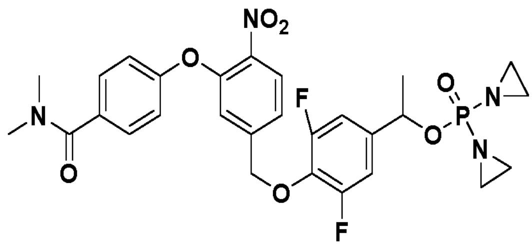

,

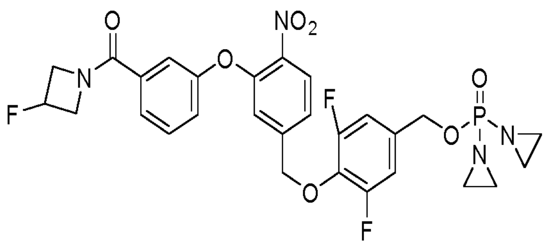

,

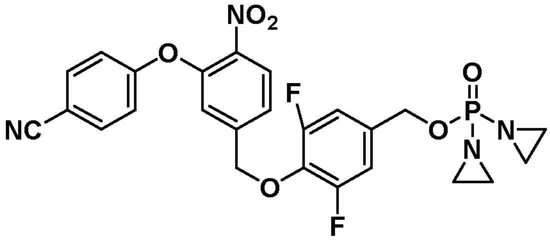

,

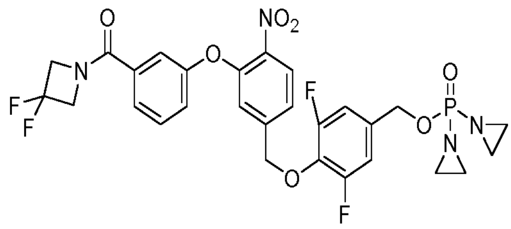

,

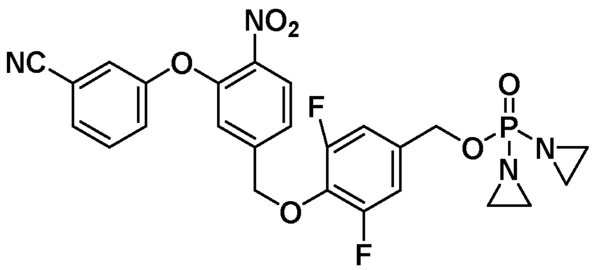
,
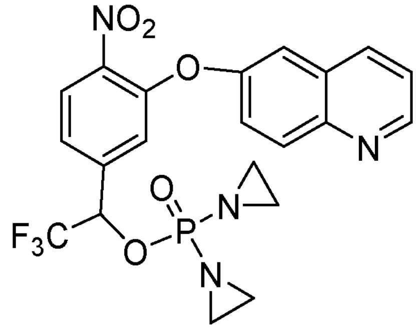
,

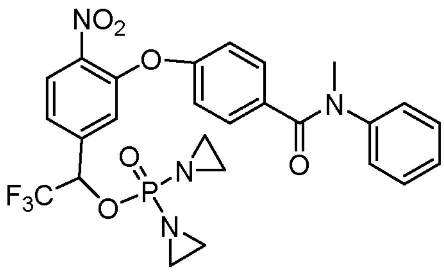
,
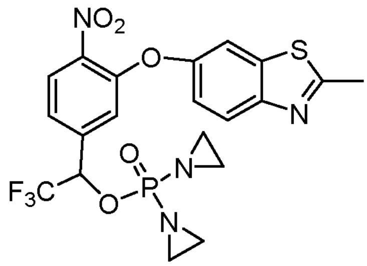
,

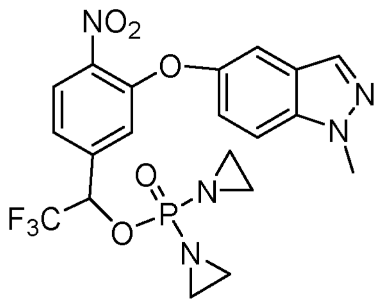
,
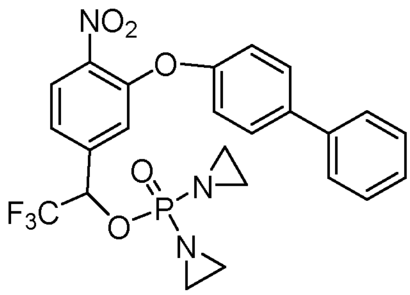

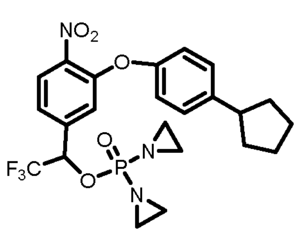
,
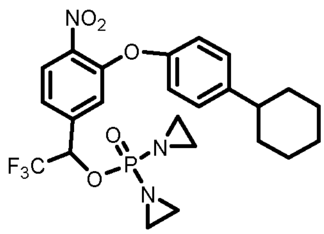
,
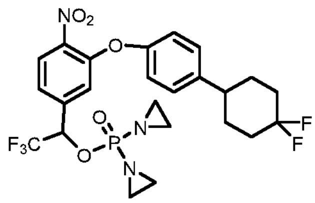
.

The definitions and meanings of the groups, and the preparation methods and spectral data of the compounds have been described in Patent Application PCT/CN2020/089692 with Publication No. WO2020228685A1, which is incorporated herein by reference in its entirety.

Evidently, the compounds of structural Formula 1 or 2, similar to AST-342, are prodrugs of AST-2660 (in acid form), and can be activated by the AKR1C3 enzyme to form AST-2660 to exhibit its anti-cancer efficacy.

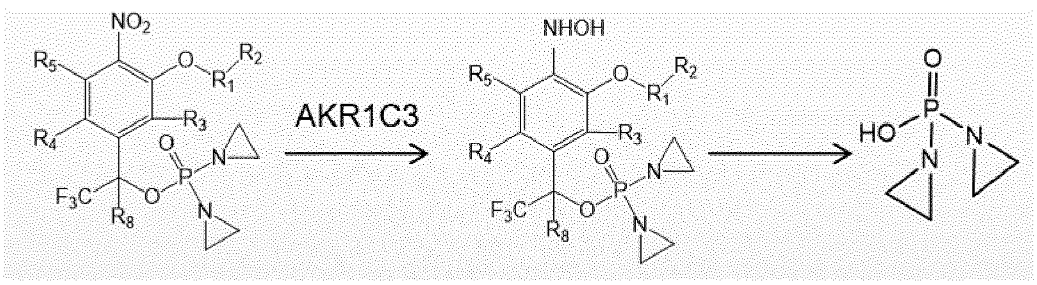

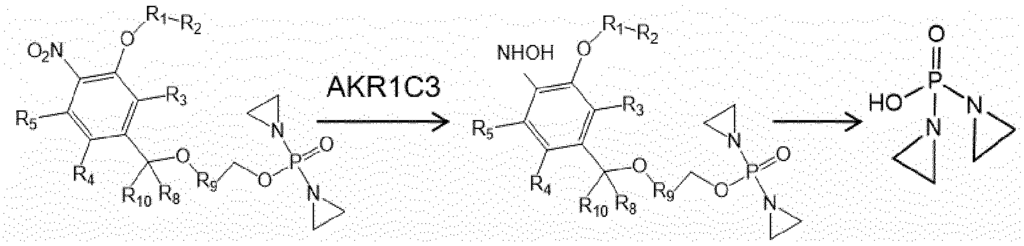


Evidently, the compounds include those of structural Formula 1 or 2 and salts, esters, solvates, isotopic isomers thereof.

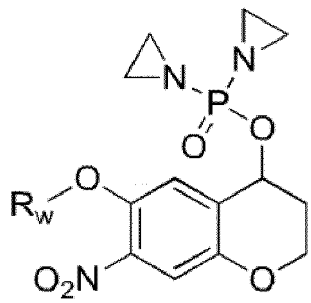
(3),

wherein the definition of Rw has been described in the claims of Patent Application PCT/CN2020/120281 with Publication No. WO2021068952A1. Specifically, the groups are defined as follows:

Rw is

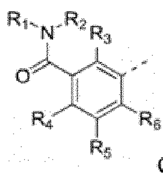
or
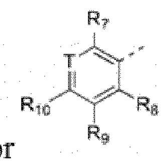

$R_1$ is H, $C_{1-6}$ alkyl, $C_{3-6}$ cycloalkyl, 4-6 membered heterocycloalkyl, 5-6 membered heteroaryl or phenyl, wherein the $C_{1-6}$ alkyl, $C_{3-6}$ cycloalkyl, 4-6 membered heterocycloalkyl, 5-6 membered heteroaryl and phenyl are optionally substituted with 1, 2 or 3 $R^a$;
each $R^a$ is independently H, F, Cl, Br, I, -CN, -OH, $C_{1-3}$ alkoxy or $C_{1-3}$ alkyl;
$R_2$ is H or $C_{1-6}$ alkyl;
or $R_1$ and $R_2$, together with the N atom to which they are attached, to form a 4-6 membered heterocycloalkyl, wherein the 4-6 membered heterocycloalkyl is optionally substituted with 1, 2 or 3 $R^b$;
each $R^b$ is independently H, F, Cl, Br, I, -CN, -OH, $-NH_2$, $-OCH_3$, $-OCH_2CH_3$,$-CH_3$ or $-CH_2CH_3$;
$R_3$ is H, F, Cl, Br, I, -OH, $-NH_2$, $C_{1-3}$ alkoxy or $C_{1-3}$ alkyl;
or $R_2$ and $R_3$ are attached together to make the structural unit

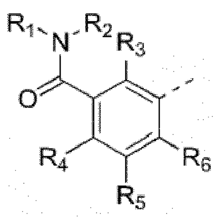

to be

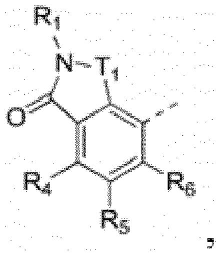,
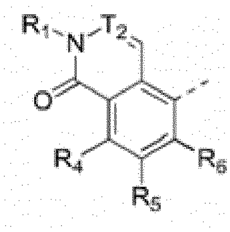
or
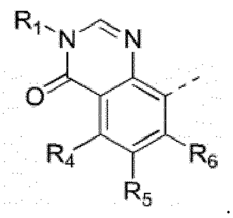.

$T_1$ is $-(CR^cR^d)_m-$ or $-(CR^cR^d)_n-O-$;
m is 1, 2 or 3;
n is 1 or 2;
$T_2$ is Nor CH;
$R^c$ and $R^d$ are each independently H, F, $C_{1-3}$ alkyl or $C_{1-3}$ alkoxy;
$R_4$, $R_5$ and $R_6$ are each independently H, F, Cl, Br, I, $C_{1-3}$ alkyl or $C_{1-3}$ alkoxy;
T is Nor CH;
$R_7$ and $R_8$ are each independently H, F, Cl, Br or I;
$R_9$ and $R_{10}$ are each independently H, F, Cl, Br, I, -CN or
the 4-6 membered heterocycloalkyl and 5-6 membered heteroaryl each contain 1, 2, 3 or 4 heteroatoms independently selected from N, -O- and -S-.

Specifically, the compound of Formula (3) is selected from:

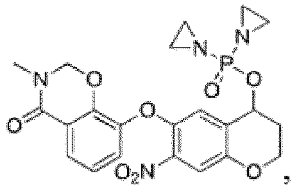, 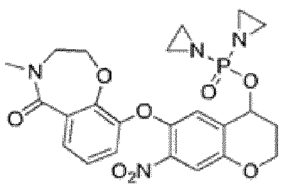, 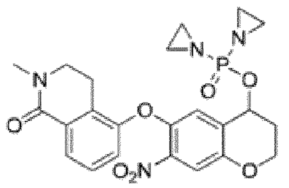,

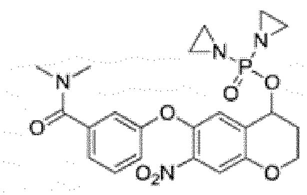, 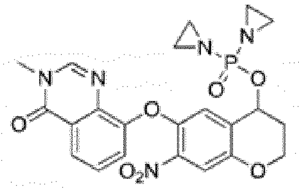, 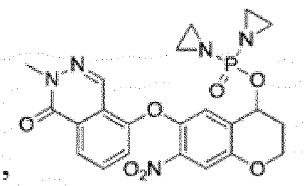,

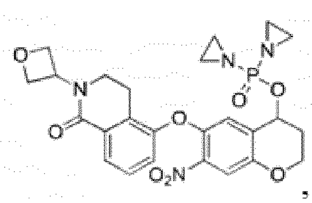, 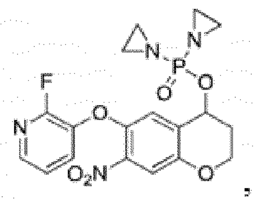, 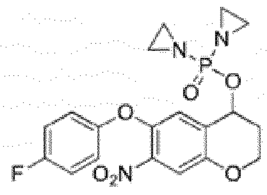,

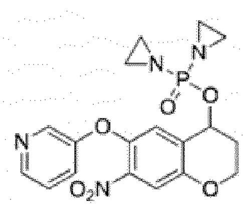, 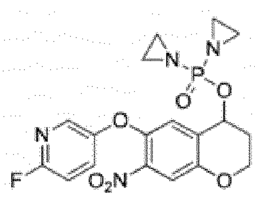 or 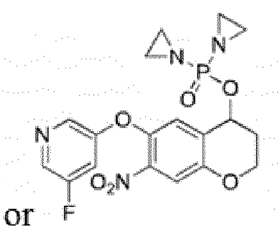.

The definitions and meanings of the groups, and the preparation methods and spectral data of the compounds have been described in Patent Application PCT/CN2020/120281 with Publication No. WO2021068952A1, which is incorporated herein by reference in its entirety.

Evidently, the compounds of structural Formula 3, similar to AST-342, are prodrugs of AST-2660 (in acid form), and can be activated by the AKR1C3 enzyme to form AST-2660 to exhibit its anti-cancer efficacy:

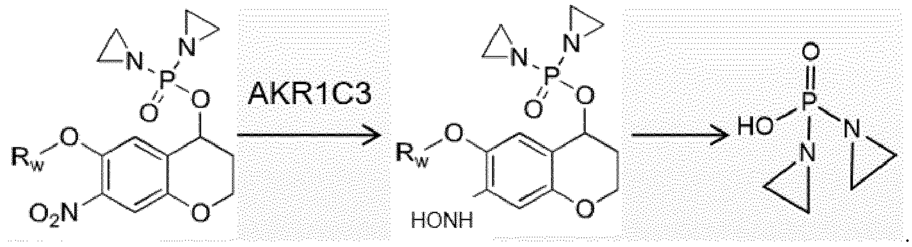


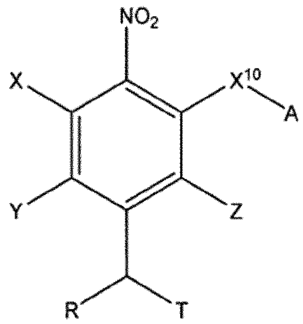

(4),

wherein the definitions of X, Y, Z, R, A and $X^{10}$ have been described in the claims of Patent Application PCT/US2016/021581 with Publication No. WO2016145092A1 (corresponding to Chinese Patent Application No. 2016800150788 with Publication No. CN107530556A), and T is

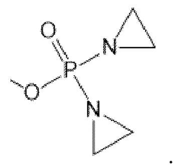

Specifically, the groups are defined as follows:

$X^{10}$ is O, S, SO or $SO_2$;
A is $C_6$-$C_{10}$ aryl, 5-15 memberred heteroaryl, or -N=$CR^1R^2$;
each $R^1$ and $R^2$ independently is hydrogen, $C_1$-$C_6$ alkyl, $C_3$-$C_8$ cycloalkyl, $C_6$-$C_{10}$ aryl, 4-15 membered heterocycle, ether, -$CONR^{13}R^{14}$, or -$NR^{13}COR^{14}$;
each X, Y, and Z independently is hydrogen, CN, halogen, $C_1$-$C_6$ alkyl, $C_2$-$C_6$ alkenyl, $C_2$-$C_6$ alkynyl, $C_3$-$C_8$ cycloalkyl, $C_6$-$C_{10}$ aryl, 4-15 membered heterocycle, ether, -$CONR^{13}R^{14}$, or -$NR^{13}COR^{14}$;
R is hydrogen, $C_1$-$C_6$ alkyl, $C_2$-$C_6$ alkenyl, $C_2$-$C_6$ alkynyl, $C_3$-$C_8$ cycloalkyl, $C_6$-$C_{10}$ aryl, 4-15 membered heterocycle, ether, -$CONR^{13}R^{14}$, or -$NR^{13}COR^{14}$;
each $R^{13}$ and $R^{14}$ independently is hydrogen, $C_1$-$C_6$ alkyl, $C_3$-$C_8$ cycloalkyl, $C_6$-$C_{10}$ aryl, 4-15 membered heterocycle, or ether
T is

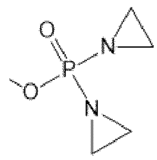
;

and

wherein the alkyl, alkenyl, alkynyl, cycloalkyl, aryl, heterocycle, heteroaryl, and ether groups are optionally substituted.

Specifically, the compound of Formula (5) is selected from the group consisting of:

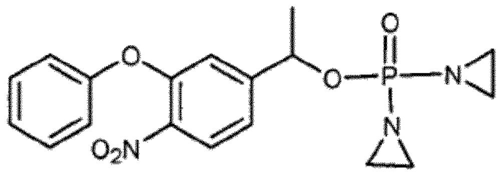
,
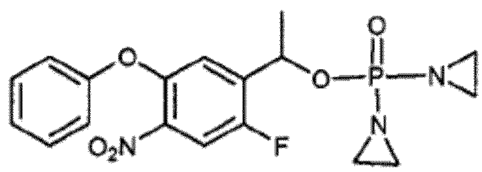
,
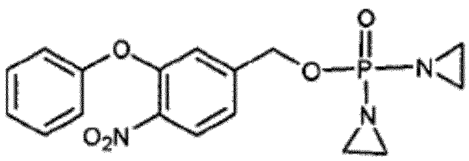
,
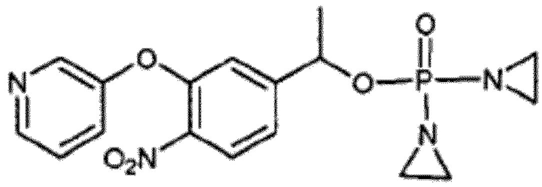
,
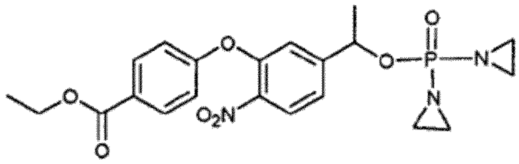
,
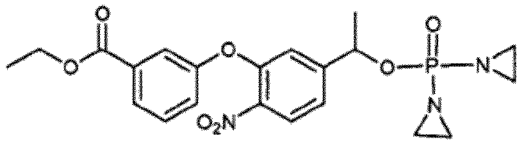
,
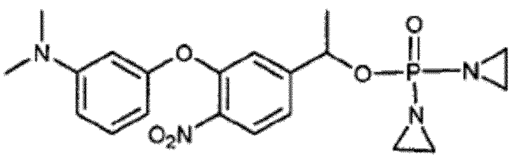
,
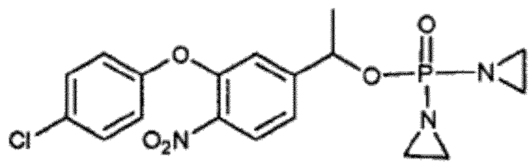
,
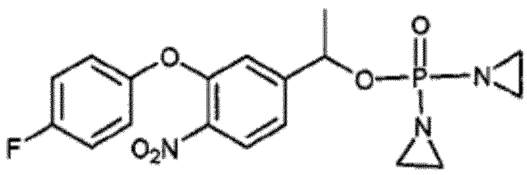
,
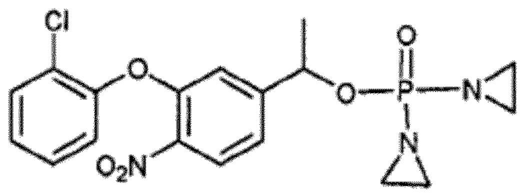
,
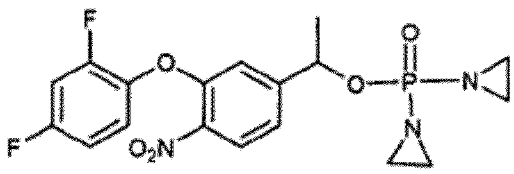
,
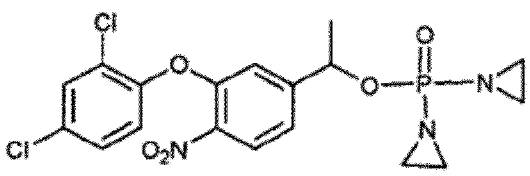
,

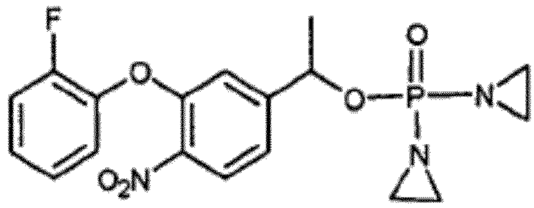

,

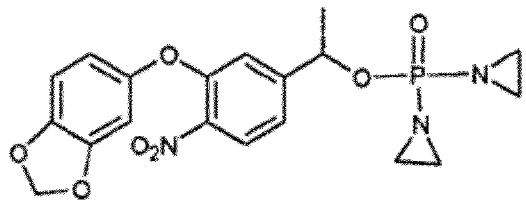

,

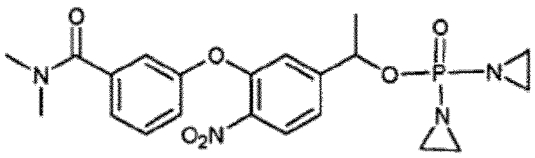

,

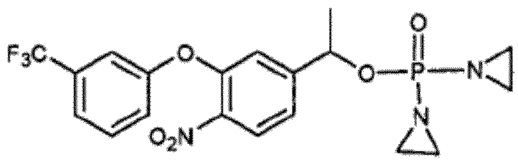

,

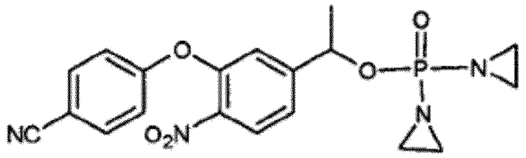

,

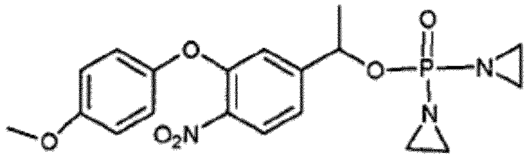

,

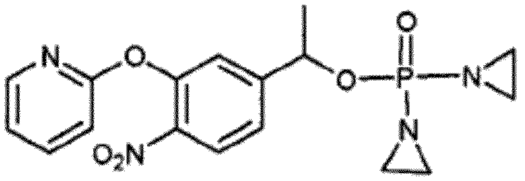

,

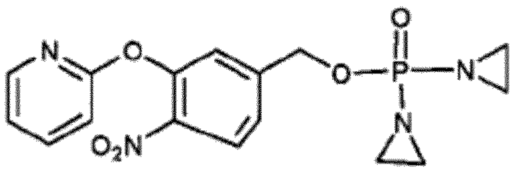

,

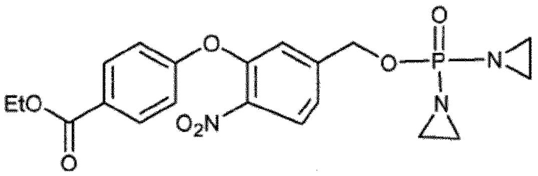

,

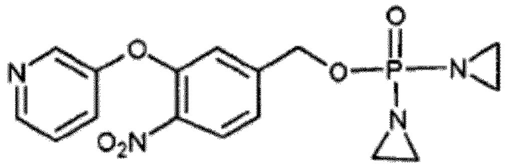

,

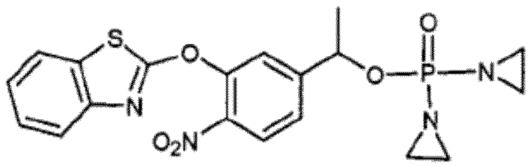

,

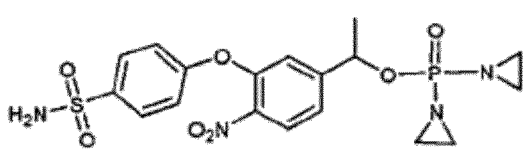

,

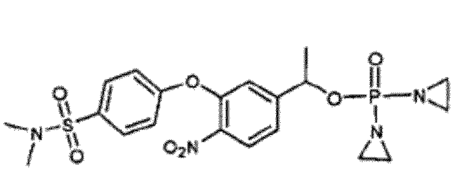

,

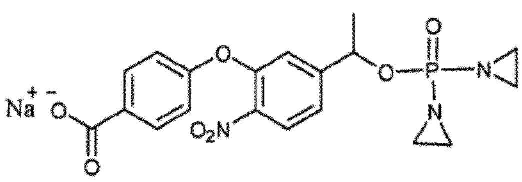

,

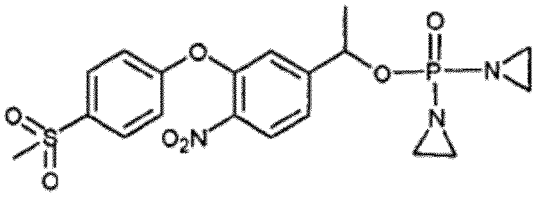,
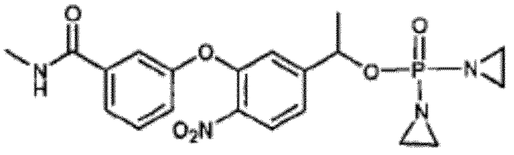,

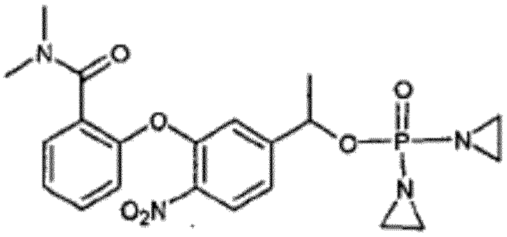,
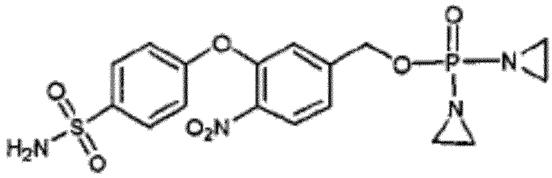,

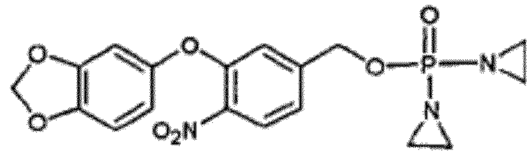,
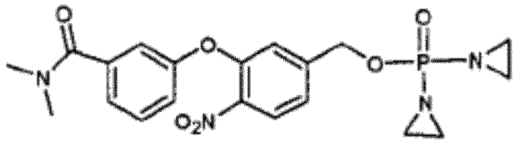,

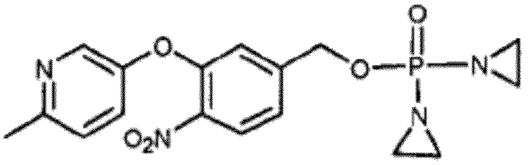,
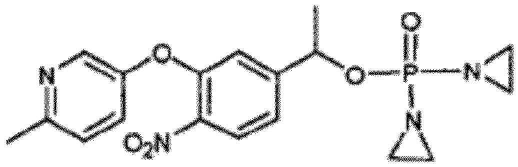,

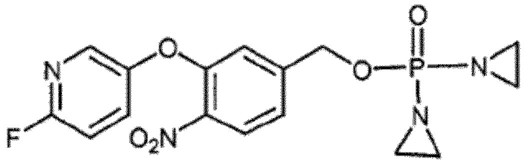,
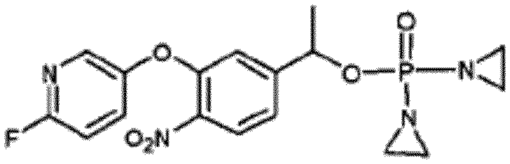,

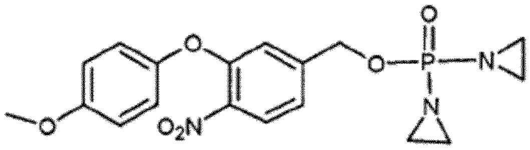,
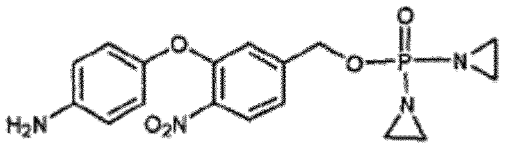,

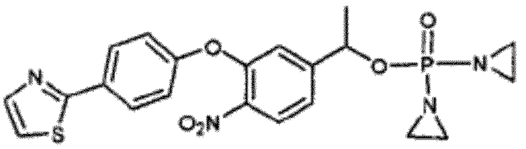,
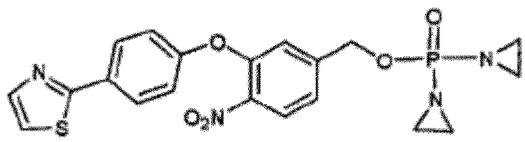,

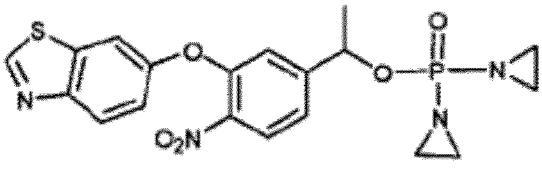, 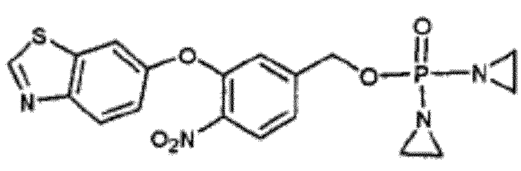,

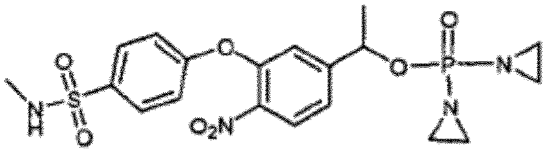, 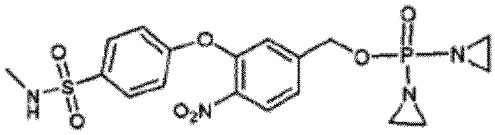,

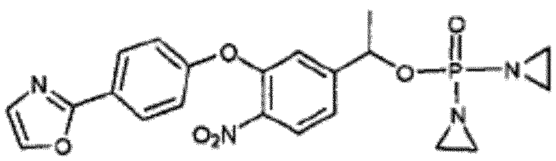, 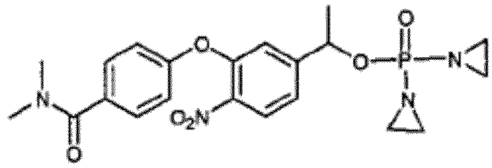,

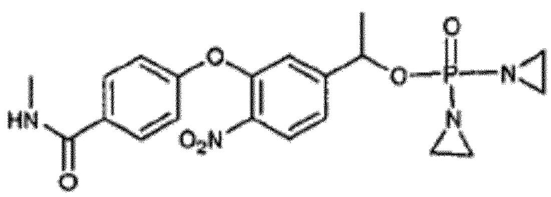, 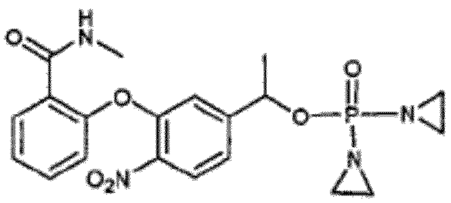,

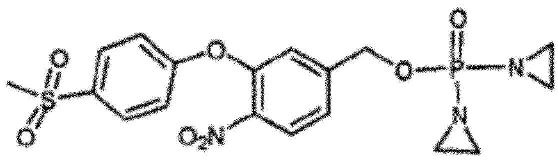, 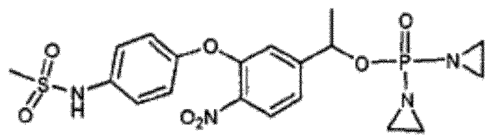,

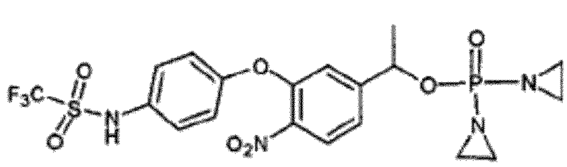, 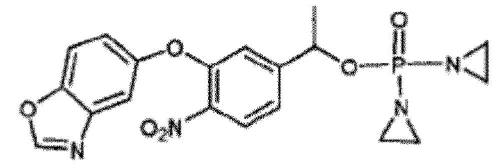,

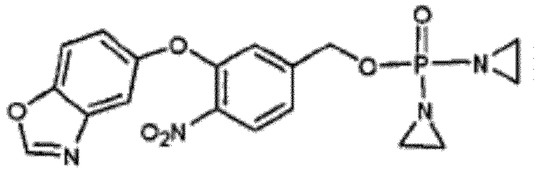, 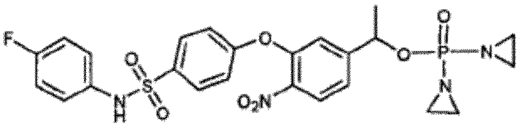,

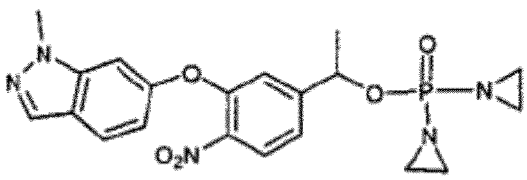, 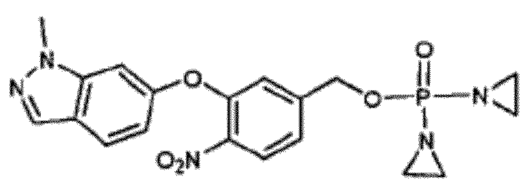,

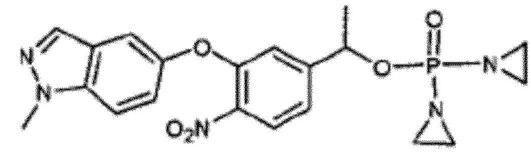,
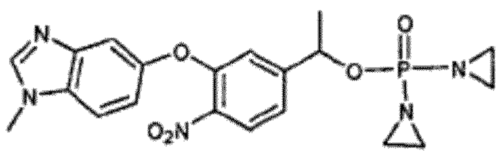,

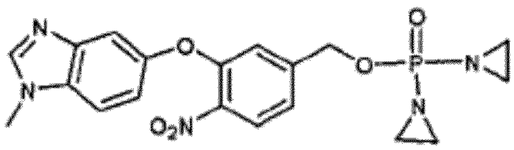,
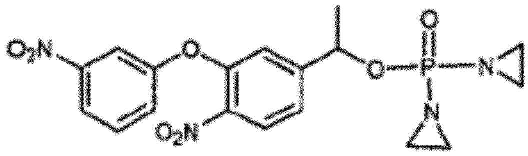,

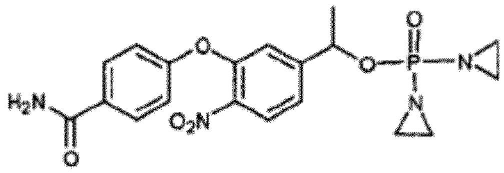,
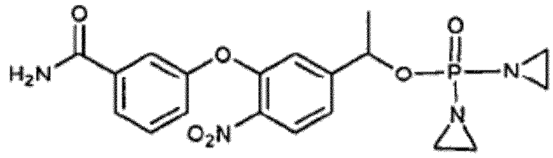,

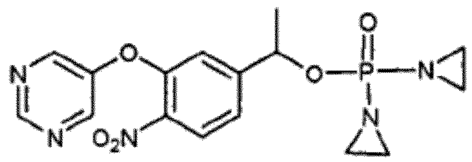,
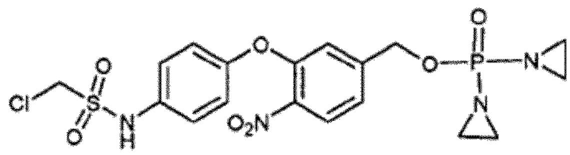,

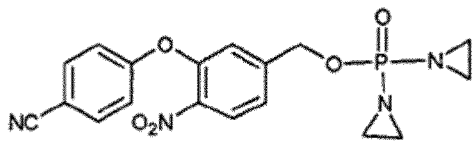,
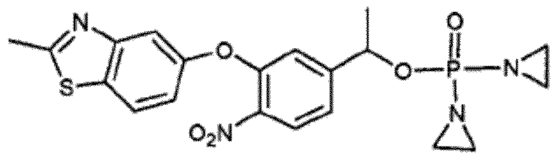,

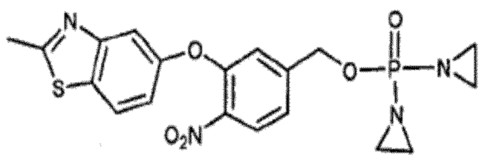,
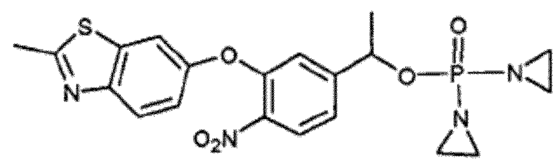,

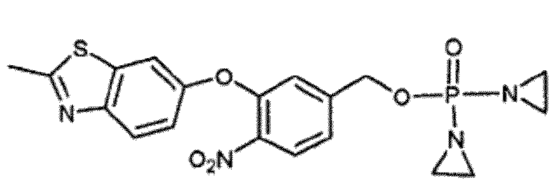,
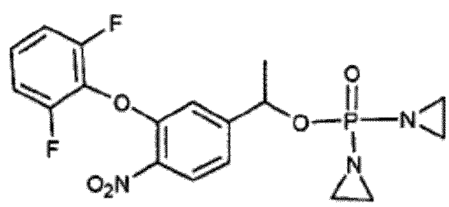,

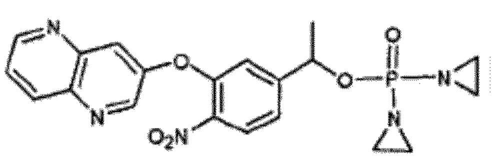,
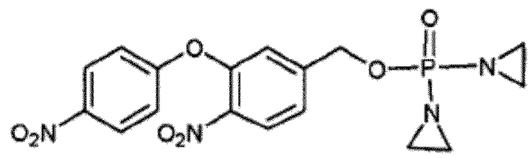,

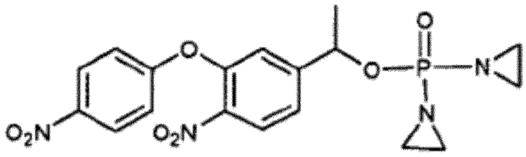,
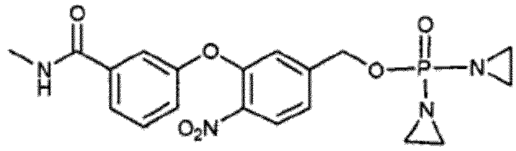,

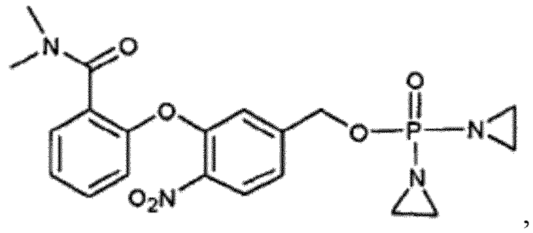,
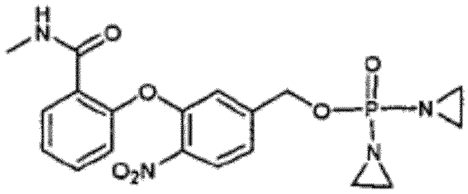,

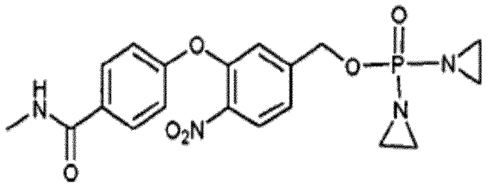,
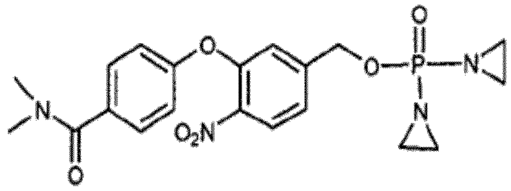,

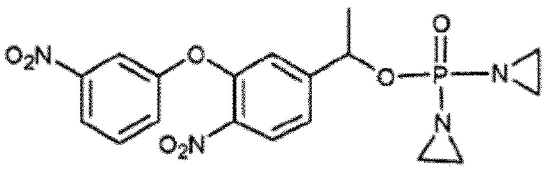,
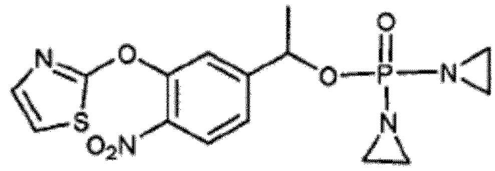,

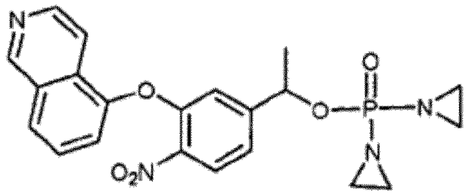,
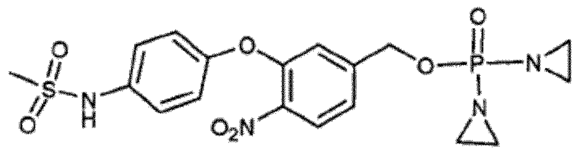,

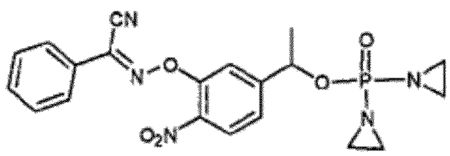,
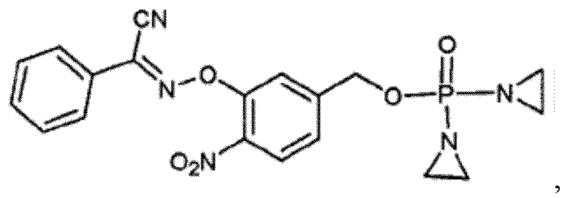,

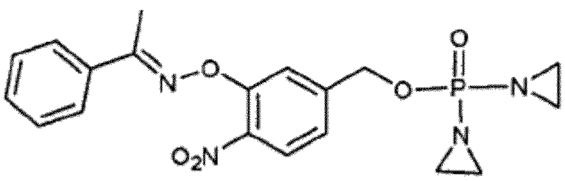,
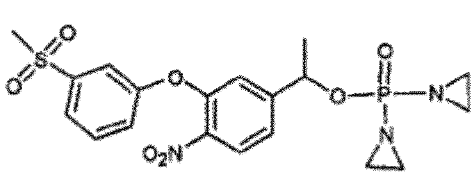,

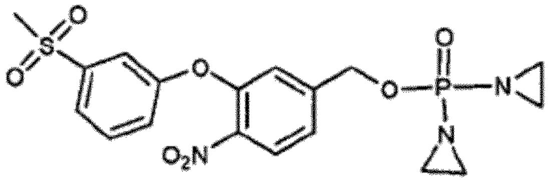,
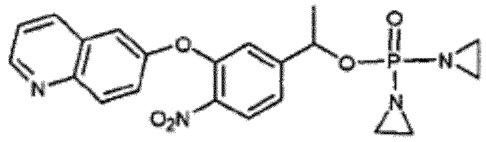,

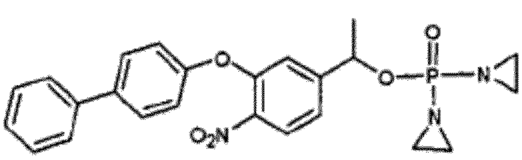,
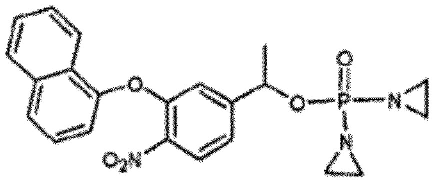,

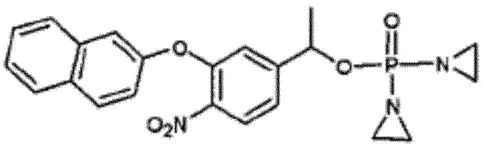,
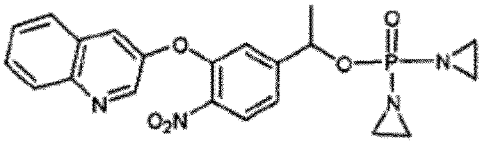,

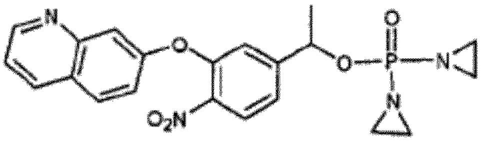,
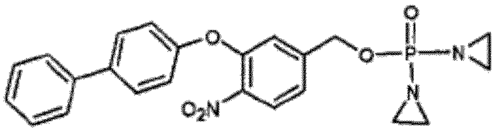,

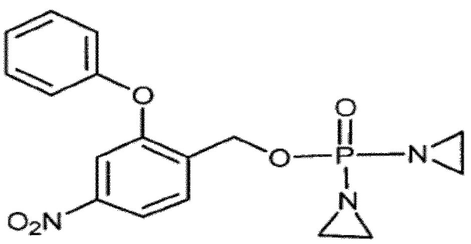,
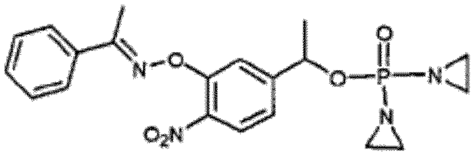,

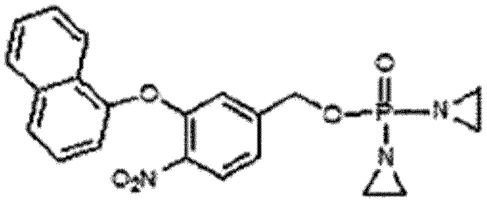,
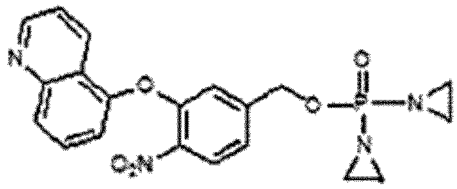,

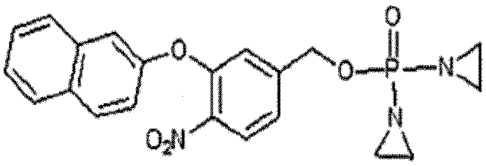,
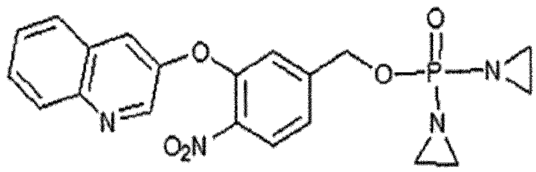,

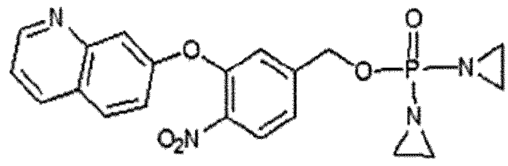, 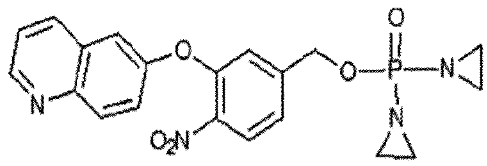,

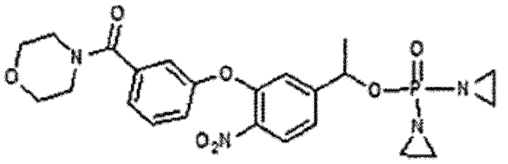, 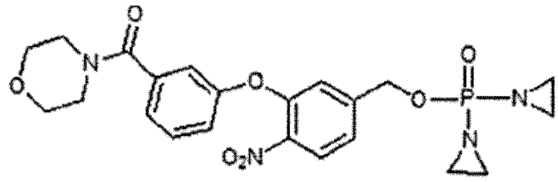,

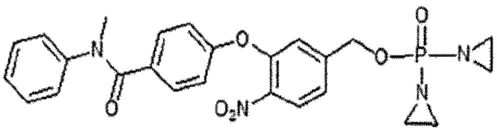, 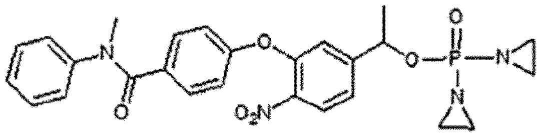,

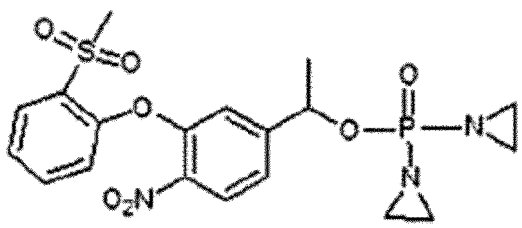, 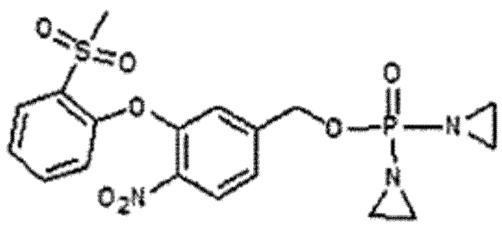,

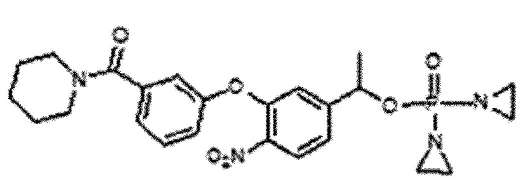, 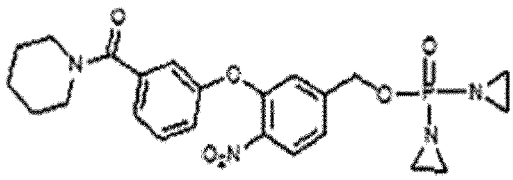,

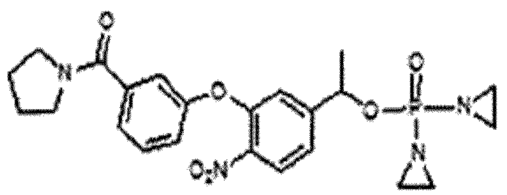, 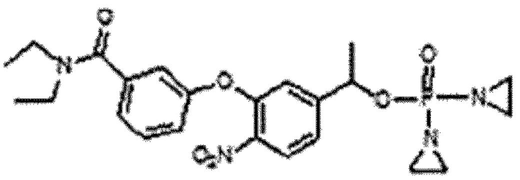,

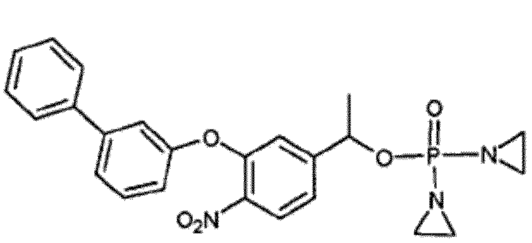, 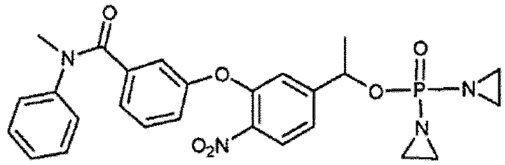,

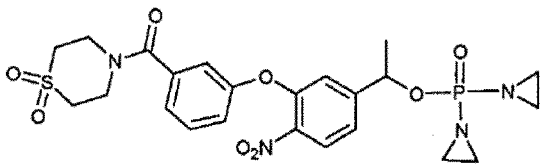,
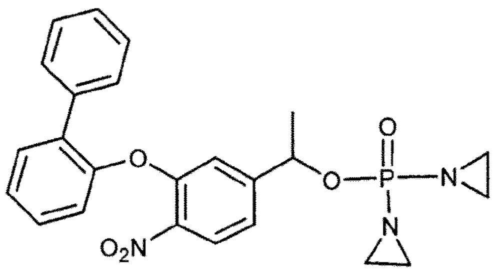,

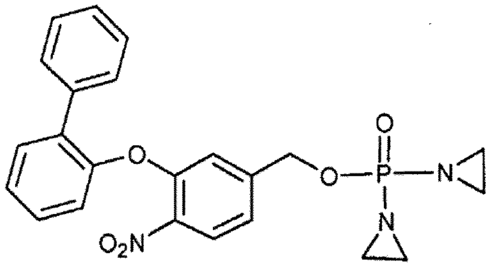,
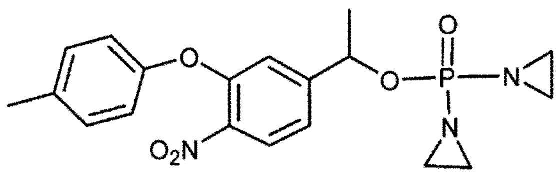,

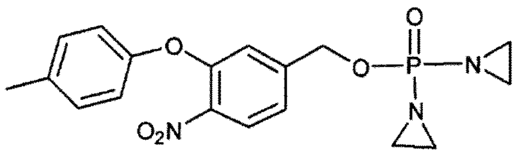,
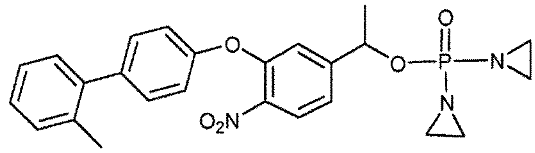,

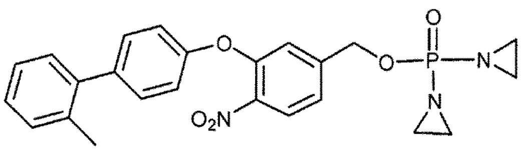,
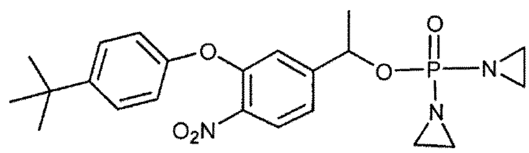,

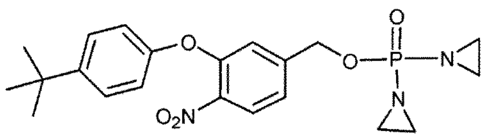,
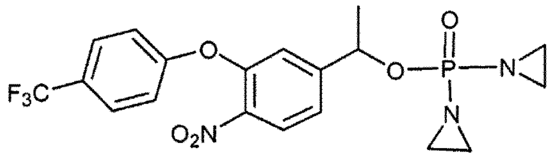,

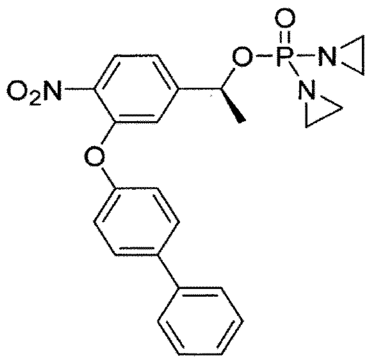,
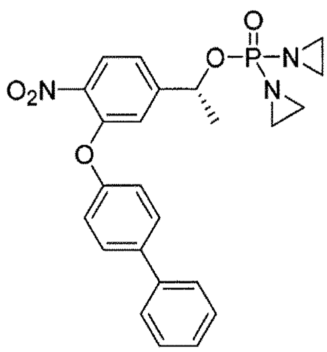,

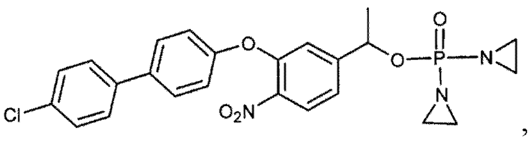,
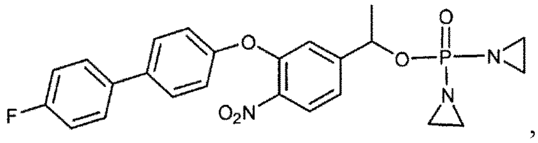,

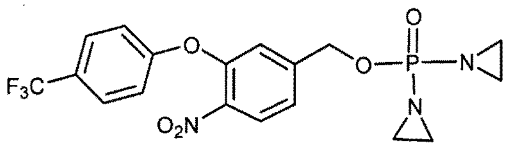
and
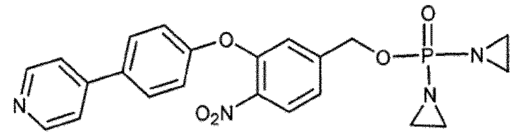.

Specific definitions and meanings of the groups, and the preparation methods and spectral data of the compounds, have been described in the claims of the patent application PCT/US2016/021581 with Publication No. WO2016145092A1 (corresponding to Chinese application No. 201680015078.8 with Publication No.CN107530556A), which is incorporated herein by reference in its entirety. Evidently, the compounds of Formula 4, similar to AST-3424T, are prodrugs of a phosphoramidate alkylating agent, and can be activated by the AKR1C3 enzyme to form AST-2660 (in acid form) to exert its anti-cancer efficacy:

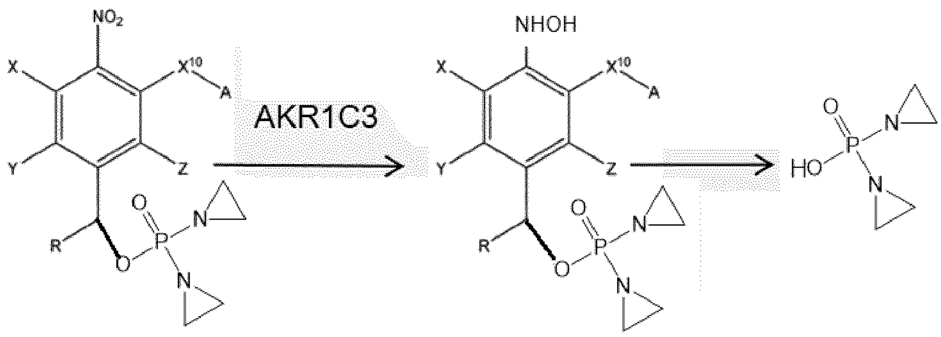


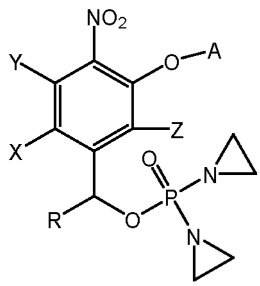
(5)

wherein:

A is substituted or unsubstituted $C_6$-$C_{10}$ aryl, biaryl or substituted biaryl, 5-15 membered heteroaryl, or $-N=CR^1R^2$; wherein the substituents are selected from the group consisting of halogeno, -CN, $-NO_2$, -O-(CHz)-O-, $-CO_2H$ and salt thereof, $-OR^{100}$, $-CO_2R^{100}$, $-CONR^{101}R^{102}$, $-NR^{101}R^{102}$, $-NR^{100}SO_2R^{100}$, $-SO_2R^{100}$, $-SO_2NR^{101}R^{102}$, $C_1$-$C_6$ alkyl, and $C_3$-$C_{10}$ heterocyclyl;
wherein $R^{100}$, $R^{101}$ and $R^{102}$ are each independently hydrogen, $C_1$-$C_8$ alkyl, or $C_6$-$C_{12}$ aryl; or $R^{101}$ and $R^{102}$ together with the nitrogen atom to which they are attached to form a 5-7 membered heterocycle;
wherein the alkyl group and the aryl group are each substituted by 1-3 halogen groups or 1-3 $C_1$-$C_6$ alkyl groups;
$R^1$ and $R^2$ are each independently phenyl or methyl;
X, Y and Z are each independently hydrogen or halogeno; and
R is hydrogen or $C_1$-$C_6$ alkyl or halogen-substituted alkyl.

"Cx-Cy" or "Cx-y" before a group refers to a range of the number of carbon atoms that are present in that group. For example, $C_1$-$C_6$ alkyl refers to an alkyl group having at least 1 and up to 6 carbon atoms.

"Alkyl" refers to monovalent saturated aliphatic hydrocarbyl groups having from 1 to 10 carbon atoms and, in

some embodiments, from 1 to 6 carbon atoms. "Cx-y alkyl" refers to alkyl groups having from x to y carbon atoms. This term includes (by way of example) linear and branched hydrocarbyl groups such as methyl ($CH_3$-), ethyl ($CH_3CH_2$-), n-propyl ($CH_3CH_2CH_2$-), isopropyl ($(CH_3)_2CH$-), n-butyl ($CH_3CH_2CH_2CH_2$-), isobutyl($(CH_3)_2CHCH_2$-), sec-butyl ($(CH_3)(CH_3CH_2)CH$-), t-butyl ($(CH_3)_3C$-), n-pentyl ($CH_3CH_2CH_2CH_2CH_2$-), and neopentyl ($(CH_3)_3CCH_2$-).

"Aryl" refers to an aromatic group having from 6 to 14 carbon atoms and no ring heteroatoms and having a single ring (e.g., phenyl) or multiple condensed (fused) rings (e.g., naphthyl or anthryl). For multiple ring systems, including fused, bridged, and spiro ring systems having aromatic and non-aromatic rings that have no ring heteroatoms, the term "Aryl" or "Ar" applies when the point of attachment is at an aromatic carbon atom (e.g., 5,6,7,8 tetrahydronaphthalene-2-yl is an aryl group as its point of attachment is at the 2-position of the aromatic phenyl ring). "Arylene" refers to a divalent aryl radical having the appropriate hydrogen content.

"Cycloalkyl" refers to a saturated or partially saturated cyclic group having from 3 to 14 carbon atoms and no ring heteroatoms and having a single ring or multiple rings including fused, bridged, and spiro ring systems. For multiple ring systems having aromatic and non- aromatic rings that have no ring heteroatoms, the term "cycloalkyl" applies when the point of attachment is at a non-aromatic carbon atom (e.g., 5,6,7,8,-tetrahydronaphthalene-5-yl). The term "cycloalkyl" includes cycloalkenyl groups. Examples of cycloalkyl groups include, for instance, adamantyl, cyclopropyl, cyclobutyl, cyclopentyl, cyclooctyl, and cyclohexenyl. "Cycloalkylene" refers to a divalent cycloalkyl radical having the appropriate hydrogen content.

"Halogen" refers to one or more of fluoro, chloro, bromo, and iodo.

"Heteroaryl" refers to an aromatic group having from 1 to 14 carbon atoms and 1 to 6 heteroatoms selected from the group consisting of oxygen, nitrogen, and sulfur and includes single ring (e.g. imidazolyl-2-yl and imidazole-5-yl) and multiple ring systems (e.g. imidazopyridyl, benzotriazolyl, benzimidazol-2-yl and benzimidazol-6-yl). For multiple ring systems, including fused, bridged, and spiro ring systems having aromatic and non-aromatic rings, the term "heteroaryl" applies if there is at least one ring heteroatom, and the point of attachment is at an atom of an aromatic ring (e.g., 1,2,3,4-tetrahydroquinolin-6-yl and 5,6,7,8-tetrahydroquinolin-3-yl). In some embodiments, the nitrogen and/or the sulfur ring atom(s) of the heteroaryl group are optionally oxidized to provide N-oxide ($N\rightarrow O$), sulfinyl, or sulfonyl moieties. The term heteroaryl includes, but is not limited to, acridinyl, azocinyl, benzimidazolyl, benzofuranyl, benzothiofuranyl, benzothiophenyl, benzoxazolyl, benzothiazolyl, benzotriazolyl, benzotetrazolyl, benzisoxazolyl, benzisothiazolyl, benzothienyl, benzimidazolinyl, carbazolyl, NH-carbazolyl, carbolinyl, chromanyl, chromenyl, cinnolinyl, dithiazinyl, furanyl, furazanyl, imidazolidinyl, imidazolinyl, imidazopyridyl, imidazolyl, indazolyl, indolenyl, indolinyl, indolizinyl, indolyl, isobenzofuranyl, isochromanyl, isoindazolyl, isoindolinyl, isoindolyl, isoquinolinyl, isoquinolyl, isothiazolyl, isoxazolyl, naphthyridinyl, octahydroisoquinolinyl, oxadiazolyl, oxazolidinyl, oxazolyl, pyrimidinyl, phenanthridinyl, phenanthrolinyl, phenazinyl, phenothiazinyl, phenoxathiinyl, phenoxazinyl, phthalazinyl, piperazinyl, pteridinyl, purinyl, pyranyl, pyrazinyl, pyrazolidinyl, pyrazolinyl, pyrazolyl, pyridazinyl, pyridooxazolyl, pyridoimidazolyl, pyridothiazole, pyridinyl, pyridyl, pyrimidinyl, pyrrolyl, quinazolinyl, quinolinyl, quinoxalinyl, quinuclidinyl, tetrahydroisoquinolinyl, tetrahydroquinolinyl, tetrazolyl, thiadiazinyl, thiadiazolyl, thianthrenyl, thiazolyl, thienyl, thienothiazolyl, thienooxazolyl, thienoimidazolyl, thiophenyl, triazinyl and xanthenyl. "Heteroarylene" refers to a divalent heteroaryl radical having the appropriate hydrogen content.

"Heterocyclic" or "heterocycle" or "heterocycloalkyl" or "heterocyclyl" refers to a saturated or partially saturated cyclic group having from 1 to 14 carbon atoms and from 1 to 6 heteroatoms selected from the group consisting of nitrogen, sulfur, or oxygen and includes single ring and multiple ring systems including fused, bridged, and spiro ring systems. For multiple ring systems having aromatic and/or non-aromatic rings, the terms "heterocycle", "heterocycle", "heterocycloalkyl" or "heterocyclyl" apply when there is at least one ring heteroatom, and the point of attachment is at an atom of a non-aromatic ring (e.g. 1,2,3,4-tetrahydroquinoline-3-yl, 5,6,7,8-tetrahydroquinoline-6-yl, and decahydroquinolin-6-yl). In some embodiment, the heterocyclic groups herein are 3-15 membered, 4-14 membered, 5-13 membered, 7-12, or 5-7 membered heterocycles. In some other embodiment, the heterocycles contain 4 heteroatoms. In some other embodiment, the heterocycles contain 3 heteroatoms. In another embodiment, the heterocycles contain up to 2 heteroatoms. In some embodiments, the nitrogen and/or sulfur atom(s) of the heterocyclic group are optionally oxidized to provide the N-oxide, sulfmyl, sulfonyl moieties. Heterocyclyl includes, but is not limited to, tetrahydropyranyl, piperidinyl, N-methylpiperidin-3-yl, piperazinyl, N-methylpyrrolidin-3-yl, 3-pyrrolidinyl, 2-pyrrolidon-1-yl, morpholinyl, and pyrrolidinyl. A prefix indicating the number of carbon atoms (e.g., $C_{3-10}$) refers to the total number of carbon atoms in the portion of the heterocyclyl group exclusive of the number of heteroatoms. A divalent heterocyclic radical will have the appropriately adjusted hydrogen content.

"Biaryl" refers to a structure in which two aromatic rings are linked by a C-C single bond, such as biphenyl, bipyridine, and the like.

The term "optionally substituted" refers to a substituted or unsubstituted group. The group may be substituted with one or more substituents, such as e.g., 1, 2, 3, 4 or 5 substituents. Preferably, the substituents are selected from the group consisting of oxo, halogen, -CN, $NO_2$, $-N_2+$, $-CO_2R^{100}$, $-OR^{100}$, $-SR^{100}$, $-SOR^{100}$, $-SO_2R^{100}$, $-NR^{100}SO_2R^{100}$, $-NR^{101}R^{102}$, $-CONR^{101}R^{102}$, $-SO_2NR^{101}R^{102}$, $C_1$-$C_6$ alkyl, $C_1$-$C_6$ alkoxy, $-CR^{100} = C(R^{100})_2$, $-CCR^{100}$, $C_3$-$C_{10}$ cycloalkyl, $C_3$-$C_{10}$ heterocyclyl, $C_6$-$C_{12}$ aryl and $C_2$-$C_{12}$ heteroaryl, or a divalent substituent such as -O-(CHz)-O-, -O-(CHz)z-O-,

and, 1-4 methyl substituted version thereof, wherein each $R^{100}$, $R^{101}$, and $R^{102}$ independently is hydrogen or $C_1$-$C_8$ alkyl; $C_3$-$C_{12}$ cycloalkyl; $C_3$-$C_{10}$ heterocyclyl; $C_6$-$C_{12}$ aryl; or $C_2$-$C_{12}$ heteroaryl; or $R^{100}$ and $R^{102}$ together with the nitrogen atom to which they are attached to form a 5-7 membered heterocycle; wherein each alkyl, cycloalkyl, heterocyclyl, aryl, or heteroaryl is optionally substituted with 1-3 halogen, 1-3 $C_1$-$C_6$ alkyl, 1-3 $C_1$-$C_6$ haloalkyl or 1-3 $C_1$-$C_6$ alkoxy groups. Preferably, the substituents are selected from the group consisting of chloro, fluoro, $-OCH_3$, methyl, ethyl, iso-propyl, cyclopropyl, $-CO_2H$ and salts and $C_1$-$C_6$ alkyl esters thereof, $CONMe_2$, CONHMe, $CONH_2$, $-SO_2Me$, $-SO_2NH_2$, $-SO_2NMe_2$, $-SO_2NHMe$, $-NHSO_2Me$, $-NHSO_2CF_3$, $-NHSO_2CH_2Cl$, $-NH_2$, $-OCF_3$, $-CF_3$ and $-OCHF_2$.

Specifically, the compound of Formula (5) is selected from the group consisting of:

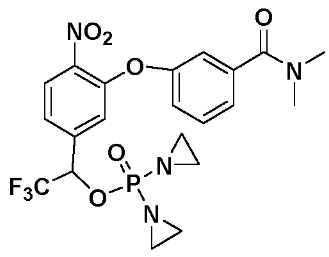
,
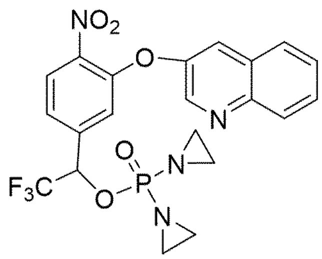
,
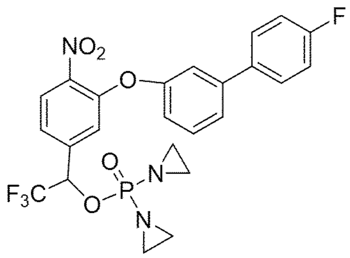
,
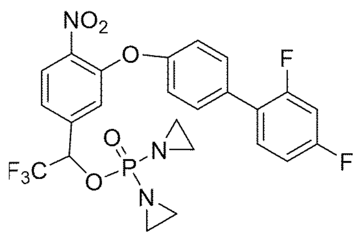
,
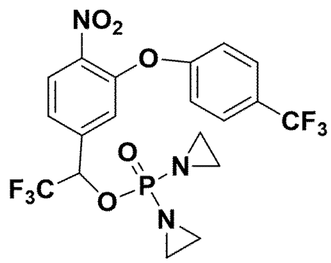
,
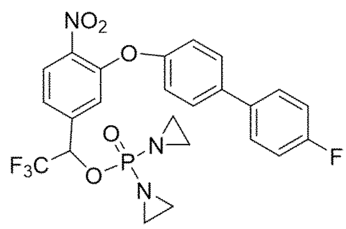
,
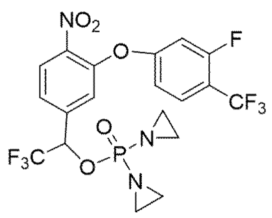
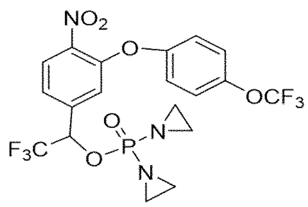
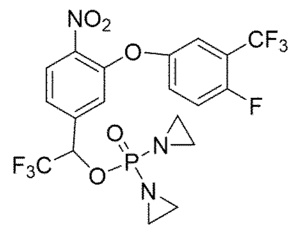
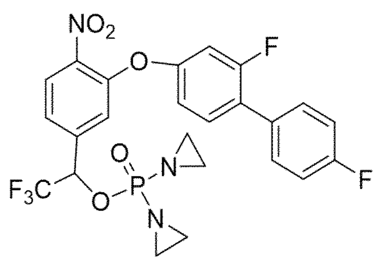
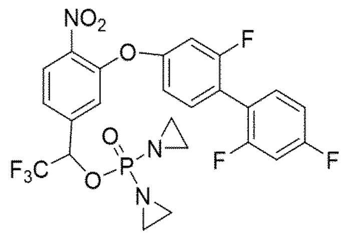
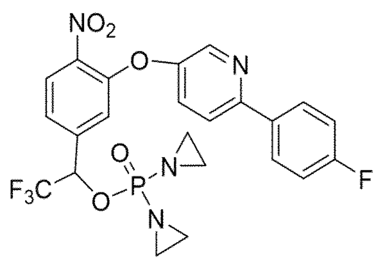
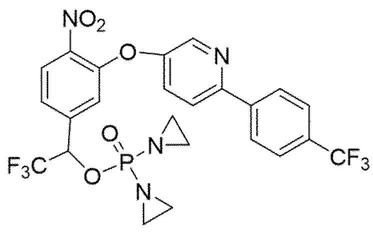
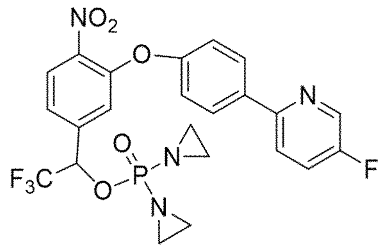
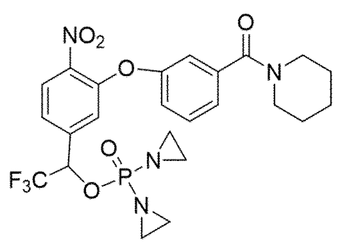

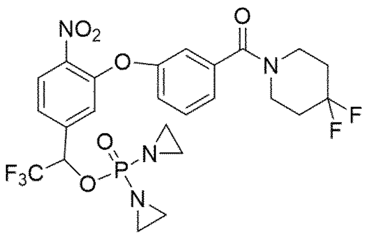
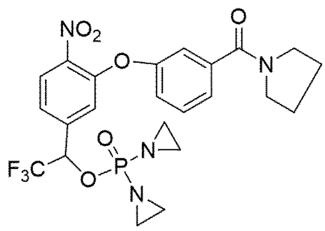
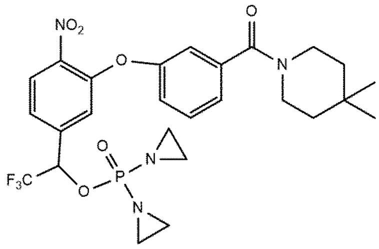

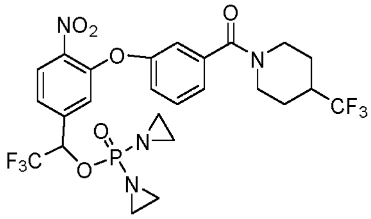
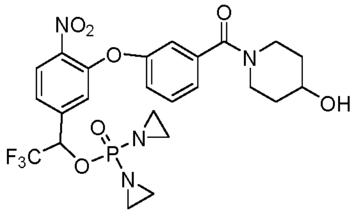
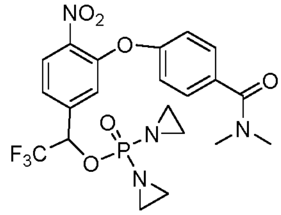

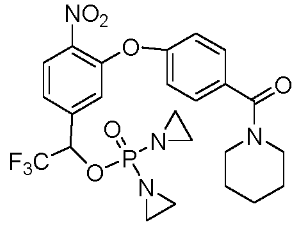
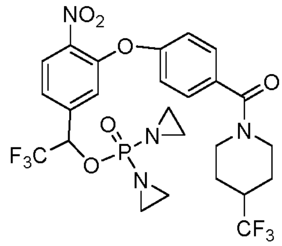
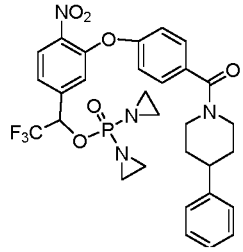

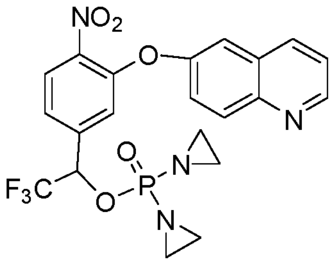
,
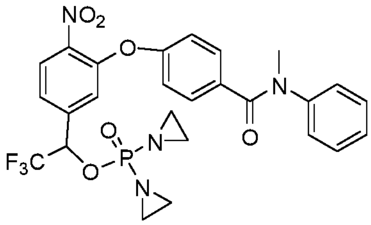
,
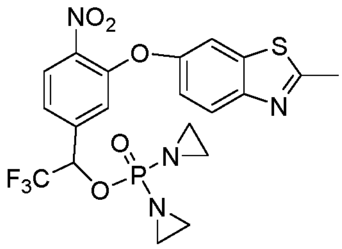
,

AST-A-143
AST-A-144
Bellen00036076
Bellen00036077

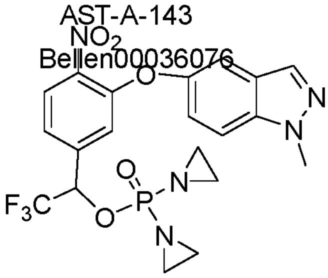
,
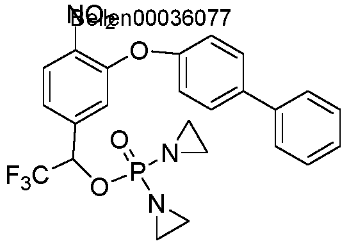
,
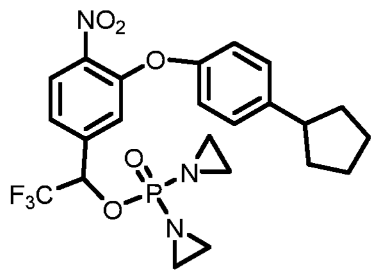
,

Bellen00036079
AST-A-146

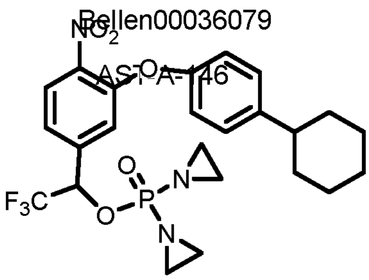
,
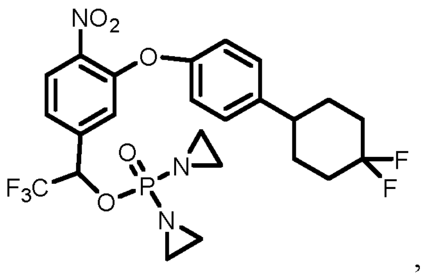
,

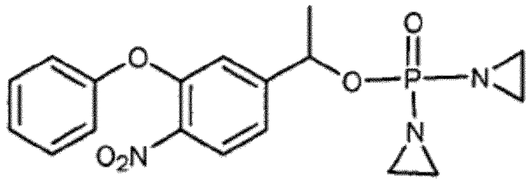,
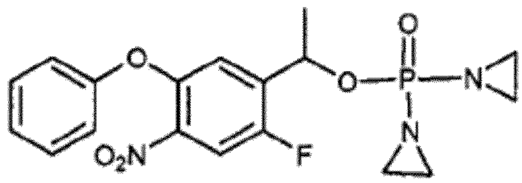,

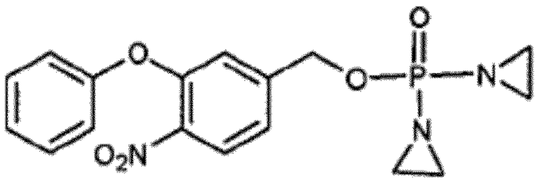,
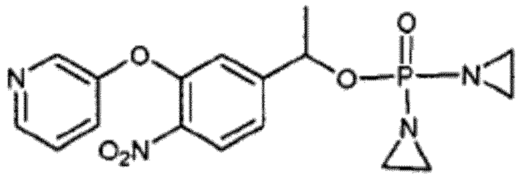,

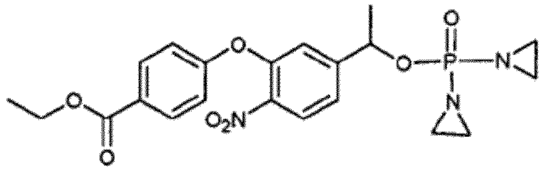,
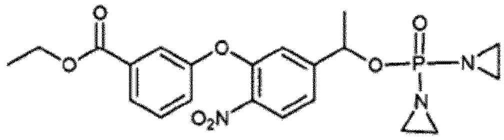,

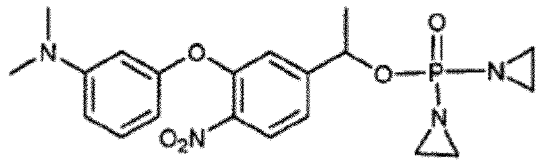,
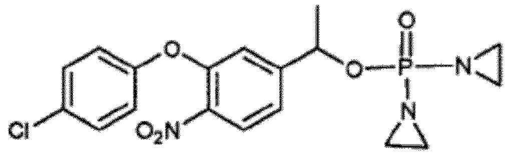,

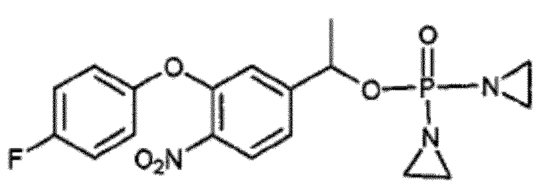,
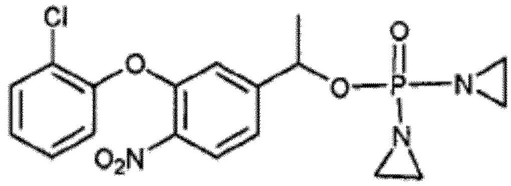,

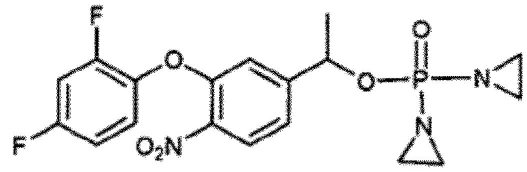,
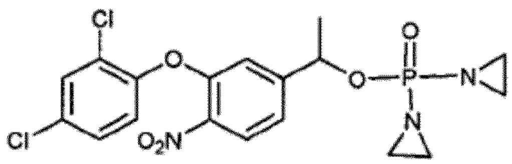,

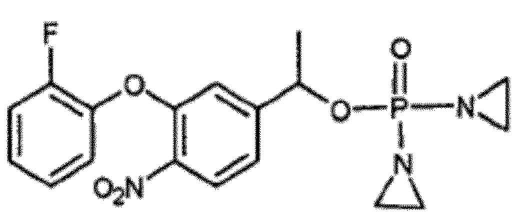,
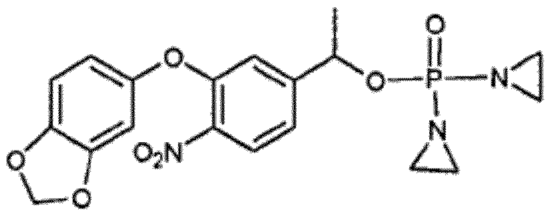,

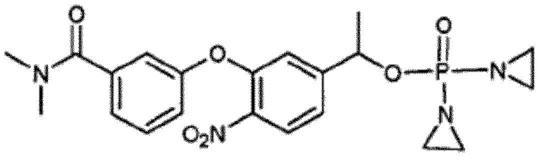

,

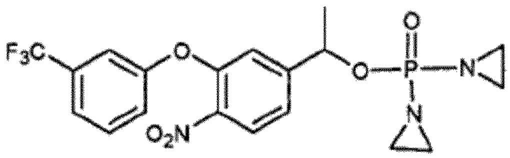

,

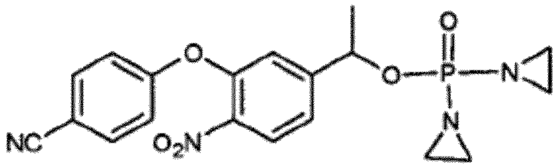

,

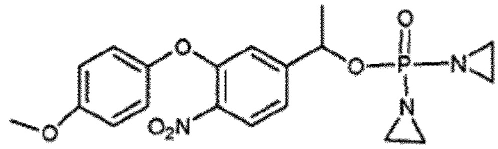

,

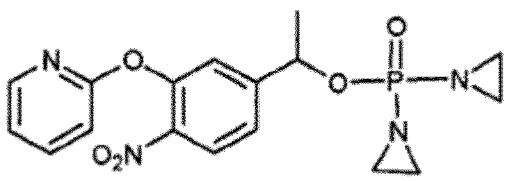

,

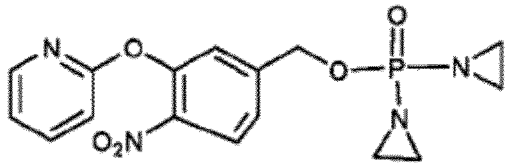

,

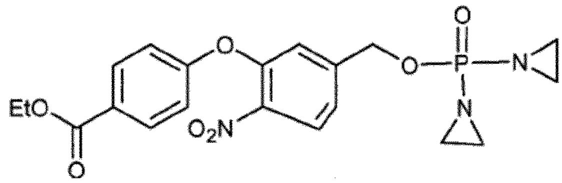

,

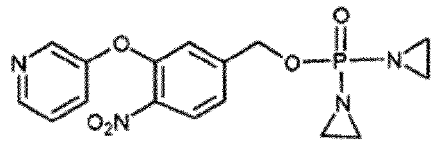

,

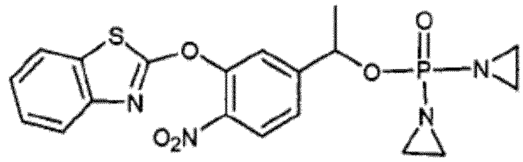

,

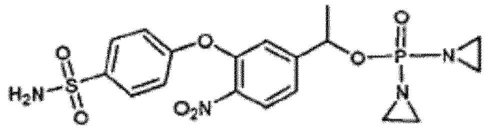

,

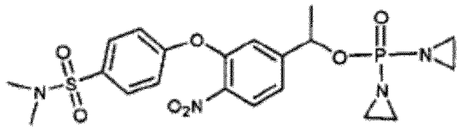

,

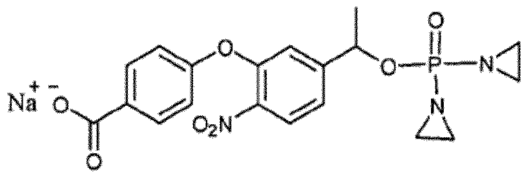

,

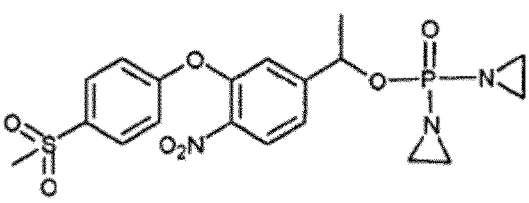

,

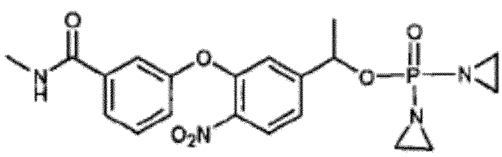

,

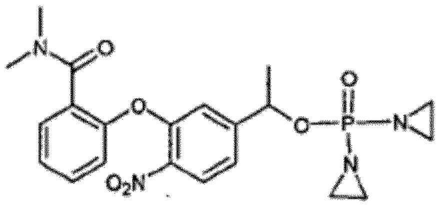, 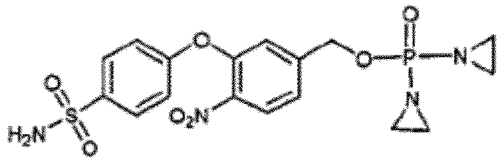,

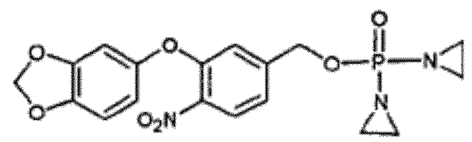, 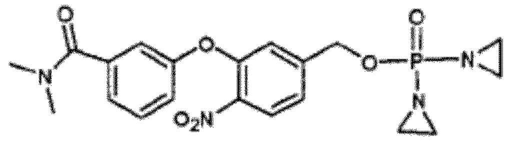,

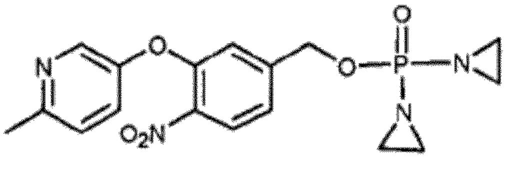, 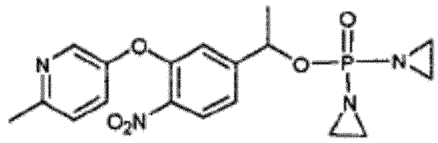,

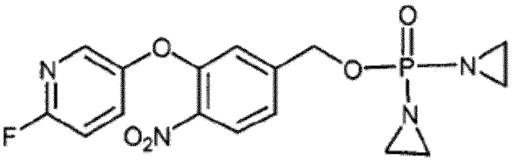, 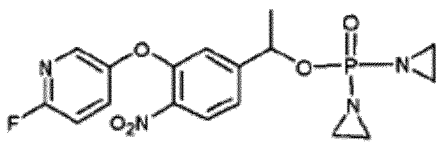,

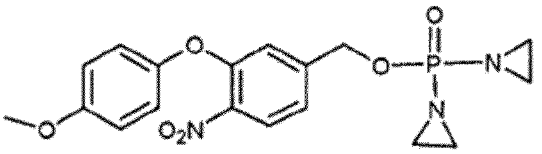, 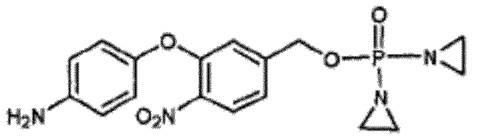,

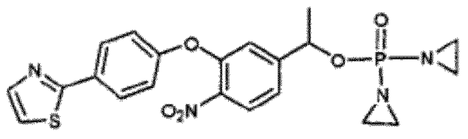, 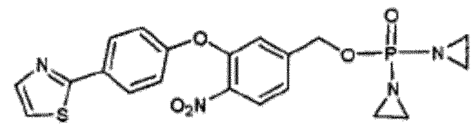,

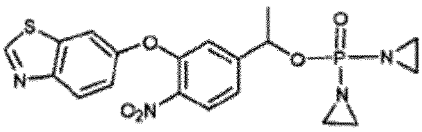, 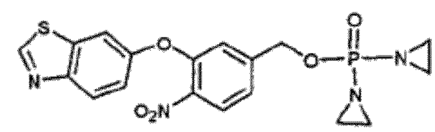,

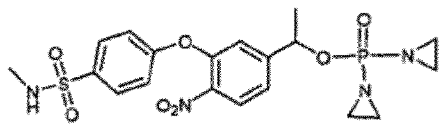, 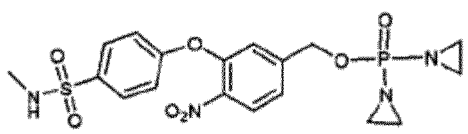,

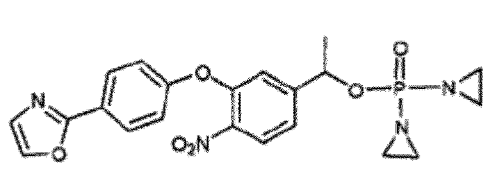,
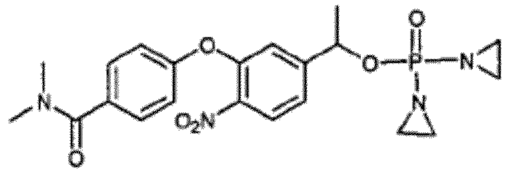,

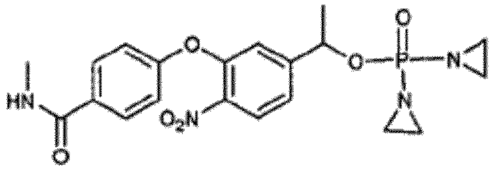,
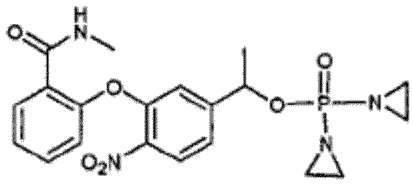,

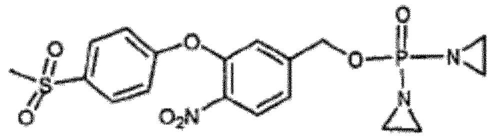,
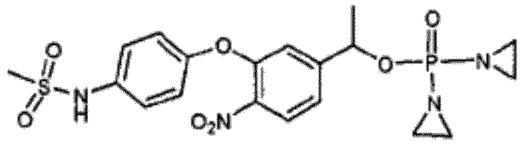,

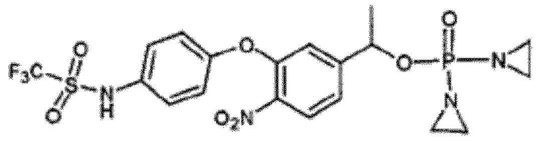,
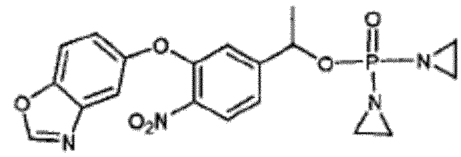,

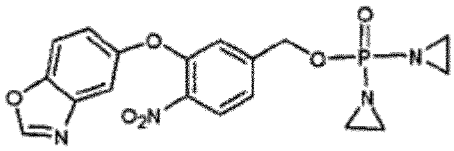,
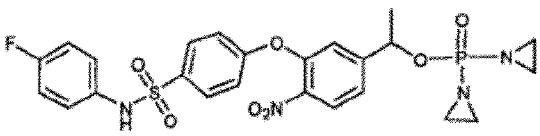,

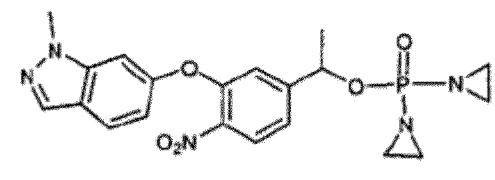,
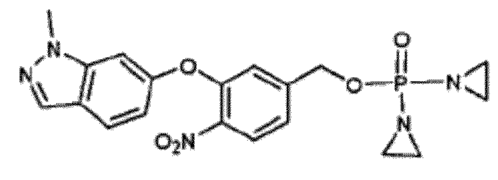,

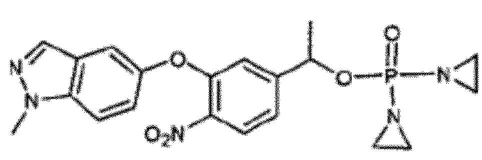,
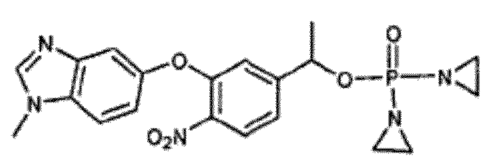,

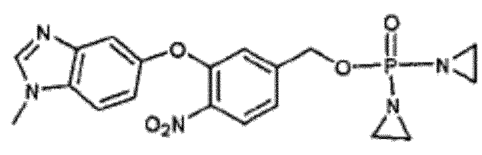,
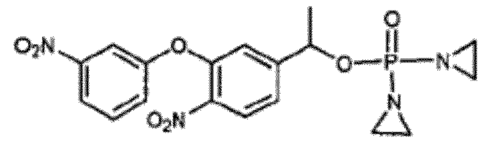,

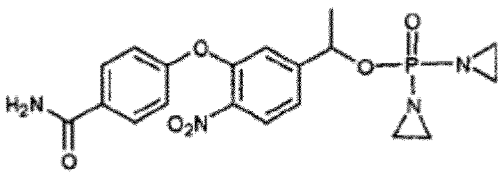,
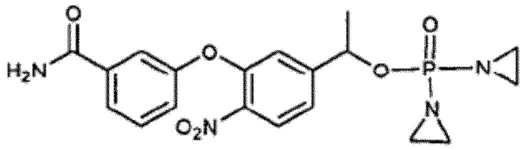,

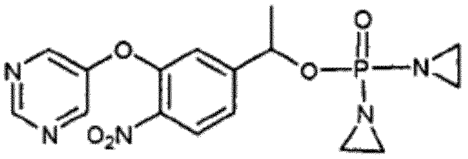,
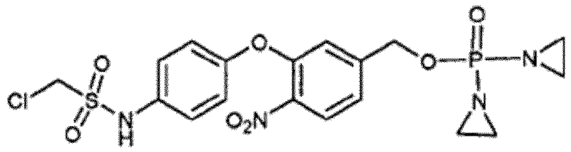,

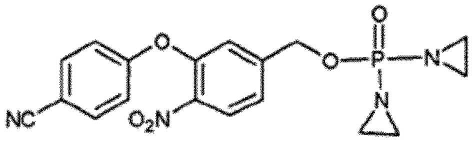,
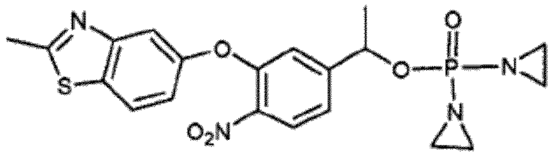,

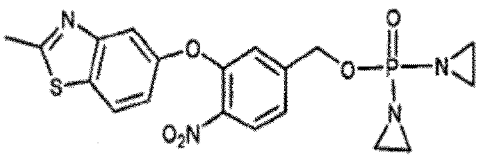,
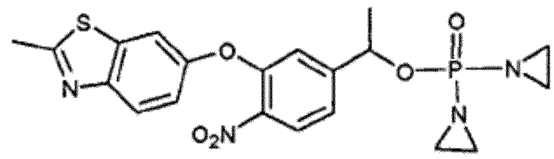,

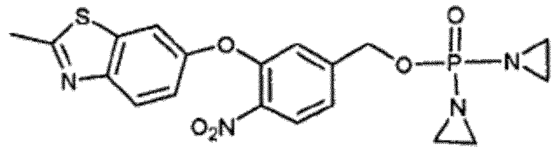,
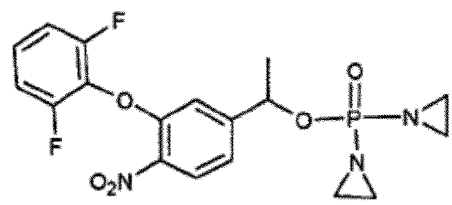,

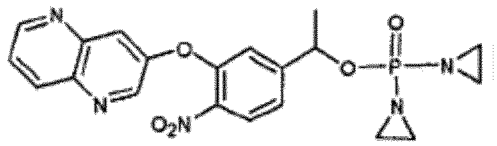,
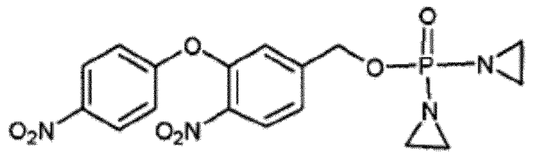,

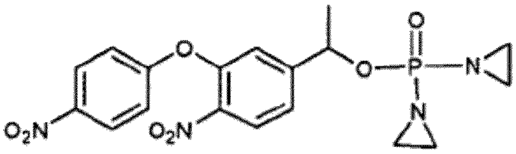,
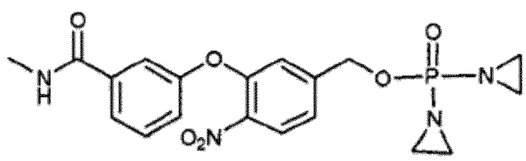,

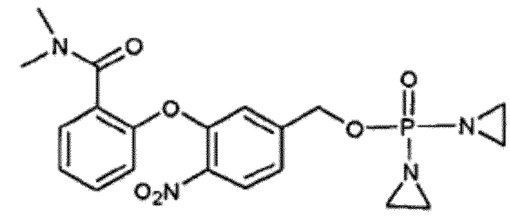,
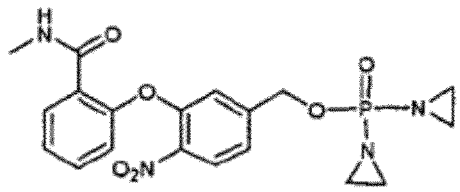,

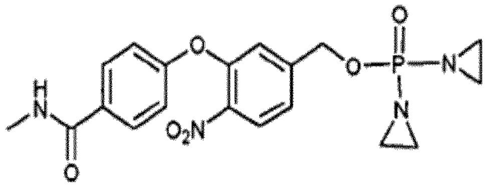,
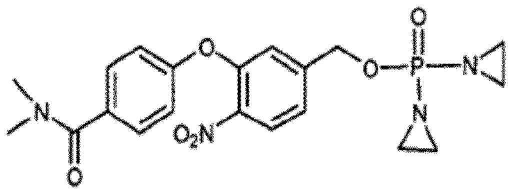,

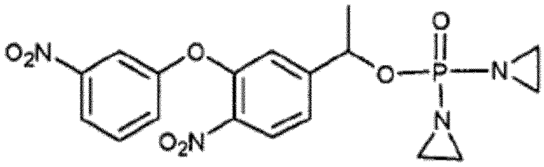,
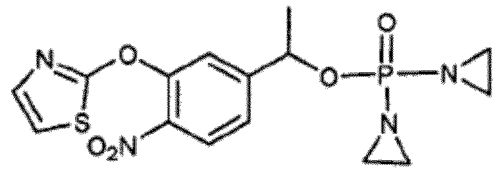,

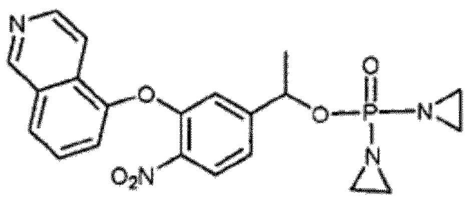,
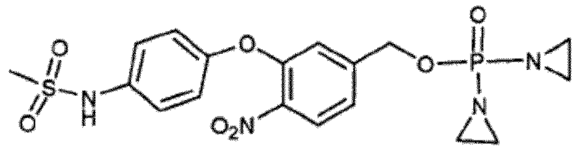,

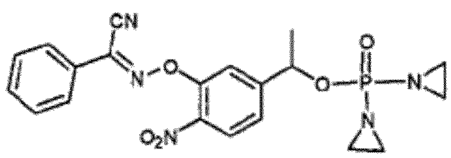,
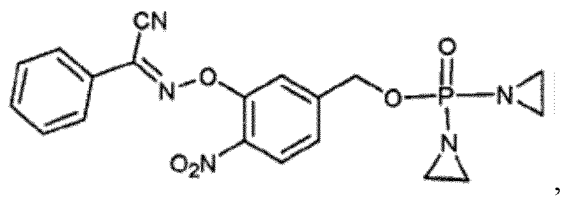,

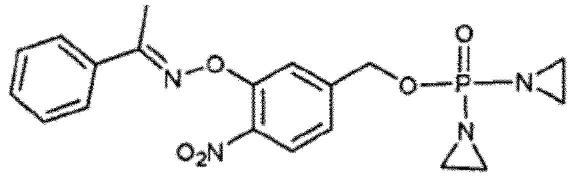,
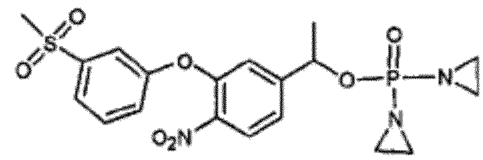,

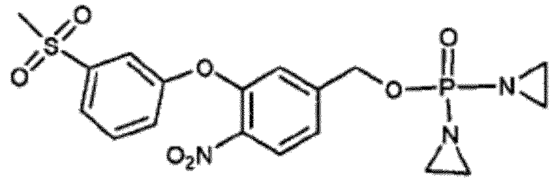,
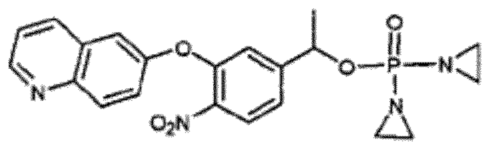,

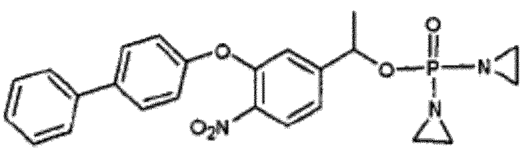,

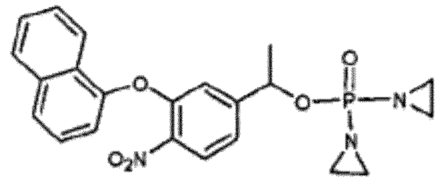,

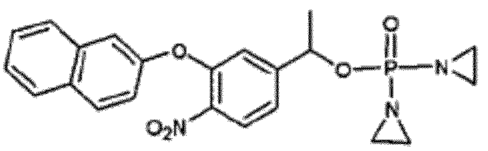,

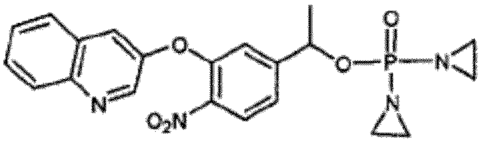,

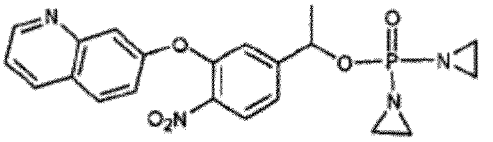,

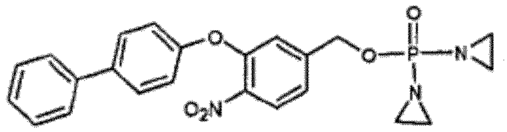,

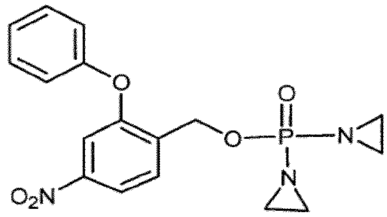,

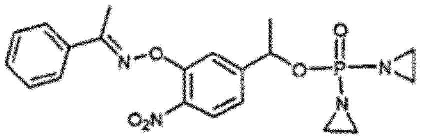,

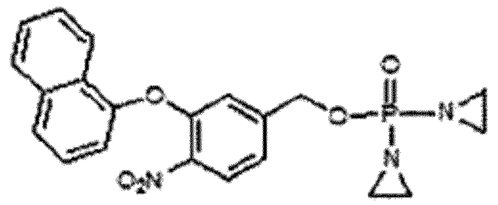,

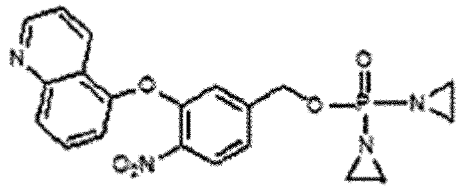,

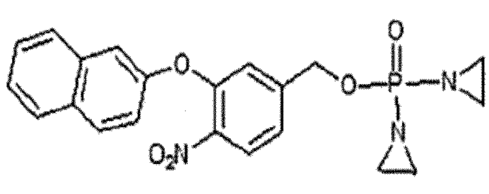,

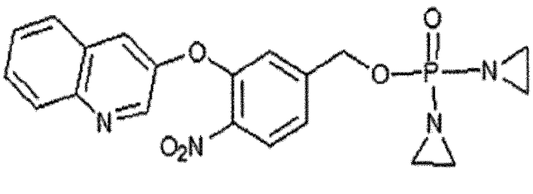,

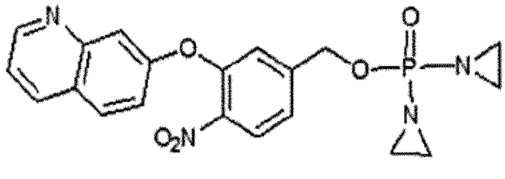,

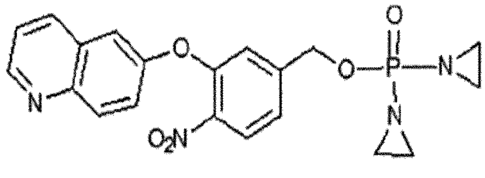,

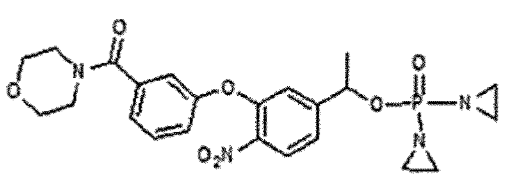,
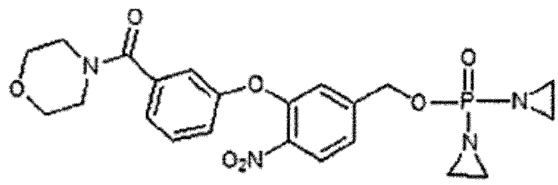,

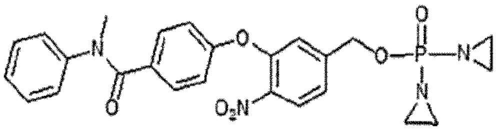,
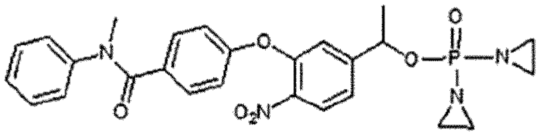,

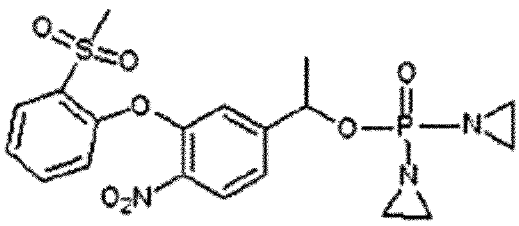,
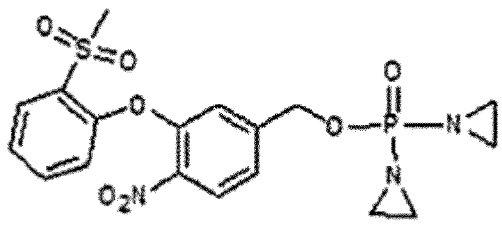,

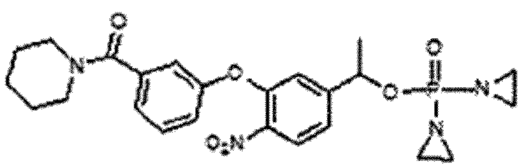,
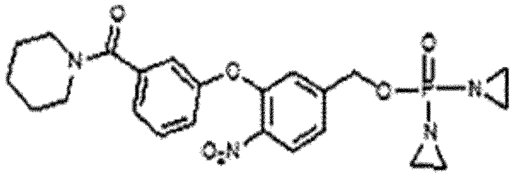,

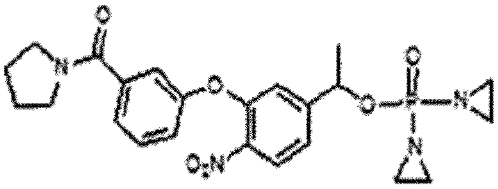,
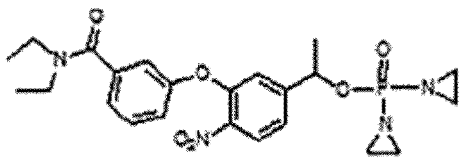,

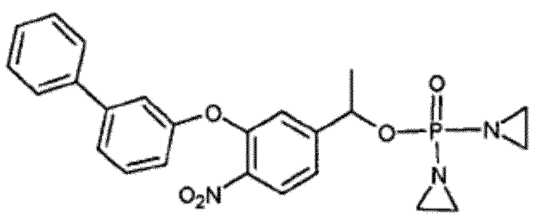,
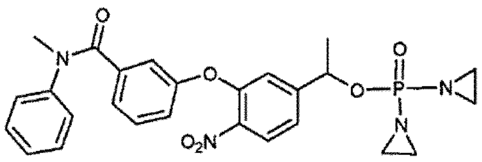,

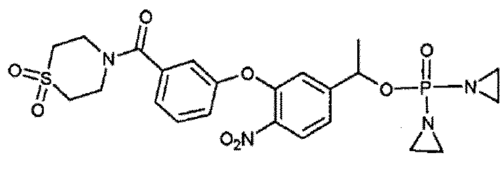,
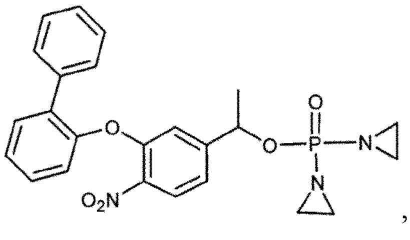,

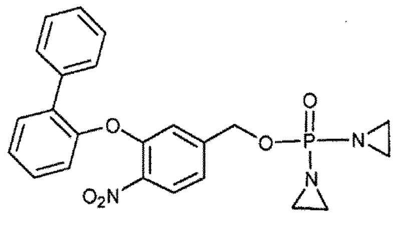 , 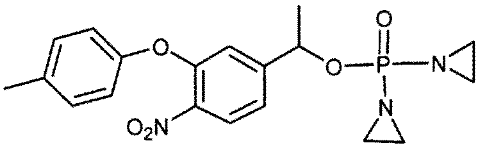 ,

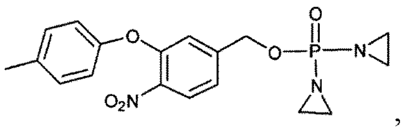 , 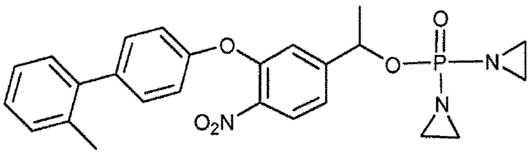 ,

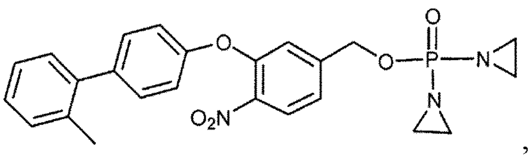 , 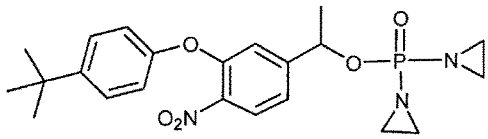 ,

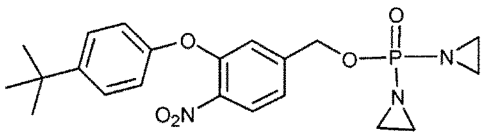 , 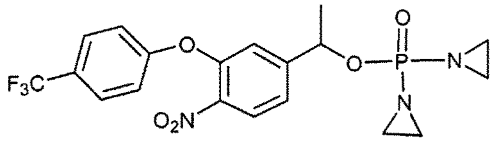 ,

, 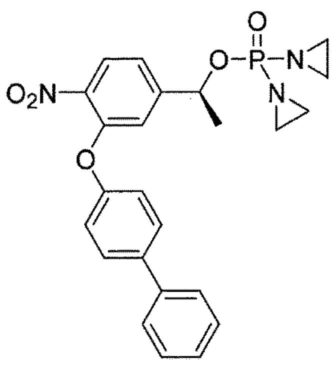 , 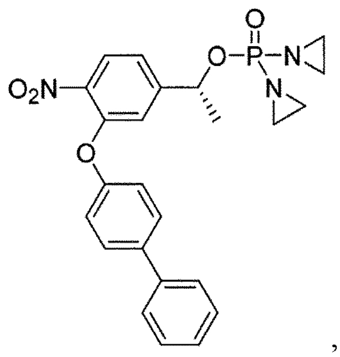 ,

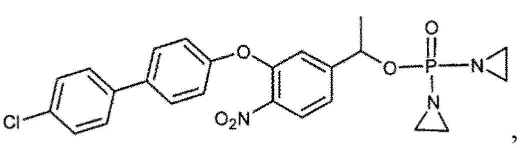 , 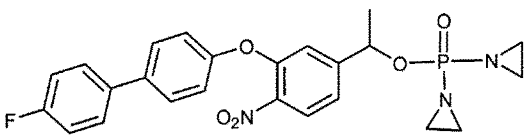 ,

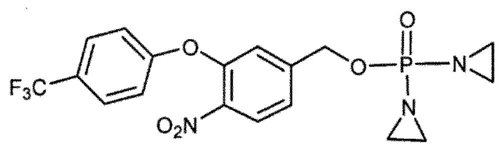 and 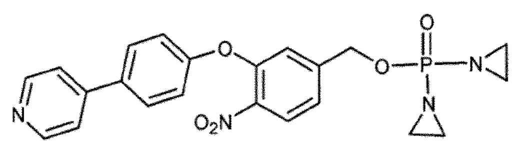 .

Specific definitions and meanings of the groups, and the preparation methods and spectral data of the compounds, have been disclosed in PCT/US2016/021581 with Publication No. WO2016145092A1 (corresponding to Chinese application No. 2016800150788 with Publication No. CN107530556A); PCT/US2020/120281 with Publication No. WO2021068952A1; and PCT/CN2020/089692 with Publication No. WO2020228686, which are incorporated herein by

reference in its entirety.

Evidently, the compounds of Formula 6, similar to AST-3424, are prodrugs of AST-2660, and can be activated by the AKR1C3 enzyme to form AST-2660 to exert its anticancer efficacy:

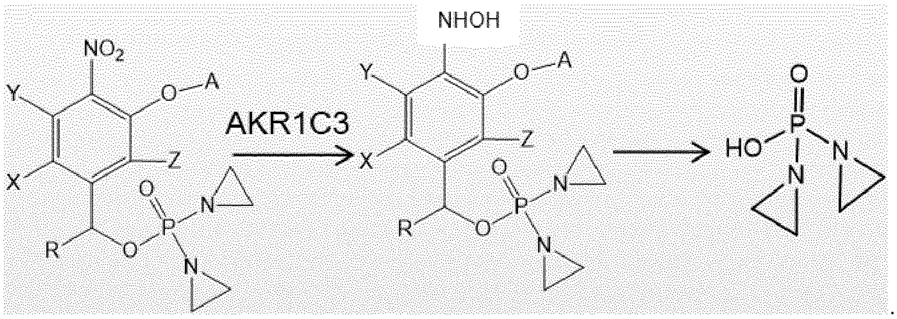


.

The hypoxia-activated DNA alkylating agent prodrug is selected from the group consisting of compounds having a structure as shown in the following Formulae 6-12:

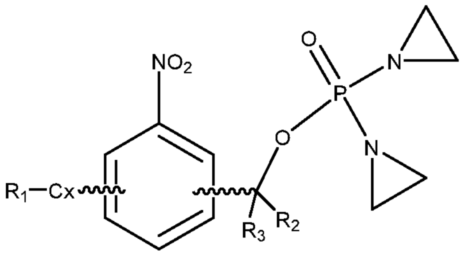

(6)

wherein the definitions of $R_1$, $R_2$, $R_3$ and Cx are as described in the claims of Patent Application PCT/CN2020/114519 with Publication No. WO2021120717A1; Specifically, the groups are defined as follows:

Cx is a 5-10 membered aromatic ring or aromatic heterocyclic ring, alicyclic heterocyclic ring or cycloalkane, which shares two carbon atoms with the nitrobenzene ring to form a fused ring structure;

$R_1$, which is attached to any skeleton atom of the Cx ring, is selected from hydrogen, halogen atom, cyano or isocyano, hydroxyl, mercapto, amine, OTs, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, $C_6$-$C_{10}$ aryl or Z-substituted aryl, 4-15-membered heterocycle or Z-substituted heterocycle, 5-15 membered heteroaryl or Z-substituted heteroaryl, alkoxy of 1-6 carbon atoms or Z-substituted alkoxy of 1-6 carbon atoms, $-CONR^6R^7$, $-SO_2NR^6R^7$, $-SO_2R^6$, -OCOO-$R^6$, $-COOR^6$, $-NR^6COR^7$, $-OCOR^6$, $-NR^6SO_2R^7$, and $-NR^6SO_2NR^6R^7$;

$R_2$ and $R_3$ are each independently hydrogen, $C_1$-$C_6$ alkyl or Z-substituted alkyl, $C_2$-$C_6$ alkenyl or Z-substituted alkenyl, $C_2$-$C_6$ alkynyl or Z-substituted alkynyl, $C_3$-$C_8$ cycloalkyl or Z-substituted cycloalkyl, $C_6$-$C_{10}$ aryl or Z-substituted aryl, 4-15-membered heterocycle or Z-substituted heterocycle, 5-15-membered heteroaryl or Z-substituted heteroaryl, or $R_2$ and $R_3$, together with the carbon atom of benzyl to which they are bound, to form a 3-6 membered ring;

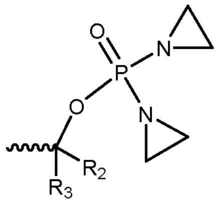

group can substitute the hydrogen atom at any position on the carbon atom of the fused ring, and the number of substitution is 1.

Z substituent is a halogen atom, cyano group or isocyano group, hydroxyl group, mercapto group, amino group, $C_1$-$C_3$ alkyl group or substituted alkyl group, $C_1$-$C_3$ alkoxy group or substituted alkoxy group, $C_2$-$C_3$ alkenyl group or substituted alkenyl group, $C_2$-$C_3$ alkynyl or substituted alkynyl, $C_3$-$C_8$ cycloalkyl or substituted cycloalkyl;

$R^6$ and $R^7$ are each independently hydrogen, $C_1$-$C_6$ alkyl or Z-substituted $C_1$-$C_6$ alkyl, $C_2$-$C_6$ alkenyl or Z-substituted $C_2$-$C_6$ alkenyl, $C_2$-$C_6$ alkynyl or Z-substituted $C_2$-$C_6$ alkynyl, $C_3$-$C_8$ cycloalkyl or Z-substituted $C_3$-$C_8$ cycloalkyl, $C_6$-$C_{10}$ aryl or Z-substituted $C_6$-$C_{10}$ aryl, 4-15 membered heterocyclyl or Z-substituted 4-15 membered heterocyclyl, 5-15 membered heteroaryl or Z-substituted 5-15 membered heteroaryl, or $R^6$ and $R^7$, together with the atom to which they are bound to form a 5-7 membered heterocyclyl or Z-substituted 5-7 membered heterocyclyl.

Specific definitions and meanings of the groups, and the preparation methods and spectral data of the compounds have been described in Patent Application PCT/CN2020/114519 with Publication No. WO2021120717A1, which is incorporated herein by reference in its entirety.

Specifically, the compound of Formula (6) is selected from the group consisting of:

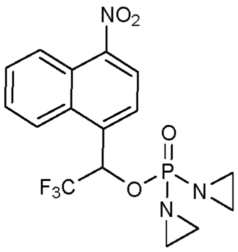,
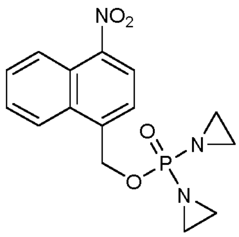,
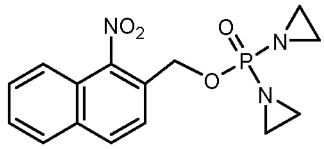,

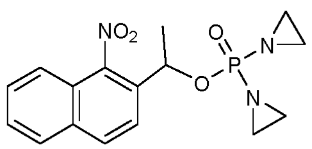,
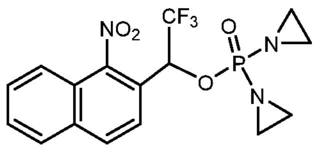,
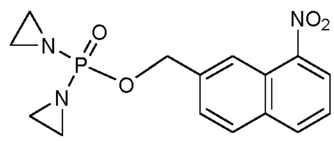,

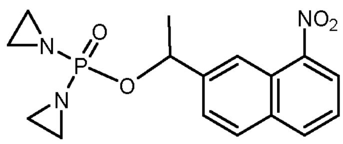,
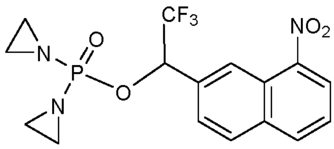,
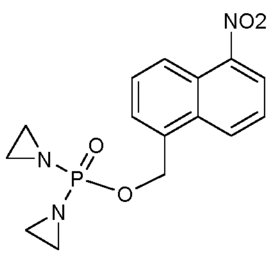,

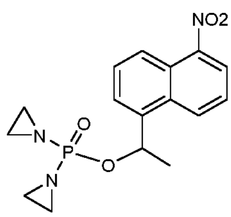,
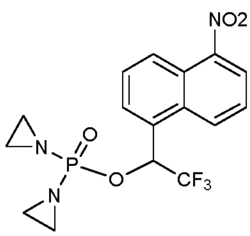,
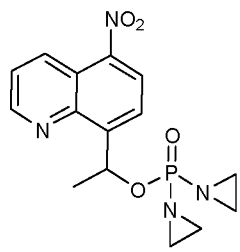,
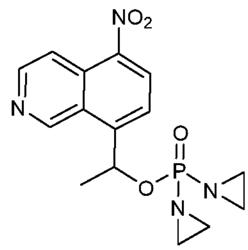,

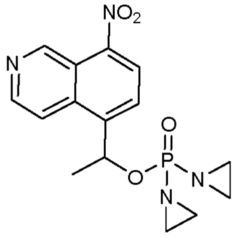,
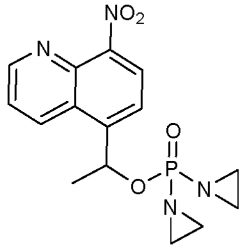,
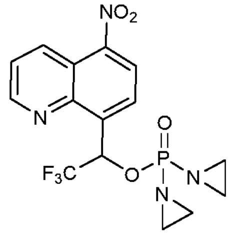,
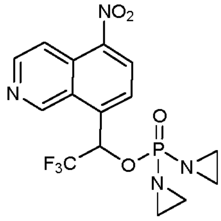,

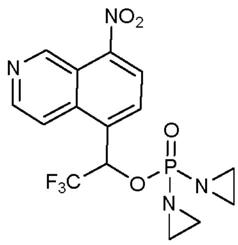,
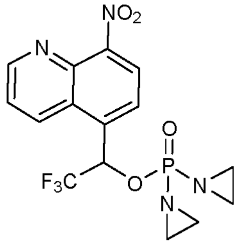,
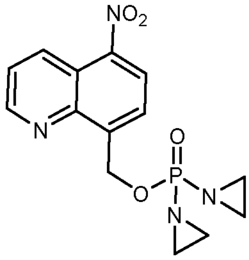,
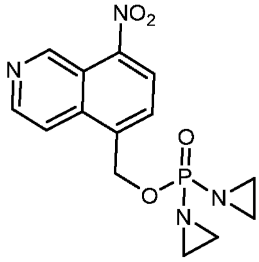,

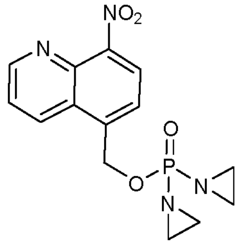,
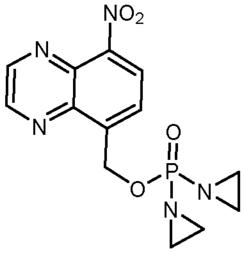,
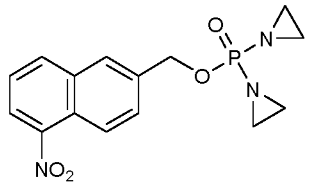,

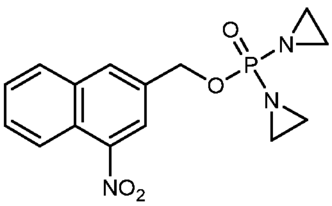,
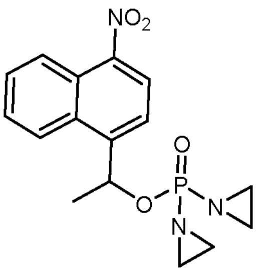.

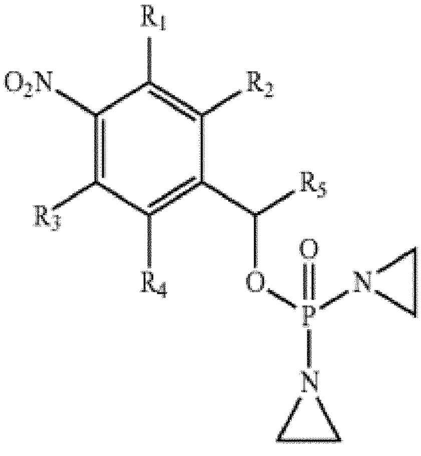
(7)

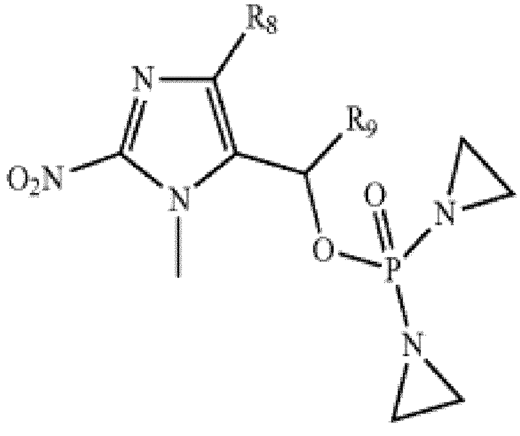
(8)

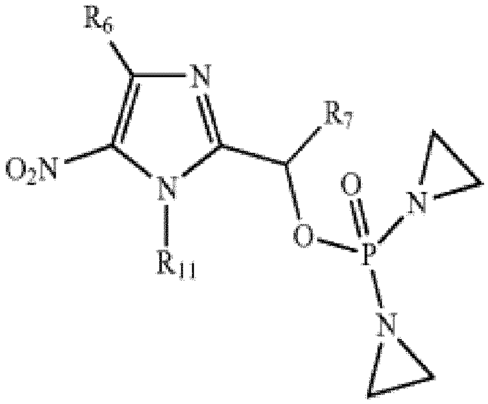

(9)

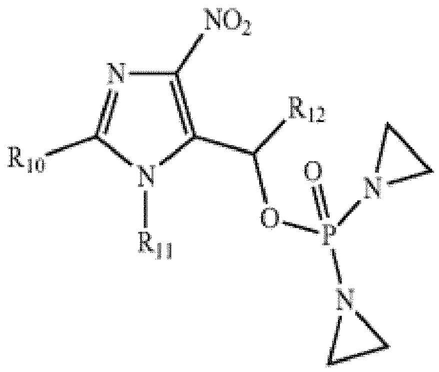

(10)

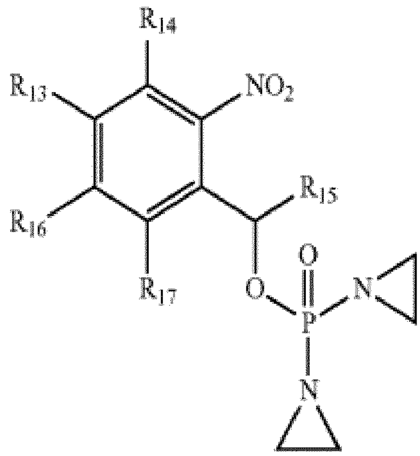

(11)

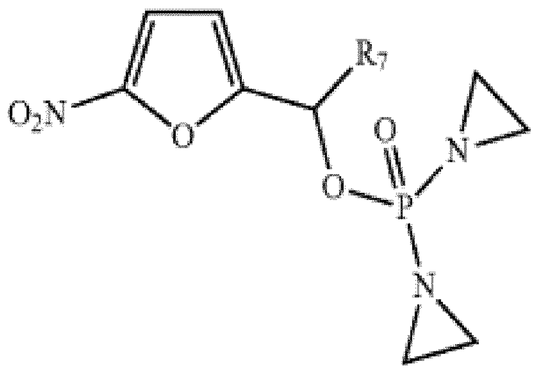

(12),

wherein, the definitions of $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, $R_{16}$, and $R_{17}$ are as described in the claims of the patent application PCT/US2016/039092 with Publication No. WO2016210175A1 (corresponding to the Chinese application No. 2016800368985 with Publication No. CN108024974A). Specifically, the groups are defined as follows:

$R_1$ is hydrogen, $-N_3$, CN, halogen, $NR^{21}R^{22}$, $-OR^{23}$, $-SO_2(C_1-C_6$ alkyl), $C_1-C_6$ alkyl, $C_2-C_6$ alkenyl, $C_2-C_6$ alkynyl, $C_3-C_8$ cycloalkyl, $C_6-C_{10}$ aryl, 4-15 membered heterocycle, 5-15 membered heteroaryl, or ether;
each $R^{21}$ and $R^{22}$ independently is hydrogen, hydroxy, $C_1-C_6$ alkyl, $C_2-C_6$ alkenyl, $C_2-C_6$ alkynyl, $C_3-C_8$ cycloalkyl, $C_6-C_{10}$ aryl, 4-15 membered heterocycle, 5-15 membered heteroaryl, or $-SO_2(C_1-C_6$ alkyl); or $R^{21}$ and $R^{22}$ together with the nitrogen atom they are bonded to form a 4-15 membered heterocycle or a 5-15 membered heteroaryl;
$R^{23}$ is hydrogen, $C_1-C_6$ alkyl, or $C_6-C_{10}$ aryl;
$R_2$ and $R_3$ are independently hydrogen or halogen;

$R_4$ is hydrogen, halogen, $C_1$-$C_6$ alkoxy, $C_1$-$C_6$ alkyl, or $C_6$-$C_{10}$ aryl,
$R_5$, $R_7$, $R_9$, $R_{12}$, and $R_{15}$ independently are hydrogen, $C_1$-$C_6$ alkyl, $C_2$-$C_6$ alkenyl, $C_2$-$C_6$ alkynyl, $C_3$-$C_8$ cycloalkyl, $C_6$-$C_{10}$ aryl, 4-15 membered heterocycle, 5-15 membered heteroaryl; or $R_4$ and $R_5$ together with the intervening carbon atoms between them to form a $C_5$-$C_6$ cycloalkyl ring;
$R_6$ and $R_{10}$ are independently hydrogen or halogen;
$R_8$ is hydrogen, $C_1$-$C_6$ alkyl, $C_2$-$C_6$ alkenyl, $C_2$-$C_6$ alkynyl, or 5-15 membered heteroaryl;
each $R_{11}$ independently is $C_1$-$C_6$ alkyl, $C_2$-$C_6$ alkenyl, $C_2$-$C_6$ alkynyl, $C_3$-$C_8$ cycloalkyl, or $C_6$-$C_{10}$ aryl;
$R_{13}$, $R_{14}$, $R_{16}$, and $R_{17}$ are independently hydrogen, halogen, $C_1$-$C_6$ alkyl, $C_2$-$C_6$ alkenyl, $C_2$-$C_6$ alkynyl, or $C_1$-$C_6$ alkoxy;
wherein the alkyl, alkenyl, alkynyl, cycloalkyl, aryl, heterocycle, heteroaryl, alkoxy and ether groups are optionally substituted.

Specific definitions and meanings of the groups, and the preparation methods and spectral data of the compounds, have been described in the patent application PCT/US2016/039092 with Publication No. WO2016210175A1 (corresponding to Chinese application No. 2016800368985 with Publication No. CN108024974A), which is incorporated herein by reference in its entirety.

In particular, the compounds of Formulae (7)-(12) are selected from the compounds as specifically disclosed in the above-mentioned patent applications.

Evidently, the "compound" in the above-mentioned Chemical Formulae 1-12 as disclosed herein also includes the compound itself as well as solvate, salt, ester or isotopic isomer thereof.

The present invention further provides a method for measuring the content of a metabolite in a biological sample, comprising the steps of:

preparing a solution to be tested containing an internal standard compound with known concentration for injection analysis by LC-MS/MS;

preparation of a standard working solution: preparing a series of standard working solutions containing an internal standard compound with known concentration and a metabolite II with known concentration, wherein the concentration of the internal standard compound in the series of standard working solutions is consistent and the same as the concentration of the internal standard compound in the solution to be tested, and the concentration of the metabolite II in the series of standard working solutions is different;

determining a relationship function by liquid chromatography-tandem mass spectrometry (LC-MS/MS): absorbing the prepared standard working solutions of metabolite II with different concentrations, and injecting them into the LC-MS/MS system for detection to obtain the relationship function y = f (x), wherein y represents the ratio of the peak area of the metabolite II to that of the internal standard compound, and x represents the concentration of the metabolite II in the standard working solutions;

determining and calculating the concentration of the metabolite II in the solution to be tested with unknown concentration by using the relationship function: absorbing the solution to be tested added with the internal standard compound with known concentration, injecting it into the LC-MS/MS system for detection to obtain the ratio y of the peak area of the metabolite II to that of the internal standard compound, substituting it into the function y = f (x) to obtain the concentration x of the metabolite II in the solution to be tested;

wherein the solution to be tested is prepared from the biological sample with or without treatment;

wherein the internal standard compound is a deuterated compound I, which has a structure as shown in Formula (I):

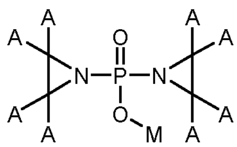
(I),

A is H or D, and at least one of eight As is D;

M is H or an alkali metal, an alkaline earth metal, or an ammonium radical;

wherein the metabolite II has a structure as shown in Formula (II):

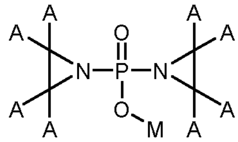 (II),

AisH;

M is H or an alkali metal, an alkaline earth metal, or an ammonium radical.

This invention further provides a method for measuring the content of the metabolite in a biological sample, comprising the steps of:

adding a quantitative internal standard compound to a biological sample solution to be tested and taking it as a solution to be tested after extraction treatment;

diluting a metabolite II reference substance to obtain a series of solutions of metabolite II with different concentrations, adding the quantitative internal standard compound and taking it as a standard working solution after extraction treatment, absorbing the series of standard working solutions, respectively injecting them into an LC-MS/MS system for detection to obtain the peak area of the metabolite II and the internal standard compounds, taking the ratio of the peak area of the metabolite II to that of the internal standard compounds as an ordinate and taking the concentration of the metabolite II as an abscissa to draw a standard curve and calculate a regression equation;

absorbing the solution to be tested, injecting it into the LC-MS/MS system for detection to obtain the ratio of the peak area of the metabolite II to that of the deuterated compound I in the solution to be tested, substituting it into the regression equation to obtain the content of the metabolite II in the solution to be tested;

wherein the internal standard is a deuterated compound I, which has a structure as shown in Formula (I):

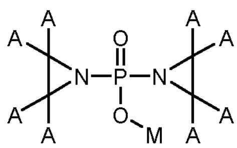 (I),

A is H or D, and at least one of eight As is D;

M is H or an alkali metal, an alkaline earth metal, or an ammonium radical;

wherein the metabolite II has a structure as shown in Formula (II):

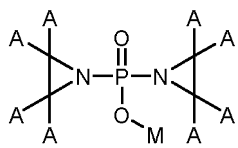 (II),

AisH;

M is H or an alkali metal, an alkaline earth metal, or an ammonium radical.

Preferably, the conditions for liquid chromatography in liquid chromatography-tandem mass spectrometry are as follows:

a hydrogen acceptor type stationary phase chromatography column is used;
mobile phase A is methanol solution of ammonium acetate, and mobile phase B is acetonitrile;

mobile phases A and B are used for gradient elution: gradually increasing from 15% by volume ratio to 90% by volume ratio of mobile phase A, and then gradually decreasing to 15% by volume ratio of mobile phase A;
the mass spectrometry conditions: electrospray ion source;
in negative ion scanning mode
the monitoring ion pair of the metabolite II is: m/z 147.0 → m/z 62.9;
the monitoring ion pair of the deuterated compound I is: m/z (147.0 + number of deuteration) → m/z 62.9; or
in positive ion scanning mode
the monitoring ion pair of the metabolite II is: m/z 149.0 → m/z 64.9;
the monitoring ion pair of the deuterated compound I is: m/z (149.0 + number of deuteration) → m/z 64.9.

If positive ion scanning mode is used, it is recommended to add an acid (such as formic acid) in the corresponding mobile phase.

Preferably, in the preparation of the solution to be tested containing the deuterated compound I (the internal standard compound) with known concentration, the deuterated compound I is firstly added into the biological sample solution and then the extraction operation is performed;

Correspondingly, in the preparation of the standard working solution, the deuterated compound I is firstly added into a matrix solution containing metabolites II with known different concentrations and then the extraction operation is performed.

Preferably, the biological sample is a urine sample or a plasma sample, and correspondingly, when the urine sample is measured, the corresponding matrix solution is the urine of a patient with an additive and without administration; when the blood sample is measured, the corresponding matrix solution is the plasma of a patient with an anticoagulant and without administration.

The operation process for the addition of the deuterated compound and extraction is as follows: the solution to be tested and the standard work solution are added into the solution of the deuterated compound I, methanol is added and mixed uniformly, and a supernatant is obtained by centrifugation.

The additive is $Na_2HPO_4$ or $K_2HPO_4$; and the anticoagulant is $K_2EDTA$ or $Na_2EDTA$.

For the blood samples, they should be stored in an environment below -20°C, preferably in an environment at -70°C within 4 hours after collection and can be stored for 28 days at -70°C; if treated, they should be refrigerated at 4°C or below and an injection detection should be completed within 54 hours.

For the urine samples, they should be stored at -70°C within 24 hours, preferably within 4 hours, after collection and can be stored for 32 days at -70°C; if treated, the injection detection should be completed within 94 hours at room temperature or below.

## BRIEF DESCRIPTION OF THE DRAWINGS

Figure 1 is a $^{31}$P-NMR spectrum of AST-2660-D8-sodium salt.

Figure 2 is $^{31}$P-NMR spectra of the first portion of an aqueous solution of AST-2660-D8-sodium salt, which were scanned for 64, 128, 256, and 512 times, respectively, as shown in Figures a, b, c, and d, respectively.

Figure 3 is $^{31}$P-NMR spectra at time zero, which are AST-2660-D8 sodium salt solution at -20°C (Figure a) and AST-2660-D8 sodium salt solution at -78°C (Figure b), respectively.

Figure 4 is $^{31}$P-NMR spectra after 48 hours, which are AST-2660-D8 sodium salt solution at -20°C (Figure a), and AST-2660-D8 sodium salt solution at -78°C (Figure b), respectively.

Figure 5 is a $^{31}$P-NMR spectrum of an aqueous solution of AST-2660-D8 sodium salt after storage at -20°C for 6 months.

Figure 6 is a $^{31}$P-NMR spectrum of an aqueous solution of AST-2660-D8 sodium salt after storage at -78°C for 6 months.

Figure 7 is typical LC-MS/MS spectra of AST-2660 (Figure a) and the internal standard AST-2660-D8 (Figure b) in blank human plasma extracts.

Figure 8 is typical LC-MS/MS spectra of AST-2660 (Figure a) and the internal standard AST-2660-D8 (Figure b) in

zero concentration of plasma sample extracts.

Figure 9 is typical LC-MS/MS spectra of AST-2660 (Figure a) and the internal standard AST-2660-D8 (Figure b) in standard sample solution of human plasma extracts (0.50 ng/ml).

Figure 10 is typical LC-MS/MS spectra of AST-2660 (Figure a) and the internal standard AST-2660-D8 (Figure b) in standard sample solution of human plasma extracts (200 ng/ml).

Figure 11 is typical LC-MS/MS spectra of AST-2660 and the internal standard AST-2660-D8 in blank human urine extracts.

Figure 12 is typical LC-MS/MS spectra of AST-2660 and the internal standard AST-2660-D8 in zero concentration of urine sample extracts.

Figure 13 is typical LC-MS/MS spectra of AST-2660 and the internal standard AST-2660-D8 in standard working solution of human urine extracts (0.50 ng/ml).

Figure 14 is typical LC-MS/MS spectra of AST-2660 and the internal standard AST-2660-D8 in standard working solution of human urine extracts (200 ng/ml).

In the graphs of Figures 8 to 14, the abscissa is the time, the ordinate is the mass spectrum ion intensity of LC-MS/MS, and the mass spectrum ion is the selected ion.

## DETAILED DESCRIPTION OF THE INVENTION

It should be noted that, unless defined otherwise, all technical or scientific terms used in one or more embodiments of the present specification shall have the meaning commonly understood by a person skilled in the art to which the invention belongs.

The experimental methods in the following examples are conventional methods unless specified otherwise. The medicinal raw materials, reagent materials, etc. used in the following examples are all commercially available products unless specified otherwise.

The AST-3424 drug developed by the applicant is a prodrug of the DNA alkylating agent AST-2660, which is specifically activated by the AKR1C3 enzyme that is highly expressed in cancer cells and metabolized to AST-2660 to exert its medicinal effect. As shown in the background section, in human clinical trials, it is necessary to measure the contents of drugs and drug metabolites in biological samples (such as blood, urine and tissues) of a subject, and further conduct Drug Metabolism and Pharmacokinetics (DMPK) studies based on the measured contents of drugs and drug metabolites. However, AST-3424 is used in the clinic trails in relatively low amount, from 1 mg to 100 mg. The internal standard or external standard method used in conventional liquid chromatography cannot satisfy the requirements for quantitative analysis under the lower limit of quantitation. Therefore, there is a need for developing an assay method which can meet the requirements for the lower limit of quantitation.

In order to solve the technical problem as described above, the applicant attempts to quantify the low content of AST-2660 in biological samples using internal standard quantification method. The internal standard method is a rather accurate quantitative method in chromatographic analysis. The internal standard method is to add a certain amount of pure substance to a certain amount of the sample mixture to be analyzed, analyze the sample containing the internal standard substance using chromatography, then determine the peak area of the internal standard and the component to be measured, respectively, and calculate the percentage of the component to be measured in the sample. It is very important for the selection of the internal standard. Ideally, the internal standard should be a known compound that can be obtained in pure form so that it can be added to the sample in an accurate and known amount; and it should have substantially the same or as close as possible chemical and physical properties (such as chemical structure, polarity, volatility and solubility in solvents, etc.), chromatographic behavior, and response characteristic as those of the analyte, preferably, a homologue of the analyte. Certainly, the internal standard must be sufficiently separated from the each component in the sample under the chromatographic conditions. For the quantitative analysis of internal standard method, it is very important for the selection of internal standard. It must meet the following requirements:

1. The internal standard should have similar physical and chemical properties (such as boiling point, polarity, and chemical structure, etc.) to those of the analyte;
2. The internal standard should be a pure substance which is not present in the test sample;
3. The internal standard must be completely dissolved in the test sample (or solvent), and does not chemically react

with the test sample; and the peak of the internal standard can be completely separated from that of each component in the test sample;

4. The possible amount of the internal standard added is close to that of the measured component;
5. The position of the chromatographic peak of the internal standard should be close to that of the measured component, or in the middle of the positions of the chromatographic peaks of the several measured component without co-overflow. The purpose is to avoid the difference in sensitivity caused by the instability of the instrument; and
6. The suitable amount of the internal standard added is selected such that the matching of the peak area between the internal standard and the analyte is greater than 75% so as to avoid sensitivity deviations owing to their being in different response value regions.

In this application, many similar compounds of AST-2660 were screened, and the deuterated compound I was finally screened as the internal standard for the detection of metabolite II. The liquid chromatography-tandem mass spectrometry (LC-MS/MS) method which is established using deuterated compound I has a lower detection limit: as low as 0.5 ng/ml. Moreover, the liquid chromatography-tandem mass spectrometry (LC-MS/MS) method which is established using deuterated compound I according to the present application can be used to measure the content of the metabolite AST-2660 in human plasma and urine. The method meets the analysis requirements of biological sample: the sample processing method is simple and convenient; and this method has high sensitivity, precision, and accuracy.

The technical solutions provided by the present invention will be further described below with reference to specific embodiments. The following examples are only used to illustrate the present invention, and do not limit the protection scope of the present invention.

General list of acronyms

| | | | |
|---|---|---|---|
| Acq. | Acquisition | PSS | Processed Sample Stability |
| Amu | Atomic mass unit | QC | Quality Control sample |
| °C | Degree Celsius (the reported temperature is a normal value) | $r^2$ | coefficient of determination |
| Cat # | Catalog number | RCF | Relative centrifugal force |
| CID | Collision-Induced Dissociation | RE | Relative error |
| cm | centimeter | rpm | Revolution per minute |
| Cone. | Concentration | RT | Retention time |
| cps | counts per second | SD | Standard Deviation |
| CV | Coefficient of Variation | SOP | Standard Operation Process |
| %Dev | Deviation percentage | SRM | Selected Reaction Monitoring (SRM) |
| dil. | Dilution | STD | Standard sample calibration |
| DilQC | Dilution of quality control sample | t | Time |
| eV | Electron volt | TBD | To be determined |
| FDA | U.S. Food and Drug Administration | temp. | temperature |
| g | gram | UHP | Ultra-high purity |
| GMQC | Geometric mean of QC sample | ULOQ | Upper limited of quantification |
| h or hr | hour | v | version |
| HPLC | High Performance Liquid Chromatography | V | Volt |
| Int. | Integral | WBS | Whole Blood Stability |
| IS | Internal Standard | WS | Working solution |

(continued)

| | | | |
|---|---|---|---|
| ISWS | Internal standard working solution | 5°C | Temperature in the range from 2 to 8°C |
| LC/MS/ MS | Liquid chromatography (method) and tandem mass spectrometry (method) | -20°C | Temperature in the range from -30 to -10°C |
| LIMS | Laboratory Information Management System | -70°C | Temperature in the range from -90 to -60°C |
| LLOQ | Lower limit of quantification | v | version |
| μL | Microliter | V | Volt |
| μm | Micrometer | WS | Working solution |
| M | Mole | 5°C | Temperature in the range from 2 to 8°C |
| Max. | Maximum | -20°C | Temperature in the range from -30 to -10°C |
| mg | Milligram | -80°C | Temperature in the range from -90 to -60°C |
| min | Minute | PSAE | Pre-study assay evaluation |
| Min. | Minimum | WS | Working solution |
| ml | Milliliter | -5°C | Temperature in the range from 2 to 8°C |
| mm | Millimeter | -20°C | Temperature in the range from -30 to -10°C |
| mm | Millimole | -80°C | Temperature in the range from -90 to -60°C |
| ms | Millisecond | *m/z* | mass-to-nucleus ratio |
| | | | |
| NA or N/A | Not available | ng | Nanogram |

**Example 1 Synthesis of AST-2660-D8-sodium salt**

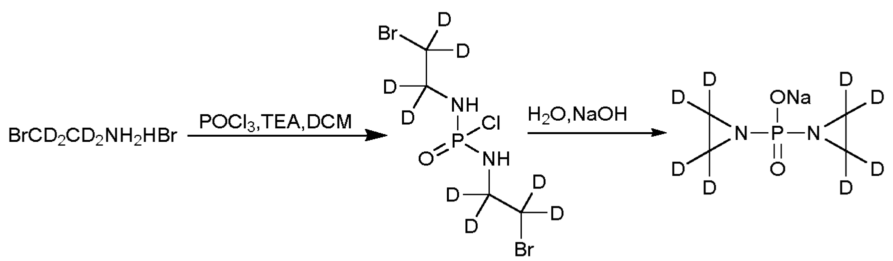


I-a I-b I

Deuterated 2-bromoethylamine hydrobromide (360 mg, 1.72 mmol) and phosphorous oxychloride (132 mg, 0.86 mmol) were added to anhydrous dichloromethane (4 mL) (firstly deuterated 2-bromoethylamine hydrobromide was added, then phosphorus oxychloride was added) under the protection of nitrogen. When the temperature of the reaction mixture was lowered to -78°C, triethylamine (348 mg, 3.44 mmol) in dichloromethane solution (2 mL) was added dropwise. The reaction mixture was kept at -78°C for 30 min, the temperature of the reaction mixture was naturally raised to 0 °C, and then the reaction mixture was kept at 0°C for 4 hours. Then the solid was quickly filtered off with suction. The mother

liquor was concentrated at a low temperature and was directly used in the next step.

The crude product obtained in the above steps was dissolved in water (30.8 mL), and a solid sodium hydroxide (275 mg, 6.88 mmol) was slowly added in portions. The reaction was stirred at room temperature overnight. Then the mixture was stored at -20°C. The $^{31}P$-NMR characterization is shown in Figure 1: the nuclear magnetic peak of HMPA as the internal standard is 29.886 ppm, and the nuclear magnetic peak of AST-2660-D8-sodium salt is 24.503 ppm.

Figure 1 is the $^{31}P$-NMR spectrum of AST-2660-D8-sodium salt.

Obviously, in the above operations, different intermediates I-b can be synthesized by selecting different deuterated raw material compounds I-a (deuterated 2-bromoethylamine), and then different bases (NaOH, KOH, LiOH or Ammonia water) were added in the hydrolysis reaction to obtain different deuterated bis (aziridine-1-yl) phosphinic acids or salts thereof.

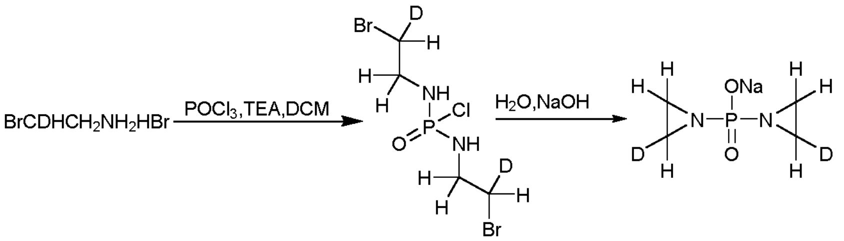


(with 2 D)

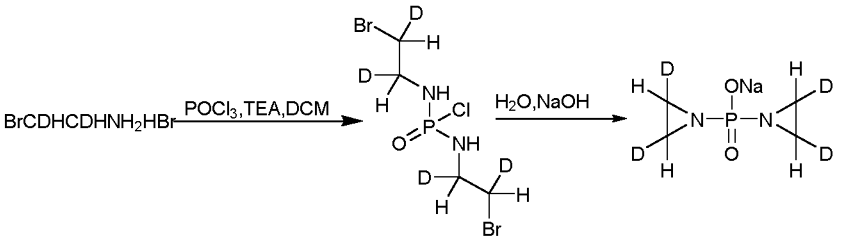


(with 4 D)

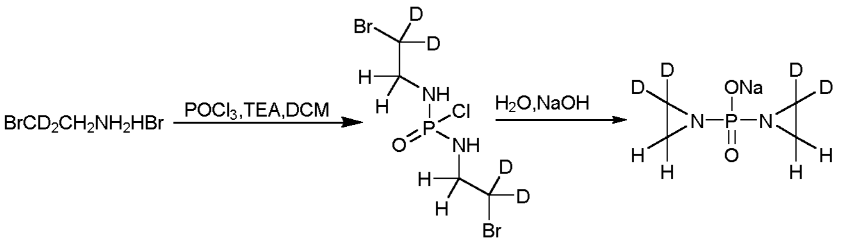


(with 4 D)

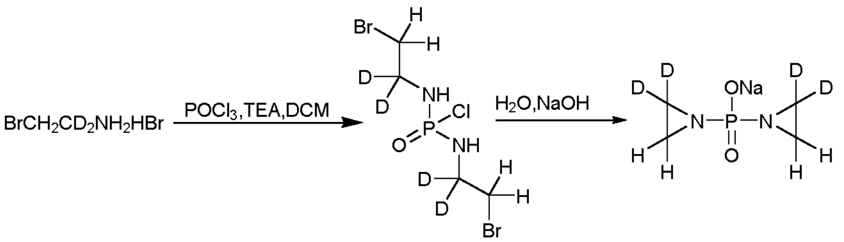


(with 4 D)

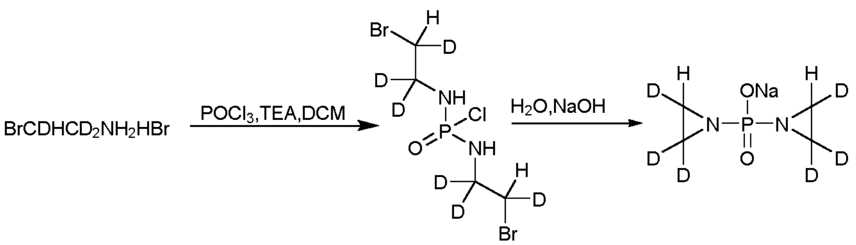


(with 6 D)

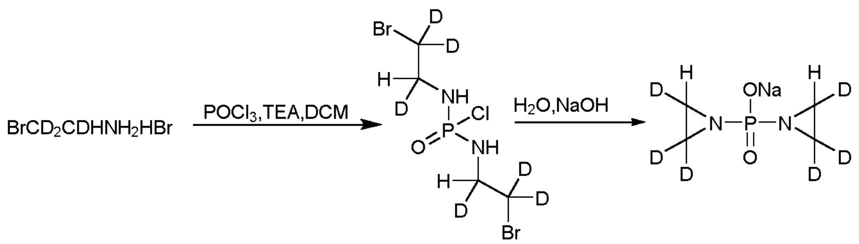


(with 6 D)

The above reaction from compound I-a to compound I-b was completed in one step. In fact, it is also can be completed in separate (two) steps, and the feeding order and the amount of the reactants can be changed. Obviously, such operation is equivalent to the operation that the above reaction from compound I-a to compound I-b was completed in one step, namely:

Under the protection of nitrogen, deuterated 2-bromoethylamine hydrobromide and phosphorous oxychloride were added to anhydrous dichloromethane (firstly phosphorus oxychloride was added, then a first deuterated 2-bromoethylamine hydrobromide was added, wherein the molar ratio of phosphorous oxychloride to the deuterated 2-bromoethylamine hydrobromide was greater than 1). The temperature of the reaction mixture was lowered to -78°C, and triethylamine in dichloromethane solution was added dropwise. After the reaction mixture was kept at -78°C for 30 min, a second deuterated 2-bromoethylamine hydrobromide was added. Triethylamine in dichloromethane solution was added dropwise. The reaction mixture was kept at -78°C for 30 min, the temperature of the reaction mixture was naturally raised to 0 °C, and then the reaction mixture was kept at 0°C for 4 hours. Then the solid was quickly filtered off with suction. The mother liquor was concentrated at a low temperature and was directly used in the next step.

The crude product obtained in the above steps was dissolved in water, and a solid sodium hydroxide was slowly added in portions. The reaction was stirred at room temperature overnight. Then the reaction mixture was stored at -20°C, wherein the reaction occurred as follows:

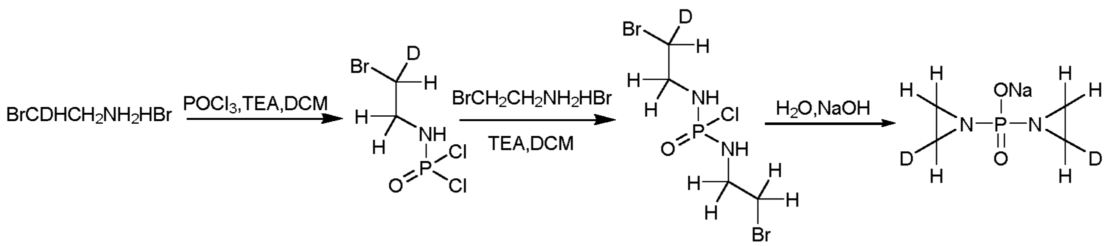


Different deuterated compounds I and salts thereof can be prepared by selecting the first and the second deuterated 2-bromoethylamine hydrobromide with different deuteration positions and deuteration numbers.

The quantitative detection method is specifically described below by means of taking the AST-2660-D8-sodium salt prepared in Example 1 as an example.

**Example 2 The method for detecting AST-2660-D8-sodium salt**

In this example, HMPA (hexamethylphosphoric triamide) was used as the internal standard of phosphorus spectrum for measuring the content of AST-2660-D8-sodium salt prepared in Example 1.

HMPA (33.0 mg, 0.1840 mmol) was dissolved in water (2.2 mL), wherein the total mass was 2612 mg, and the concentration of HMPA was $7.050\times10^{-5}$ (mmol/mg, the nuclear magnetic shift of $^{31}$P-NMR was 29.890 ppm)

The aqueous solution of HMPA was used as the internal standard to determine the phosphorus spectrum, and the content of AST-2660-D8-sodium salt was determined.

1. Detection of the first portion of the sample

About 0.5 mL (488 mg) of the aqueous solution of AST-2660-D8-sodium salt prepared in Example 1 and the aqueous solution of HMPA (317 mg), which has been precisely weighed and formulated, were scanned for 64 times to determine the phosphorus spectrum (as shown in Figure 2): the integrated peak area ratio of the nuclear magnetic peak 29.874 ppm for the corresponding HMPA to the nuclear magnetic peak 24.491 for AST-2660-D8-sodium salt =1: 0.257 in the nuclear magnetic spectrum.

Figure 2 is $^{31}$P-NMR spectra of the first portion of an aqueous solution of AST-2660-D8-sodium salt, from top

to bottom, from left to right, which was scanned for 64, 128, 256, and 512 times, respectively.

The amount of HMPA was known to be 0.02235 mmol, and thus the amount of AST-2660-D8-sodium salt should be 0.005743 mmol which was calculated and obtained according to the integrated peak area ratio in the nuclear magnetic spectrum, and the concentration should be $1.177\times10^{-5}$ mmol/mg, that is $1.177\times10^{-2}$ mmol/g, and the corresponding mass content was 2.10 mg/g. Likewise, when the scanning was performed for 128, 256, and 512 times, the phosphorus spectra were shown in Figure 2, wherein the integrated peak area ratios were calculated to be 1:0.264, 1:0.268 and 1:0.264, respectively. Thus, the concentrations of the same samples were $1.209\times10^{-5}$ mmol/mg, $1.227\times10^{-5}$ mmol/mg and $1.209\times10^{-5}$ mmol/mg, respectively, namely 2.15mg/g, 2.18mg/g and 2.15mg/g, and the average of the four results was 2.1mg/g.

The nuclear magnetic quantitative method in this example is relatively quick and simple, has acceptable accuracy within a certain range, and can replace the HPLC yield analysis method. If it is necessary to further improve the accuracy of quantification, the HPLC method should be used. The external standard method should be used for quantification, and the absolute content should be accurately quantified through the standard curve.

The LC-MS/MS methods of Example 5 and Example 7 are suitable for the detection of the low content of AST-2660-D8 and AST-2660, and their corresponding LC liquid phase methods (the corresponding MS/MS detectors are replaced with conventional Differential Detector, Electrospray Detector, Evaporative Light Scattering Detector) are also suitable for the detection of the constant content (mg/ml) of AST-2660 and AST-2660-D8.

**Example 3 Stability study of AST-2660-D8-sodium salt**

This example is to study the stability of the sample solution by detecting the content of the aqueous solution of AST-2660-D8-sodium salt: $^{31}$P-NMR was used for detection, and the content of the aqueous solution of AST-2660-D8-sodium salt was characterized by comparing the area ratio of $^{31}$P peak of HMPA as an internal standard to that of $^{31}$P peak of AST-2660-D8 sodium salt within 48 hours, thereby determining whether the mass of the sample solution was reduced as a result of degradation.

1. Analysis method

$^{31}$P-NMR of the samples was run on an NMR instrument.

HMPA (21.8 mg, 0.1217 mmol) was dissolved in water (2.20 mL), wherein the total mass was 2127 mg, and the concentration of HMPA was $5.72\times10^{-5}$ mmol/mg. A solution of AST-2660-D8-sodium salt (588 mg, about 0.5 mL) and a solution of HMPA (293 mg, $1.676\times10^{-2}$ mmol) were mixed together as samples for $^{31}$P-NMR analysis under -20°C storage conditions at different times. The ratio of integrated peak area of the nuclear magnetic peak (about 29.874ppm) for the corresponding HMPA to that of the nuclear magnetic peak (about 24.491ppm) for AST-2660-D8-sodium salt in the nuclear magnetic spectrum was calculated, and the integrated peak of the nuclear magnetic peak for HMPA was set as 1.

According to the same operation, a sample with another concentration was formulated for detection, and $^{31}$P-NMR analysis was performed under -78°C storage conditions at different times.

2. Stability results during storage at -20 to -78°C for 48 hours

The samples were stored at -20, -78°C for 48 hours, detected and recorded at 0h, 2h, 4h, 6h, 8h, 16h, 24h, 36h, and 48h, respectively. The results were shown in table 1 below.

Table 1: Stability data of AST-2660-D8 sodium salt stored at -20, -78°C for 48 hours

| Time Samples | AST-2660-D8 sodium salt solution -20°C | AST-2660-D8 sodium salt solution -78°C |
|---|---|---|
| 0h | 1:0.449 | 1:0.232 |
| 2h | 1:0.463 | 1:0.225 |
| 4h | 1:0.428 | 1:0.221 |
| 6h | 1:0.460 | 1:0.213 |
| 8h | 1:0.448 | 1:0.234 |
| 16h | 1:0.447 | 1:0.225 |
| 24h | 1:0.468 | 1:0.241 |

(continued)

| Time Samples | AST-2660-D8 sodium salt solution -20°C | AST-2660-D8 sodium salt solution -78°C |
|---|---|---|
| 36h | 1:0.444 | 1:0.234 |
| 48h | 1:0.444 | 1:0.230 |

Under -20°C storage condition, the ratio of the peak area of $^{31}$P-NMR peak for HMPA to that of $^{31}$P-NMR peak for AST-2660-D8-sodium salt solution at 8/16/24/36/48 hours was stable in the range of 1:0.43-1:0.47. While under -78°C storage condition, the ratio was stable in the range of 1:0.21~1:0.24. It can be considered therefore that: AST-2660-D8-sodium salt solution was stable when it was stored at -20 to -78°C for 48 hours.

Representative spectra are shown in Figure 3 and Figure 4.

Figure 3 is a $^{31}$P-NMR spectrum at time zero, which are AST-2660-D8 sodium salt solution at -20°C and AST-2660-D8 sodium salt solution at -78°C from left to right.

Figure 4 is a $^{31}$P-NMR spectrum after 48 hours; which are AST-2660-D8 sodium salt solution -20°C and AST-2660-D8 sodium salt solution at -78°C from left to right.

3. Stability during storage at -20°C for 6 months

The concentration of AST-2660-D8 sodium salt was determined to be 1.89 mg/mL at day 0 and 1.37 mg/mL after storage at -20°C for 6 months using the method as described above. The concentration of AST-2660-D8 sodium salt was decreased by 27.5% within 6 months of storage.

The $^{31}$P-NMR spectrum after 6 months is shown in Figure 6.

Figure 5 is a $^{31}$P-NMR spectrum of an aqueous solution of AST-2660-D8 sodium salt after storage at -20°C for 6 months.

4. Stability of samples stored at -78°C for 6 months

The concentration of AST-2660-D8 sodium salt was determined to be 1.89 mg/mL at day 0 and 1.71 mg/mL after storage at -78°C for 6 months using the method as described above. The concentration of AST-2660-D8 sodium salt was decreased by 9.5% within 6 months of storage. Comparatively speaking, the sample storage at -78°C was more stable than storage at -20°C, and the degradation change was slower.

The $^{31}$P-NMR spectrum after 6 months is shown in Figure 7.

Figure 6 is a $^{31}$P-NMR spectrum of an aqueous solution of AST-2660-D8 sodium salt after storage at -78°C for 6 months.

From the above stability test results, it can be seen that the sample solution for detecting the content of aqueous solution of AST-2660-D8 sodium salt was stable after storage at -20 to -78°C for 2 days. When the aqueous solutions of AST-2660-D8 sodium salt were stored at -20°C and -78°C for 6 months, the concentrations thereof were decreased by 27.5% and 9.5%, respectively.

**Example 4 Establishment and verification of the detection method of AST-2660 in human plasma**

This example used deuterated internal standard (IS) AST-2660-D8 (prepared in Example 1) to quantitatively detect the metabolite AST-2660 (present in the form of sodium salt) comprising $K_2$EDTA anticoagulant in human plasma, wherein the structural formula of AST-2660 is as follows:

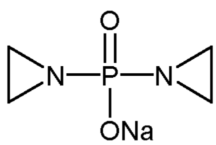

AST-2660 sodium salt
molecular formula: $C_4H_8N_2O_2PNa$
molecular weight: 170.08

The structure of the deuterated compound AST-2660-D8 sodium salt used is shown as below:

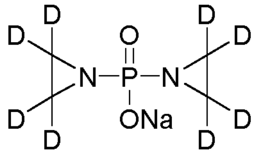

AST-2660-D8 sodium salt
molecular formula: $C_4D_8N_2O_2PNa$
molecular weight:178.13

The following AST-2660 each refers to its sodium salt, and AST-2660-D8 also refers to its sodium salt.

### 1. LC-MS/MS experimental method

The relevant parameters of the LC-MS/MS experimental method are provided.

Table 2: The instrument parameters of chromatography analysis

| | |
|---|---|
| LC System: | Waters Acquity UPLC System |
| Mobile phase: | A: Methanol solution of ammonium acetate (the amount of ammonium acetate within 0.01-1.5% by weight)<br>B: Acetonitrile |
| HPLC Chromatography Column: | SHARC 1, 3μm, 2.1*50mm (a typical hydrogen acceptor type stationary phase chromatography column, with trade name SHARC 1, which is a brand name of the chromatography column commercially sold by American SIELC Technologies company) |
| LC Procedure: | Gradient elution, the initial volume ratio of gradient elution of mobile phase A is 5-20%, and the end point is 75-95%, based on the content of ammonium acetate in mobile phase A, and it needs to be explored; the specific climbing time and flow rate should be converted in accordance with the column length and its inner diameter, and the value provided |
| | herein is 2.1*50mm (a chromatography column with an inner diameter of 2.1mm and a length of 50mm). |
| Autosampler temperature: | Acquity sample manager /4°C |
| Injection volume: | 5μl |

Table 3: The experimental parameters of mass spectrometer MS/MS

| | | | | | | |
|---|---|---|---|---|---|---|
| Mass Spectrometer: | AB Sciex Triple Quad 5500 | | | | | |
| Q1/Q3 Resolution: | Unit/Unit | | | | | |
| Ionization: | TURBO Ion spray™ | | | | | |
| Ionization mode: | Negative | | | | | |
| MS acquisition time: | Determined according to liquid phase gradient | | | | | |
| Analyte/Internal standard | Mass-to-nucleus ratio (amu, for each m/z±0.2) | Retention time (ms) | DP (V) | EP (V) | CE (eV) | CXP (V) |
| AST-2660 | m/z 147.0 → m/z 62.9 | 100 | -55 | -10 | -22 | -16 |
| AST-2660-D8 (IS) | m/z 155.0 → m/z 62.9 | 100 | -55 | -10 | -22 | -16 |

Table 4: The adjustable experimental parameters of mass spectrometer MS/MS (typical value

| | |
|---|---|
| Time: | 500°C |

(continued)

| | |
|---|---|
| Ion spray voltage: | -4500 V |

**2. Preparation of Samples**

2.1 Preparation of standard working solutions

AST-2660 (prepared by referring to Example 1 and selecting non-deuterated raw materials) standard stock solution (methanol solution with a concentration of 1.0 mg/ml): an appropriate amount of AST-2660 was taken, added with an appropriate amount of methanol, diluted and mixed thoroughly to obtain 1.0 mg/ml of solution.

A 100 μL standard stock solution of AST-2660 was taken, added with 9900 μL of methanol, diluted and mixed thoroughly to obtain 10.0 μg/ml of calibration standard working solution.

2.2 Preparation of standard curve

The standard working solution (SWS) and the blank matrix (diluent) were left to room temperature. The standard working solution was vortexed prior to use, in which the normal pooled human plasma comprising anticoagulant ($K_2$EDTA) was used as diluent and blank matrix to prepare standard sample solutions with different concentrations for standard curve according to the table below.

Table 5: The dilution data of standard working solution (SWS) and blank matrix (diluent)

| Source | | | Diluent volume μL | Standard curve for standard sample | |
|---|---|---|---|---|---|
| Source ID | Concentration , ng/ml | Taken volume μL | | Concentration, ng/ml | Calibration standard ID |
| Standard Sample Working Solution | 10000 | 100 | 4900 | 200 | Standard Sample 8 |
| Standard Sample 8 | 200 | 800 | 200 | 160 | Standard Sample 7 |
| Standard Sample 8 | 200 | 500 | 500 | 100 | Standard Sample 6 |
| Standard Sample 8 | 200 | 300 | 900 | 50 | Standard Sample 5 |
| Standard Sample 5 | 50 | 200 | 800 | 10 | Standard Sample 4 |
| Standard Sample 4 | 10 | 200 | 800 | 2.0 | Standard Sample 3 |
| Standard Sample 3 | 2.0 | 500 | 500 | 1.0 | Standard Sample 2 |
| Standard Sample 2 | 1.0 | 500 | 500 | 0.5 | Standard Sample 1 |

2.3 Preparation of internal standard working solution (standard working solution)

AST-2660-D8 stock solution (50 μg/ml of AST-2660-D8 methanol solution): an appropriate amount of AST-2660-D8 reference substance was taken, added with an appropriate amount of methanol, diluted, and mixed thoroughly to obtain 50 μg/ml of solution. A 20 μL of internal standard stock solution of AST-2660-D8 was taken, added with 9980 μL methanol, diluted and mixed thoroughly to obtain 100 ng/ml of internal standard working solution.

2.4 Preparation of quality control samples

AST-2660 quality control stock solution (1.0 mg/ml solution in methanol): an appropriate amount of AST-2660 reference substance was taken, added with an appropriate amount of methanol, diluted and mixed thoroughly to obtain 1.0 mg/ml of solution. 100 μL of AST-2660 QC stock solution and 9990 μL of methanol were taken to obtain 10.0 μg/ml of quality control working solution;

The normal pooled human plasma containing anticoagulant ($K_2EDTA$) was used as a diluent, and was diluted according to the following table to prepare quality control samples with different concentrations.

Table 6: Preparation of quality control sample

| Source | | | Dilute Volume μL | Quality Control Sample | |
|---|---|---|---|---|---|
| Source ID | Concentration, ng/ml | Taken volume μL | | Concentration, ng/ml | Quality Control Sample ID |
| AST-2660 Quality Control Stock Solution | 1000000 | 15 | 9985 | 1500 | Dilute QC |
| AST-2660 Quality Control Working Solution | 10000 | 30 | 1970 | 150 | QC4 (high QC) |
| QC4 | 150 | 600 | 900 | 60 | QC3 (medium QC) |
| QC4 | 150 | 100 | 900 | 15 | QC2 (Geometric mean value QC) |
| QC2 | 15 | 100 | 900 | 1.5 | QC1 (low QC) |
| QC1 | 1.5 | 300 | 600 | 0.5 | LLOQ QC (lower limit of quantification QC) |

**3. Pretreatment of the samples**

The steps for extracting samples using protein precipitation method:

1. Confirming the labeling and sequence of standard curve samples, quality control samples, and plasma samples;
2. Placing all samples on a Multi-Tube vortexer for vortexing uniformly after thawing;
3. Taking 100 μl from each sample and adding them to a 96-well plate;
4. In addition to the blank sample, adding 20 μl of AST-2660-D8 quality control working solution deuterated internal standard (i.e., 100 ng/ml of AST-2660-D8 methanol solution); adding 20 μl of methanol to the blank sample;
5. Adding 500μl of methanol;
6. Vortexing the plate at a medium speed for 3 minutes;
7. Centrifuging the 96-well plate at 2143 rcf (centrifugal force) for 10 minutes;
8. Transferring 450 μl of the supernatant to a new 96-well plate;
9. Drying the supernatant with a 96-well Termovap sample concentrator;
10. Redissolving with 150μl of methanol;
11. Sonicating the plate for 30 second;
12. Centrifuging the plate at 4°C and 2143rcf (centrifugal force) for 3 minutes;
13. Transferring 120 μl of the supernatant to a new 96-well plate.

**4. Experimental results**

4.1 Standard curve

Parameters of AST-2660 standard curve in human plasma were as follows: slope: 0.063846, intercept: -0.003788, correlation coefficient 0.9939, then the relationship function y=f (x)=0.063846x-0.003788, where y represents the ratio of the peak area of metabolite II to that of internal standard compound, x represents the concentration of metabolite II in the standard working solution, LLOQ (the lower limit of quantification): 0.5 ng/ml, ULOQ (the upper limit of quantification): 200 ng/ml. As can be seen that the linear relationship was good in the linear range of 0.5~200 ng/ml.

4.2 Accuracy and precision test results of quality control samples

Accuracy and precision are defined as follows:

Accuracy represents relative error (RE).

$$RE = [(\text{mean value} - \text{nominal value})/\text{nominal value}] \times 100$$

Precision represents coefficient of variation (CV).

$$CV = (\text{standard deviation}/\text{mean value}) \times 100.$$

The accuracy and precision test results were shown in Table 7. It can be seen from Table 7 that the intra-assay and inter-assay precisions were both less than 8.3%, and the intra-assay and inter-assay accuracies were within ±8.7. The analytical criteria for accuracy and precision were as follows: for LLOQ QC samples, the intra-assay and inter-assay accuracy (RE) must be within ±20.0%, and intra-assay and inter-assay CV must be not greater than 20.0%. The intra-assay and inter-assay accuracy (RE) must be within ±15.0% for low, geometric mean, medium, high, and diluted QC (if applicable) samples; intra-assay and inter-assay precision (CV) must be not greater than 15.0% at each QC concentration level. Therefore, the intra-assay and inter-assay precisions and accuracies of the quality control samples met the requirements. The precision (%CV) of the internal standard AST-2660-D8 was less than or equal to 40.0%, which met the requirements.

Table 7: The intra-assay and inter-assay precision and accuracy results for quality control samples

| | | | | | |
|---|---|---|---|---|---|
| AST-2660 Intra-assay and inter-assay precision of quality control in the three assay batches with acceptable accuracy and precision analysis (%CV) | | | Intra-assay | Inter-assay | Each concentration level met the acceptable requirements |
| | LLOQQC | 0.500ng/ml | ≤8.0% | 8.3% | |
| | QC1 | 1.50ng/ml | ≤7.9% | 8.1% | |
| | QC3 | 60.0ng/ml | ≤3.7% | 5.4% | |
| | QC4 | 150ng/ml | ≤5.5% | 5.3% | |
| AST-2660 Intra-assay and inter-assay accuracy of quality control in the three assay batches with acceptable accuracy | | | Intra-assay | Inter-assay | Each concentration level met the acceptable requirements |
| | LLOQQC | 0.500ng/ml | -5.8% to 8.4% | 0.6% | |
| | QC1 | 1.50ng/ml | -8.7% to 3.3% | -3.3% | |
| | QC3 | 60.0ng/ml | -4.3% to | 0.3% | |
| and precision analysis (%RE) | | | 5.8% | | |
| | QC4 | 150ng/ml | -1.3% to 4.7% | 0.7% | |

4.3 The test results of extraction recovery of AST-2660 and the internal standard AST-2660-D8

Table 8: The test results of extraction recovery of AST-2660 and the internal standard AST-2660-D8

| | | | | |
|---|---|---|---|---|
| AST-2660 Mean precision (%) for extraction recovery | QC1 | 1.50ng/ml | 42.4% | Meeting the acceptable requirements |
| | QC3 | 60.0ng/ml | 41.9% | |
| | QC4 | 150ng/ml | 42.3% | |
| | | | CV≤13.4% for each concentration | |

(continued)

| | | | |
|---|---|---|---|
| AST-2660-D8 Mean precision (%) for extraction recovery | 100.0ng/ml | 34.4%<br>CV≤8.2% | Meeting the acceptable requirements |
| Note: % recovery = (mean value before extraction/mean value after extraction) × 100<br>CV= (SD/Mean value)×100 | | | |

It can be seen from Table 8 that the CVs of the extraction recovery of AST-2660 and the internal standard AST-2660-D8 were both less than 15.0%. Analytical criteria for extraction recovery: for post-extraction spiked samples, the CV of response measured at each concentration level must be no greater than 15.0%. Therefore, the extraction recoveries of AST-2660 and the internal standard AST-2660-D8 met the requirements.

4.4 Test results of matrix effect

Table 9: Test results of matrix effect

| | | | |
|---|---|---|---|
| AST-2660<br>Precision of the intra-assay matrix (%) | LLOQQC 0.500ng/ml<br>QC4 150ng/ml | At least two thirds of the QC repeat samples have a RE which must be within ±20.0% (LLOQQC), or within ±15.0% (QC4). | Meeting the acceptable requirements |
| AST-2660<br>Matrix effect (mean matrix factor) | QC1 1.50ng/ml<br>QC4 150ng/ml | 0.95<br>0.95 | No standard limit |
| AST-2660<br>Matrix effect (mean normalized matrix factor) | QC1 1.50ng/ml<br>QC4 150ng/ml | 1.06, CV:6.1%<br>1.06, CV:5.5% | Meeting the acceptable requirements |

According to the results in Table 9, it can be seen that the inter-assay matrix accuracy and precision (CV) of the matrix effect of AST-2660 were both less than 15%, which met the requirements.

4.5 Stability

Table 10: Stability results of AST-2660 working solution and AST-2660-D8 (internal standard) working solution

| | | | |
|---|---|---|---|
| AST-2660 working solution can be stable for 30 hours at room temperature (%difference) | 10μg/ml of AST-2660 methanol solution (comparing the peak area between stock and fresh solutions) | RE:-8.1%<br>CV≤5.5 % | Meeting the acceptable requirements |
| AST-2660 working solution was stable for 26 days at -70°C (% difference) | 10μg/ml of AST-2660 methanol solution (comparing the peak area between stock and fresh solutions) | RE:0.4%<br>CV≤ 1.6% | Meeting the acceptable requirements |
| AST-2660-D8 working solution was stable for 26 days at -70°C (% difference) | 100ng/ml of AST-2660-D8 methanol solution (comparing the peak area between stock and fresh solutions) | RE:0.9%<br>CV≤1.4 % | Meeting the acceptable requirements |

It can be seen from Table 10 that the accuracy of the stability of the AST-2660 working solution and the internal standard AST-2660-D8 working solution was within ±8.1%, and the precision was less than 5.5%. Stability analysis criteria: the difference between the storage stable solution and the freshly prepared solution must be within ±10.0%, and the CV of each replicate experiment must not be greater than 10.0%. Therefore, both AST-2660 and AST-2660-D8 (internal standard) working solutions had good stability and met the requirements under various storage conditions.

The liquid chromatography-tandem mass spectrometry method established in this example for detecting AST-2660 in human plasma met the analysis requirements of biological sample: the sample processing method was simple and convenient; and this method had high sensitivity, precision, and accuracy.

**Example 5 Detection of the content of AST-2660 in actual human plasma**

The detection method established in example 4 was used to detect the content of AST-2660 in the human plasma to be tested.

The standard operating procedure (SOP) for detection established after the methodology and validation according to example 4 was as follows:

Step 1. Formulation of solution

Matrix: the mixed normal human plasma containing anticoagulant ($K_2$EDTA)

a: the internal standard working solution: AST-2660-D8 was taken, added with methanol, and diluted to prepare a solution containing about 100 ng per 1 ml.

b: the solution to be tested (no internal standard compound was added to the solution to be tested at this time): it was obtained by taking a blood sample to be tested.

c: the standard working solution (no internal standard compound was added to the standard working solution at this time): an appropriate amount of AST-2660 was taken and accurately weighed, dissolved with methanol, and diluted to prepare a solution containing about 1.0 mg per 1 ml, which was used as the standard working stock solution. An appropriate amount of the standard working stock solution was taken, added with the matrix and diluted to prepare standard working solutions with different concentrations containing about 200 ng, 160 ng, 100 ng, 50 ng, 10 ng, 2.0 ng, 1.0 ng and 0.5 ng per 1 ml, respectively. (The solution was stored at -70°C.)

d: the quality control sample solution: an appropriate amount of AST-2660 was taken and accurately weighed, dissolved with methanol, and diluted to prepare a solution containing about 10 μg per 1 ml, which was used as the quality control working stock solution. An appropriate amount of the quality control working stock solution was taken, added with matrix to prepare quality control working solutions with different concentrations containing about 150 ng, 60 ng, 15 ng, 1.5 ng and 0.5 ng per 1 ml. (The solution was stored at -70°C.)

Step 2. Extraction of sample

The solution to be tested, the standard working solution and the quality control sample solution were thawed at room temperature and mixed uniformly. 100 μl of the above solution was respectively taken, added with 20 μl of the internal standard and 500 μl of methanol, and vortexed for 3 minutes to mix uniformly, and then centrifuged for 10 minutes at 2143rcf. 450 μl of the supernatant was taken and dried, and 150 μl of methanol was added for redissolution, and sonicated. Then the plates were centrifuged for 3 minutes at 4°C. It was obtained by taking 200 μl of supernatant.

100 μl of the blank blood was taken, added with 20 μl of methanol and extracted with the same method to obtain the blank sample.

100 μl of the blank blood was taken, added with 20 μl of the internal standard working solution and extracted with the same method to obtain a zero-concentration sample.

After sample extraction and the addition of internal standard, the solution was injected into LC-MS/MS for detection in step 4.

Step 3. Setting up chromatography-mass spectrometry test conditions

Determination was performed using liquid chromatography-tandem mass spectrometry (LC-MS/MS), and the following instrument test conditions were set up:

Liquid phase conditions: A SHARC 1, 3μm, 2.1*50mm or chromatograph column with equivalent performance was used; the mobile phase was a methanol solution comprising low content of ammonium acetate; the mobile phase B was acetonitrile; the gradient elution was performed according to the following table, column temperature: 20°C; injection volume: 5 μl.

Table 11: The gradient elution conditions for testing with the liquid chromatograph in Example 5

| Time | Flow Rate | %A | %B |
|---|---|---|---|
| Initial | 0.8 | 15 | 85 |
| 1.5 | 0.8 | 50 | 50 |
| 2.0 | 0.8 | 90 | 10 |
| 2.5 | 0.8 | 15 | 85 |

Mass spectrometric conditions: electrospray ion source with negative ion scanning mode; spray potential: -4500 V; ion source temperature: 500°C; collision energy (CE): -22eV; declustering potential (DP): -55V; entrance potential (EP): -10V; collision chamber exit potential (CXP): -16V; dwell time: 100ms; high purity nitrogen was used for all gases; AST-2660 ions pairs: m/z 147.0 → m/z 62.9; the internal standard AST-2660-D8 ion pairs: m/z 155.0 → m/z 62.9.

Step 4. Determination

The AST-2660 standard working solution, blank sample, zero concentration sample, sample solution to be tested and quality control sample solution with different concentrations after extraction were respectively taken and injected into LC-MS/MS for detection.

Acceptance criteria: the recovered concentration of the standard working solution, the accuracy of the quality control working solution and the peak residue of AST-2660 and the internal standard in the blank sample should meet the requirements in Chinese Pharmacopoeia (2020 edition), Vol. 4, 9012.

The prepared standard working solutions of metabolites II with different concentrations were absorbed and injected into the LC-MS/MS system for detection to obtain a relationship function y = f (x), wherein y represents the ratio of the peak area of the metabolite II to that of the internal standard compound, and x represents the concentration of the metabolite II in the standard working solutions.

Calculation results: the relationship function y = f(x) of the ratio of the peak area of the AST-2660 to that of the internal standard was obtained from AST-2660 standard working solutions with different concentrations. The ratio of the peak area of the AST-2660 to that of the internal standard was determined from the solution to be tested after extraction, and substituted into the relationship function y = f (x) to calculate the concentration of the metabolite II in the solution to be tested.

The relationship function was used to determine and calculate the concentration of the metabolite II in the solution to be tested with unknown concentration. The solution to be tested added with the internal standard compound with known content was absorbed and injected into the LC-MS/MS system for detection. The ratio y of the peak area of the metabolite II to that of the internal standard compound was determined and substituted into the function y = f (x) to obtain the concentration x of the metabolite II in the solution to be tested.

As an option, the order of the above SOP related operation steps was slighted changed to obtain the following operation SOP:

A biological sample solution to be tested was added with a quantitative internal standard compound and taken as a solution to be tested after extraction treatment;

A series of solutions of metabolite II with different concentrations were obtained by diluting a metabolite II reference substance, added with the quantitative internal standard compound and taken as a standard working solution after extraction treatment; the series of standard working solutions were absorbed, respectively, injected into an LC-MS/MS system for detection to obtain the peak area of the metabolite II and the internal standard compounds, the ratio of the peak area of the metabolite II to that of the internal standard compounds was taken as an ordinate and the concentration of the metabolite II was taken as an abscissa to draw a standard curve and calculate a regression equation;

The solution to be tested was absorbed, and injected into the LC-MS/MS system for detection; the ratio of the peak area of the metabolite II to that of the deuterated compound I in the solution to be tested was determined, substituted into the regression equation to obtain the content of the metabolite II in the biological sample solution to be tested.

The solutions with the same concentration were prepared by using containers with the same volume according to the habits of laboratory operators using the above changed SOP. This operation only needs to ensure that the volume of the solution added was the same, and the obtained standard working solution was still with the same concentration.

Figures 7 to 10 are some typical spectra of the detection process of plasma samples.

Figure 7 is typical LC-MS/MS spectra of AST-2660 and the internal standard AST-2660-D8 in blank human plasma extracts.

Figure 8 is typical LC-MS/MS spectra of AST-2660 and the internal standard AST-2660-D8 in zero concentration of plasma sample extracts.

Figure 9 is typical LC-MS/MS spectra of AST-2660 and the internal standard AST-2660-D8 in standard sample solution of human plasma extracts (0.50 ng/ml).

Figure 10 is typical LC-MS/MS spectra of AST-2660 and the internal standard AST-2660-D8 in standard sample solution of human plasma extracts (200 ng/ml).

Some of the samples were detected using the operating procedures for the detection of AST-2660 content in human plasma provided in this example. The results were shown in Tables 12-16 below.

Table 12: Stability study data of AST-2660 in human plasma at -20°C and -70°C for one month

| Stability study data of AST-2660 in human plasma at -20°C for one month | | Stability study data of AST-2660 in human plasma at -70°C for one month | |
|---|---|---|---|
| Analysis batch 20 | 28 days, -20°C | Analysis batch 20 | 28 days, -70°C |
| QC1 1.50ng/ml | 1.01 | QC1 1.50ng/ml | 1.52 |
| | 1.03 | | 1.53 |
| | 1.14 | | 1.59 |
| | 1.25 | | 1.49 |
| Mean value | 1.11 | Mean value | 1.53 |
| SD | 0.113 | SD | 0.04 |
| CV (%) | 10.0 | CV (%) | 2.7 |
| RE (%) | -26.2 | RE (%) | 2.2 |
| n | 4 | n | 4 |
| QC4 150ng/ml | 147 | QC4 150ng/ml | 142 |
| | 141 | | 150 |
| | 149 | | 142 |
| | 145 | | 145 |
| Mean value | 146 | Mean value | 145 |
| SD | 3.43 | SD | 4 |
| CV (%) | 2.3 | CV (%) | 2.6 |
| RE (%) | -3.0 | RE (%) | -3.5 |
| n | 4 | n | 4 |
| DilQC (10-fold dilution) 1500ng/ml | 975 | DilQC (10-fold dilution) 1500ng/ml | 1380 |
| | 1060 | | 1390 |
| | 1020 | | 1410 |
| | 993 | | 1450 |
| Mean value | 1012 | Mean value | 1408 |
| SD | 37.0 | SD | 31 |
| CV (%) | 3.7 | CV (%) | 2.2 |
| RE (%) | -32.5 | RE (%) | -6.2 |
| n | 4 | n | 4 |

Obviously, the human plasma containing AST-2660 had almost no reduction in AST-2660 content after 28 days of storage at -70°C, whereas it was reduced significantly at -20°C. Therefore, the human plasma samples containing AST-2660 should be stored at -70°C as much as possible, under such condition the samples had no changes after 28 days of storage.

Table 13: Freeze/thaw stability study data of AST-2660 in human plasma at -20°C and -70°C

| AST-2660 concentration (ng/ml) | | | |
|---|---|---|---|
| Analysis batch 20 | 5 cycles at -20°C[a] | Analysis batch 20 | 5 cycles at -70°C[a] |
| QC1 1.50ng/ml | 1.14 | QC1 1.50ng/ml | 1.47 |
| | 1.06 | | 1.51 |
| | 1.13 | | 1.69 |
| | 1.18 | | 1.72 |
| Mean value | 1.13 | Mean value | 1.60 |
| SD | 0.05 | SD | 0.13 |
| CV (%) | 4.4 | CV (%) | 7.9 |
| RE (%) | -24.8 | RE (%) | 6.5 |
| n | 4 | n | 4 |
| QC4 150ng/ml | 136 | QC4 150ng/ml | 145 |
| | 138 | | 148 |
| | 152 | | 154 |
| | 132 | | 148 |
| Mean value | 140 | Mean value | 149 |
| SD | 9 | SD | 4 |
| CV (%) | 6.2 | CV (%) | 2.5 |
| RE (%) | -7.0 | RE (%) | -0.8 |
| n | 4 | n | 4 |
| DilQC | 1310 | DilQC | 1650 |
| (10-fold dilution) 1500ng/ml | 1250 | (10-fold dilution) 1500ng/ml | 1500 |
| | 1310 | | 1510 |
| | 1280 | | 1500 |
| Mean value | 1288 | Mean value | 1540 |
| SD | 29 | SD | 73 |
| CV (%) | 2.2 | CV (%) | 4.8 |
| RE (%) | -14.2 | RE (%) | 2.7 |
| n | 4 | n | 4 |
| [a]Freeze-thaw cycle stability samples were first frozen at nominal temperature of -20°C and -70°C for at least 24 hours and then thawed at room temperature. Samples were frozen for at least 12 hours for subsequent cycles. | | | |

Obviously, the human plasma containing AST-2660 had almost no reduction in AST-2660 content during the freeze-thaw process from -70°C to room temperature, while it was reduced significantly during the freeze-thaw process from -20°C to room temperature; that is, according to the data in Table 12, it can be seen that the sharp temperature changes of the human plasma samples stored at -70°C from the storage condition to room temperature for the experimental process did not affect the stability of AST-2660 in human plasma samples.

Table 14: Stability study data on AST-2660-D8 solution stored at -70°C

| Peak area (AST-2660-D8) 1mg/ml of methanol solution | | | Peak area (AST-2660-D8) 100ng/ml of methanol solution | |
|---|---|---|---|---|
| Solution time | Fresh stock solution t=0 | Stock solution stored at -70°C, t=26 days | Fresh stock solution t=0 | Working solution stored at -70°C, t=26 days |
| Peak area | 574450 | 539154 | 3253860 | 3289570 |
| | 589227 | 532283 | 3323720 | 3332520 |
| | 535059 | 520321 | 3204960 | 3294750 |
| | 530296 | 550350 | 3285390 | 3307750 |
| | 537317 | 532469 | 3314390 | 3306110 |
| | 523322 | 549478 | 3310460 | 3335380 |
| Mean value | 548278.5 | 537342.5 | 3282130 | 3311013 |
| CV (%) | 4.9 | 2.1 | 1.4 | 0.6 |
| n | 6 | 6 | 6 | 6 |
| Deviation% over fresh stock solution | NA | -2.0 | NA | 0.9 |

Obviously, it can be known from the data in Table 14 that the methanol solution of AST-2660-D8 has strong stability after being stored for 26 days under the same conditions as AST-2660 at -70°C.

Table 15: Stability study data of human plasma samples after AST-2660 was treated at 4°C

| Analysis batch 13, analysis date | AST-2660 Concentration | | |
|---|---|---|---|
| | PSS_QC1, 1.5ng/ml | PSS_QC3, 60ng/ml | PSS_QC4, 150ng/ml |
| t=54 hours[a] | 1.68 | 63.3 | 171 |
| | 1.70 | 59.9 | 171 |
| | 1.63 | 60.7 | 166 |
| | 1.76 | 60.7 | 173 |
| | 1.69 | 62.3 | 166 |
| | 1.66 | 66.4 | 162 |
| Mean value | 1.69 | 62.2 | 168 |
| SD | 0.04 | 2.39 | 4.17 |
| %CV | 2.6 | 3.8 | 2.5 |
| %Dev | 12.4 | 3.7 | 12.1 |
| n | 6 | 6 | 6 |

Obviously, it can be known from the data in Table 15 that the content of the methanol solution of AST-2660 was stable after stored for 54 hours under conventional freezing conditions (a freezer commonly used in laboratories).

Table 16: The experimental table stability study data of AST-2660 in human plasma at room temperature

| AST-2660 concentration | | | |
|---|---|---|---|
| Analysis batch 20 | 0 hour | 4 hours | 24 hours |
| QC1 1.50ng/ml | 1.32 | 1.31 | 1.28 |
| | 1.38 | 1.34 | 1.38 |
| | 1.55 | 1.42 | 1.27 |
| | 1.44 | 1.34 | 1.33 |
| Mean value | 1.42 | 1.35 | 1.32 |
| SD | 0.10 | 0.05 | 0.05 |
| CV (%) | 6.90 | 3.49 | 3.85 |
| RE (%) | -5.2 | -9.8 | -12.3 |
| n | 4 | 4 | 4 |
| QC4 150ng/ml | 130 | 130 | 117 |
| | 142 | 141 | 128 |
| | 135 | 136 | 124 |
| | 137 | 145 | 129 |
| Mean value | 136 | 138 | 125 |
| SD | 5.0 | 6.5 | 5.4 |
| CV (%) | 3.7 | 4.7 | 4.4 |
| RE (%) | -9.3 | -8.0 | -17.0 |
| n | 4 | 4 | 4 |
| DilQC (10-fold dilution) 1500ng/ml | 1610 | 1500 | 1380 |
| | 1770 | 1710 | 1500 |
| | 1700 | 1600 | 1480 |
| | 1640 | 1560 | 1460 |
| Mean value | 1680 | 1593 | 1455 |
| SD | 70.7 | 88.5 | 52.6 |
| CV (%) | 4.2 | 5.6 | 3.6 |
| RE (%) | 12.0 | 6.2 | -3.0 |
| n | 4 | 4 | 4 |

Obviously, according to the data in Table 16, the human plasma samples containing AST-2660 are not stable at room temperature. With the prolongation of the storage time, the content of AST-2660 in human plasma samples has been decreasing, which suggests that during the collection of human plasma samples in the relevant clinical patients, the collected plasma samples should be immediately stored in the above-mentioned experimentally verified low temperature environment: storage at -70°C is the safest, and storage at -20°C is also acceptable, and storage in the conventional refrigerator (4°C to 0°C) if the storage conditions are limited and should be transferred to the above-mentioned low temperature environment within 4 hours. During the transportation of samples to the DMPK sample testing center laboratory, the whole process of cold chain logistics (the temperature should be monitored during the whole process) should be used, wherein temperature should be selected to be below -20 °C or using dry ice for insulation.

According to the above experimental results, it can be known that:

(1) Human plasma samples containing AST-2660 should be immediately stored in the above-mentioned experimentally verified low temperature environment after collection: storage at -70°C is the safest, and storage at -20°C

is also possible, and in a conventional refrigerator (4°C to 0°C) if the storage conditions are limited and should be transferred to the above low temperature environment within 4 hours. During the transportation of samples to the DMPK sample testing center laboratory, the whole process of cold chain logistics (the temperature should be monitored during the whole process) should be used, wherein the temperature should be selected to be below -20 °C or using dry ice for insulation.

(2) The sample should be stored at -70°C or lower of temperature conditions, and it was stable under this condition for 28 days. Moreover, it may be stable for a longer time according to the changing trend.

(3) During the process of taking out the stored samples to room temperature, that is, the sharp temperature changes of the samples in human plasma stored at -70°C from the storage conditions to room temperature for the experimental process did not affect the stability of AST-2660 in human plasma samples. They should be stored in a conventional refrigerator (4°C to 0°C) after being taken out, and the storage time in a conventional refrigerator should not be longer than 4 hours. If they are stored at room temperature, the content of AST-2660 will decrease and thus they cannot be used.

(4) The content of the methanol solution of AST-2660-D8 will not change after being stored at -70°C for 26 days, and it has strong stability. Moreover, it may be stable for a longer time according to the changing trend.

Therefore, in the above operation SOP for blood samples, the blood samples should be stored in an environment below -20°C, preferably in an environment at -70°C within 4 hours after collection and can be stored for 28 days at -70°C; if the blood samples were treated according to the above-mentioned extraction, they should be refrigerated at the temperature of 4°C or below and an injection detection should be completed within 54 hours in an environment at room temperature in laboratory; the results detected in compliance with these storage temperatures and times were reliable; otherwise, the results will be untrue and unreliable owing to changes in AST-2660 in the sample during storage.

**Example 6 Establishment and verification of the detection method of AST-2660 in human urine**

In this example, the establishment steps of the detection method of AST-2660 in human urine were basically the same as those in Example 4, and the differences between them were only in that the matrix was different (human plasma in Example 4, human urine in this example) and the sample extraction steps were slightly different. The mixed normal human (no drug administration) urine containing the additive $Na_2HPO_4 \cdot 12H_2O$ was used as diluent and matrix.

**1. Pretreatment of the samples**

The steps for extracting samples using protein precipitation method:

1. Confirming the labeling and sequence of standard samples, quality control samples, and plasma samples;
2. Placing all samples on a Multi-Tube vortexer for vortexing uniformly after thawing;
3. Taking 100 μl from each sample and adding them to a 96-well plate;
4. In addition to the blank sample, adding 20 μl of AST-2660-D8 quality control working solution (i.e., 100 ng/ml of AST-2660-D8 methanol solution); adding 20 μl of methanol to the blank sample;
5. Adding 500μl of methanol;
6. Vortexing the plate at a medium speed for 3 minutes;
7. Centrifuging the 96-well plate at 2143 rcf (centrifugal force) for 10 minutes;
8. Transferring 450 μl of the supernatant to a new 96-well plate;
9. Centrifuging the 96-well plate at 2143 rcf (centrifugal force) for 10 minutes;
10. Transferring 300 μl of the supernatant to a new 96-well plate.

**2. Experimental results**

2.1 Standard curve

Parameters of AST-2660 standard curve in human urine were as follows: slope: 0.001400, intercept: 0.000016, correlation coefficient 0.9982, then the relationship function y=f (x)=0.001400x+0.000016, where y represents the ratio of the peak area of metabolite II to that of internal standard compound, x represents the concentration of metabolite II in the standard working solution, LLOQ (the lower limit of quantification): 0.5 ng/ml, ULOQ (the upper limit of quantification): 200 ng/ml. As can be seen that the linear relationship was good in the linear range of 0.5~200 ng/ml.

2.2 Accuracy and precision test results of quality control samples

Accuracy and precision are defined as follows:

Accuracy represents relative error (RE).

$$RE = [(\text{mean value-nominal value})/\text{nominal value}] \times 100$$

Precision represents coefficient of variation (CV).

$$CV = (\text{standard deviation/mean value}) \times 100.$$

The accuracy and precision test results were shown in Table 17. It can be seen from Table 17 that the intra-assay and inter-assay precisions were both less than 15.5%, and the intra-assay and inter-assay accuracies were within ±11.4. The analytical criteria for accuracy and precision were as follows: for LLOQ QC samples, the intra-assay and inter-assay accuracy (RE) must be within ±20.0%, and intra-assay and inter-assay CV must be not greater than 20.0%. The intra-assay and inter-assay accuracy (RE) must be within ±15.0% for low, geometric mean, medium, high, and diluted QC (if applicable) samples; intra-assay and inter-assay precision (CV) must be not greater than 15.0% at each QC concentration level. Therefore, the intra-assay and inter-assay precisions and accuracies of the quality control samples met the requirements. The precision (%CV) of the internal standard AST-2660-D8 was less than or equal to 13.4%, which met the requirements.

Table 17: The intra-assay and inter-assay precision and accuracy results for quality control samples

| | | | | | |
|---|---|---|---|---|---|
| AST-2660 | | | Intra-assay | Inter-assay | Each concentration level met the acceptable requirements |
| Intra-assay and inter-assay precision of quality control in the three assay batches with acceptable accuracy and precision analysis (%CV) | LLOQQC | 0.500ng/m | ≤15.5% | 12.3% | |
| | QC1 | 1.50ng/ml | ≤10.8% | 8.1% | |
| | QC3 | 60.0ng/ml | ≤6.3% | 3.8% | |
| | QC4 | 150ng/ml | ≤4.1% | 3.0% | |
| AST-2660 | | | Intra-assay | Inter-assay | Each concentration level met the acceptable requirements |
| Intra-assay and inter-assay accuracy of quality control in the three assay batches with acceptable accuracy and precision analysis (%RE) | LLOQQC | 0.500ng/ml | -4.8% to 11.4% | 1.4% | |
| | QC1 | 1.50ng/ml | | | |
| | QC3 | 60.0ng/ml | 2.0% to 4.7% | 3.3% | |
| | QC4 | 150ng/ml | 6.3% to 11.4% | 7.0% | |
| | | | 4.7% to 10.0% | 9.3% | |

2.3 Test results of matrix effect

Table 18: Test results of matrix effect

| | | | | |
|---|---|---|---|---|
| AST-2660<br>Precision of the intra-assay matrix (%) | LLOQQC<br>QC4 | 0.500ng/ml<br>150ng/ml | At least two thirds of the QC repeat samples have a RE which must be within ±20.0% (LLOQQC), or within ±15.0% (QC4). | Meeting the acceptable requirements. |
| AST-2660<br>Matrix effect (mean matrix factor) | QC1<br>QC4 | 1.50ng/ml<br>150ng/ml | 0.82, CV%: 31.3%<br>0.69, CV%: 33.6% | No standard limit |
| AST-2660<br>Matrix effect (internal standard-normalized matrix factor) | QC1<br>QC4 | 1.50ng/ml<br>150ng/ml | 1.08, CV%: 10.0%<br>0.972, CV%: 9.5% | Meeting the acceptable requirements. |

According to the results in Table 18, it can be seen that the inter-assay matrix accuracy and precision (CV) of the matrix effect of AST-2660 were both less than 15%, which met the requirements.

2.4 Stability

Table 19: Stability results of AST-2660 working solution

| | | | |
|---|---|---|---|
| The experimental table stability of AST-2660 in human urine at room temperature for 4 hours | Accuracy and precision at three concentration levels (1.5ng/ml, 150ng/ml and 1500ng/ml) | CV: ≤8.8%<br>RE: -8.5% to 4.5% | Meeting the acceptable requirements |
| The freezing/thawing stability of AST-2660 at -70°C for up to 3 cycles | Accuracy and precision at three concentration levels (1.5ng/ml, 150ng/ml and 1500ng/ml) | CV: ≤11.5%<br>RE:-11.8% to 12.5% | Meeting the acceptable requirements |
| The stability of AST-2660 at -70°C for 34 days. | Accuracy and precision at three concentration levels (1.5ng/ml, 150ng/ml and 1500ng/ml) | CV: ≤11.3%<br>RE: -1.2% to -13.7% | Meeting the acceptable requirements |

It can be seen from Table 19 that the accuracy of the stability of AST-2660 working solution was within ±11.8%, and the precision was less than 11.5%. Stability analysis criteria: the difference between the storage stability solution and the freshly prepared solution must be within ±10.0%, and the CV of the each replicate experiment must not be greater than 15.0%. Therefore, AST-2660 working solution had good stability and met the requirements under various storage conditions.

The liquid chromatography-tandem mass spectrometry method established in this example for detecting AST-2660 in human urine met the analysis requirements of biological sample: the sample processing method is simple and convenient; and this method had high sensitivity, precision, and accuracy.

**Example 7 Detection of the content of AST-2660 in actual human urine**

The detection method established in example 6 was used to detect the content of AST-2660 in the human urine to be tested.

The standard operating procedure (SOP) for detection established after the methodology and validation according to example 6 was as follows:

Step 1. Formulation of solution

Matrix: the mixed normal human urine containing an additive $Na_2HPO_4$•$12H_2O$.

a: the internal standard working solution: AST-2660-D8 was taken, dissolved with methanol, and diluted to prepare

a solution containing about 100 ng per 1 ml.

b: the solution to be tested (no internal standard compound was added to the solution to be tested at this time): it was obtained by taking a blood sample to be tested.

c: the standard working solution (no internal standard compound was added to the standard working solution at this time): an appropriate amount of AST-2660 was taken and accurately weighed, dissolved with methanol and diluted to prepare a solution containing about 1.0 mg per 1 ml, which was used as the standard working stock solution. An appropriate amount of the standard working stock solution was taken, added with the matrix and diluted to prepare standard working solutions with different concentrations containing about 200 ng, 160 ng, 100 ng, 50 ng, 10 ng, 2.0 ng, 1.0 ng and 0.5 ng per 1 ml, respectively. (The solution was stored at -70°C.)

d: the quality control sample solution: an appropriate amount of AST-2660 was taken and accurately weighed, dissolved with methanol, and diluted to prepare a solution containing about 10 μg per 1 ml, which was used as the quality control working stock solution. An appropriate amount of the quality control working stock solution was taken, and added with the matrix to prepare quality control working solutions with different concentrations containing about 150 ng, 60 ng, 15 ng, 1.5 ng and 0.5 ng per 1 ml. (The solution was stored at -70°C.)

Step 2. Extraction of sample

The solution to be tested, the standard working solution and the quality control sample solution were thawed at room temperature and mixed uniformly. 100 μl of the above solution was respectively taken, added with 20 μl of the internal standard and 500 μl of methanol, and vortexed for 3 minutes to mix uniformly, and then centrifuged for 30 minutes at 2143rcf. 450 μl of supernatant was taken, and then centrifuged for 10 minutes in a 96-well plate at 2143rcf. It was obtained by taking 300 μl of supernatant.
100 μl of the blank human urine was taken, added with 20 μl of methanol and extracted with the same method to obtain the blank sample.
100 μl of the blank human urine was taken, added with 20 μl of the internal standard working solution and extracted with the same method to obtain the zero-concentration sample.
After sample extraction and the addition of internal standard, the solution was injected into LC-MS/MS for detection in step 4.

Step 3. Setting up chromatography-mass spectrometry test conditions

Determination was performed using liquid chromatography-tandem mass spectrometry (LC-MS/MS), and the following instrument test conditions were set up:
Liquid phase conditions: A SHARC 1, 3μm, 2.1*50mm or chromatograph column with equivalent performance was used; methanol solution containing low content of ammonium acetate was used; mobile phase B was acetonitrile; the gradient elution was performed according to the following table; column temperature: 20°C; injection volume: 5 μl.

Table 20: The gradient elution conditions for testing with the liquid chromatograph in Example 7

| Time | Flow Rate | %A | %B |
|---|---|---|---|
| Initial | 0.8 | 15 | 85 |
| 1.5 | 0.8 | 50 | 50 |
| 2.0 | 0.8 | 90 | 10 |
| 2.5 | 0.8 | 15 | 85 |

Mass spectrometric conditions: electrospray ion source with negative ion scanning mode; spray potential: -4500 V; ion source temperature: 500°C; collision energy (CE): -22eV; declustering potential (DP): -55V; entrance potential (EP): -10V; collision chamber exit potential (CXP): -16V; dwell time: 100ms; high purity nitrogen was used for all gases; AST-2660 ions pairs: m/z 147.0 → m/z 62.9; the internal standard AST-2660-D8 ion pairs: m/z 155.0 → m/z 62.9.

Step 4. Determination

The AST-2660 standard working solution, blank sample, zero concentration sample, solution to be tested and

quality control working solution with different concentrations after extraction were respectively taken and injected into LC-MS/MS for detection.

Acceptance criteria: the recovered concentration of the standard working solution, and the accuracy of the quality control working solution and the peak residue of AST-2660 and the internal standard in the blank sample should meet the requirements in Chinese Pharmacopoeia (2020 edition), Vol. 4, 9012.

The prepared standard working solutions of metabolites II with different concentrations were absorbed and injected into the LC-MS/MS system for detection to obtain a relationship function y = f (x), wherein y represents the ratio of the peak area of the metabolite II to that of the internal standard compound, and x represents the concentration of the metabolite II in the standard working solutions;

Calculation results: the relationship function y = f (x) of the ratio of the peak area of AST-2660 to that of the internal standard was obtained from AST-2660 standard working solutions with different concentrations. The ratio of the peak area of AST-2660 to that of the internal standard was determined from the solution to be tested after extraction, and substituted into the relationship function y = f (x) to calculate the concentration of the metabolite II in the solution to be tested.

The relationship function was used to determine and calculate the concentration of the metabolite II in the solution to be tested with unknown concentration. The solution to be tested added with the internal standard compound with known content was absorbed and injected into the LC-MS/MS system for detection. The ratio y of the peak area of the metabolite II to that of the internal standard compound was determined and substituted into the function y = f (x) to obtain the concentration x of the metabolite II in the solution to be tested.

As an option, the order of the above SOP related operation steps was slighted changed to obtain the following operation SOP:

A biological sample solution to be tested was added with a quantitative internal standard compound and taken as a solution to be tested after extraction treatment;

A series of solutions of metabolite II with different concentrations were obtained by diluting a metabolite II reference substance, added with the quantitative internal standard compound and taken as a standard working solution after extraction treatment; the series of standard working solutions were absorbed, respectively, injected into an LC-MS/MS system for detection to obtain the peak area of the metabolite II and the internal standard compounds, the ratio of the peak area of the metabolite II to that of the internal standard compounds was taken as an ordinate and the concentration of the metabolite II was taken as an abscissa to draw a standard curve and calculate a regression equation;

The solution to be tested was absorbed, and injected into the LC-MS/MS system for detection; the ratio of the peak area of the metabolite II to that of the deuterated compound I in the solution to be tested was determined, substituted into the regression equation to obtain the content of the metabolite II in the biological sample solution to be tested.

The solutions with the same concentration were prepared by using containers with the same volume according to the habits of laboratory operators using the above changed SOP. This operation only needs to ensure that the volume of the added solution was the same, and the obtained standard working solution was still with the same concentration.

Figures 11 to 14 are some typical spectra of the detection process of urine samples.

Figure 11 is typical LC-MS/MS spectra of AST-2660 and the internal standard AST-2660-D8 in blank human urine extracts.

Figure 12 is typical LC-MS/MS spectra of AST-2660 and the internal standard AST-2660-D8 in zero concentration of urine sample extracts.

Figure 13 is typical LC-MS/MS spectra of AST-2660 and the internal standard AST-2660-D8 in standard sample solution of human urine extracts (0.50 ng/ml).

Figure 14 is typical LC-MS/MS spectra of AST-2660 and the internal standard AST-2660-D8 in standard sample solution of human urine extracts (200 ng/ml).

Some of the samples were detected using the operating procedures for the detection of AST-2660 content in human urine provided in this example. The results were shown in Tables 21-24 below.

Table 21: Stability study data of AST-2660 in human urine at -20°C and -70°C for one month

| Stability study data of AST-2660 in human urine at -20°C for one month | | Stability study data of AST-2660 in human urine at -70°C for one month | |
|---|---|---|---|
| Analysis batch 12 | 32 days at -20°C | Analysis batch 13 | 32 days at -70°C |
| QC1 1.50ng/ml | <LLOQ (0.500) | QC1 1.50ng/ml (This set of data was actually tested on day 34) | 1.53 |
| | <LLOQ (0.500) | | 1.97 |
| | <LLOQ (0.500) | | 1.72 |
| | <LLOQ (0.500) | | 1.60 |
| Mean value | NA | Mean value | 1.71 |
| SD | NA | SD | 0.193 |
| CV (%) | NA | CV (%) | 11.3 |
| RE (%) | NA | RE (%) | 13.7 |
| n | 4 | n | 4 |
| QC4 150ng/ml | 13.1 | QC4 150ng/ml | 155 |
| | 12.4 | | 159 |
| | 12.9 | | 161 |
| | 15.2 | | 168 |
| Mean value | 13.4 | Mean value | 161 |
| SD | 1.24 | SD | 5.44 |
| CV (%) | 9.2 | CV (%) | 3.4 |
| RE (%) | -91.1 | RE (%) | 7.2 |
| n | 4 | n | 4 |
| DilQC (10-fold dilution) 1500ng/ml | 6.87 | DilQC (10-fold dilution) 1500ng/ml | 1570 |
| | 7.70 | | 1400 |
| | 7.73 | | 1470 |
| | 6.60 | | 1490 |
| Mean value | 7.23 | Mean value | 1483 |
| SD | 0.577 | SD | 69.9 |
| CV (%) | 8.0 | CV (%) | 4.7 |
| RE (%) | -99.5 | RE (%) | -1.2 |
| n | 4 | n | 4 |

Obviously, the human urine containing AST-2660 had almost no reduction in AST-2660 content after 32 days of storage at -70°C, whereas it was reduced by nearly 90% at -20°C. Therefore, the human urine samples containing AST-2660 must be stored at -70°C, under such conditions the samples stored for 32 days were still stable.

Table 22: Freeze/thaw stability study data of AST-2660 in human urine at -20°C and -70°C

| AST-2660 concentration (ng/ml) | | | | |
|---|---|---|---|---|
| Analysis batch 13 | 5 cycles at -20°C[a] | Analysis batch 13 | 3 cycles at -70°C[a] | 5 cycles at -70°C[a] |
| QC1 | <LLOQ (0.500) | QC1 | 1.47 | 1.68 |
| | <LLOQ (0.500) | | 1.51 | 1.52 |

(continued)

| AST-2660 concentration (ng/ml) | | | | |
|---|---|---|---|---|
| Analysis batch 13 | 5 cycles at -20°C[a] | Analysis batch 13 | 3 cycles at -70°C[a] | 5 cycles at -70°C[a] |
| 1.50ng/ml | <LLOQ (0.500) | 1.50ng/ml | 1.69 | 2.14 |
| | <LLOQ (0.500) | | 1.72 | 1.58 |
| Mean value | NA | Mean value | 1.60 | 1.73 |
| SD | NA | SD | 0.13 | 0.281 |
| CV (%) | NA | CV (%) | 7.9 | 16.3 |
| RE (%) | NA | RE (%) | 6.5 | 15.3 |
| n | 4 | n | 4 | 4 |
| QC4 150ng/ml | 12.2 | QC4 150ng/ml | 145 | 172 |
| | 13.0 | | 148 | 172 |
| | 12.3 | | 154 | 169 |
| | 12.5 | | 148 | 178 |
| Mean value | 13 | Mean value | 149 | 173 |
| SD | 0.36 | SD | 4 | 3.77 |
| CV (%) | 2.8 | CV (%) | 2.5 | 2.2 |
| RE (%) | -91.7 | RE (%) | -0.8 | 15.2 |
| n | 4 | n | 4 | 4 |
| DilQC (10-fold dilution) 1500ng/ml | <LLOQ (5.00) | DilQC (10-fold dilution) 1500ng/ml | 1650 | 1490 |
| | <LLOQ (5.00) | | 1500 | 1500 |
| | <LLOQ (5.00) | | 1510 | 1500 |
| | <LLOQ (5.00) | | 1500 | 1540 |
| Mean value | NA | Mean value | 1540 | 1508 |
| SD | NA | SD | 73 | 22.2 |
| CV (%) | NA | CV (%) | 4.8 | 1.5 |
| RE (%) | NA | RE (%) | 2.7 | 0.5 |
| n | 4 | n | 4 | 4 |
| [a]Freeze-thaw cycle stability samples were first frozen at nominal temperatures of -20°C and -70°C for at least 24 hours and then thawed at room temperature. Samples were frozen for at least 12 hours for subsequent cycles. | | | | |

Obviously, the human urine containing AST-2660 had almost no reduction in AST-2660 content during the freeze-thaw process from -70°C to room temperature, while it was reduced by nearly 90% during the freeze-thaw process from -20°C to room temperature; that is, according to the data in Table 22, it can be seen that the sharp temperature changes of the samples in human plasma stored at -70°C from the storage condition to room temperature for the experimental process did not affect the stability of AST-2660 in human plasma samples.

Table 23: Stability of human urine sample treated at room temperature (the change of AST-2660 content

| Analysis batch 13 | Concentration | | |
|---|---|---|---|
| | PSS_QC1 1.5ng/ml | PSS_QC3 60ng/ml | PSS_QC4 150ng/ml |
| t=94 hours | 1.36 | 57.2 | 144 |
| | 1.33 | 56.6 | 150 |
| | 1.37 | 59.1 | 149 |
| | 1.44 | 59.1 | 149 |
| | 1.46 | 58.9 | 147 |
| | 1.32 | 60.1 | 154 |
| Mean value | 1.38 | 58.5 | 149 |
| SD | 0.0576 | 1.32 | 3.31 |
| CV (%) | 4.2 | 2.3 | 2.2 |
| RE (%) | -8.0 | -2.5 | -0.8 |
| n | 6 | 6 | 6 |

Table 24: The experimental table stability study data of AST-2660 in human urine at room temperature

| AST-2660 concentration | | | |
|---|---|---|---|
| Analysis batch 20 | 0 hour | 4 hours | 24 hours |
| QC1 1.50ng/ml | 1.27 | 1.59 | 1.61 |
| | 1.37 | 1.36 | 1.87 |
| | 1.41 | 1.32 | 2.05 |
| | 1.44 | 1.51 | 2.07 |
| Mean value | 1.37 | 1.45 | 1.90 |
| SD | 0.0741 | 0.127 | 0.213 |
| CV (%) | 5.4 | 8.8 | 11.2 |
| RE (%) | -8.5 | -3.7 | 26.7 |
| n | 4 | 4 | 4 |
| QC4 150ng/ml | 141 | 156 | 149 |
| | 144 | 154 | 154 |
| | 142 | 159 | 149 |
| | 146 | 158 | 153 |
| Mean value | 143 | 157 | 151 |
| SD | 2.22 | 2.22 | 2.63 |
| CV (%) | 1.5 | 1.4 | 1.7 |
| RE (%) | -4.5 | 4.5 | 0.8 |
| n | 4 | 4 | 4 |
| DilQC (10-fold dilution) 1500ng/ml | 1350 | 1390 | 1300 |
| | 1430 | 1410 | 1300 |
| | 1400 | 1430 | 1310 |
| | 1480 | 1430 | 1300 |

(continued)

| AST-2660 concentration | | | |
|---|---|---|---|
| Analysis batch 20 | 0 hour | 4 hours | 24 hours |
| Mean value | 1415 | 1415 | 1303 |
| SD | 54.5 | 19.1 | 5.00 |
| CV (%) | 3.8 | 1.4 | 0.4 |
| RE (%) | -5.7 | -5.7 | -13.2 |
| n | 4 | 4 | 4 |

As can be seen from Table 23, the treated human urine samples containing AST-2660 were stable for 94 hours at room temperature.

As can be seen from Table 24, the untreated human urine samples containing AST-2660 were stable for 24 hours at room temperature. According to the above experimental results, it can be known that:

(1) Human urine samples containing AST-2660 should be stored in the above experimentally validated low environment within 24 hours (at the latest) after collection: stored at -70°C. The samples should be kept as low temperature as possible (room temperature or lower) when they were sent to the DMPK sample testing center laboratory;
(2) The samples should be stored at -70°C or lower of temperature conditions, and it was stable under this condition for 32 days. Moreover, it may be stable for a longer time according to the changing trend;
(3) The treated human urine samples containing AST-2660 were stable for 94 hours at room temperature or lower;
(4) During the process of taking out the stored samples to room temperature, that is, the sharp temperature changes of the samples in human urine stored at -70°C from the storage conditions to room temperature for the experimental process did not affect the stability of AST-2660 in human urine samples. It was allowed that the sample should be placed in a conventional refrigerator or at room temperature after being taken out, and it was stable for up to 24 hours at room temperature.
(5) For the human urine samples, they should be stored at -70°C within 24 hours, preferably within 4 hours, after collection; if treated, the injection detection should be completed within 94 hours at room temperature.

Therefore, in the above operation SOP for urine samples, the urine samples should be stored at -70°C within 24 hours, preferably within 4 hours, after collection and can be stored for 32 days at -70°C; if treated, the injection detection should be completed within 94 hours at room temperature or below; the results detected in compliance with these storage temperatures and times were reliable, otherwise, the results will be untrue and unreliable owing to changes in AST-2660 in the sample during storage.

## Claims

1. A deuterated compound I having a structure as shown in Formula (I):

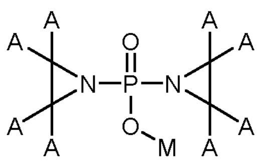 (I),

wherein A is H or D, and at least one of eight As is D;
M is H or an alkali metal, an alkaline earth metal, or an ammonium radical.

2. The deuterated compound I according to claim 1, wherein at least three of the eight As are D.

3. The deuterated compound I according to claim 1, wherein the number of D is 4 or 8.

4. The deuterated compound I according to claim 1, wherein M is Na, K, Li or an ammonium radical.

**5.** The deuterated compound I according to claim 1, wherein the deuterated compound I is a compound having a structure as shown in Formula (I-1) or (I-2):

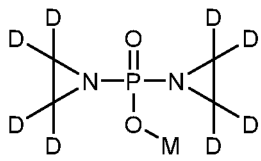
(I-1)
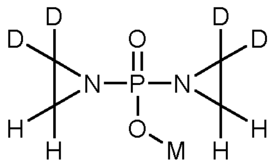
(I-2).

**6.** The deuterated compound I according to claim 1, wherein the deuterated compound I is selected from compounds having the following structures:

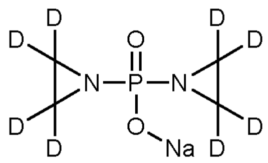
,
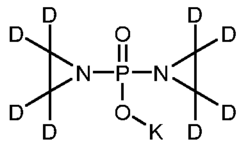
,
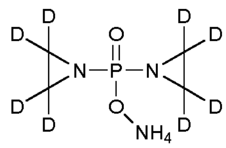
,

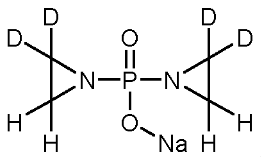
,
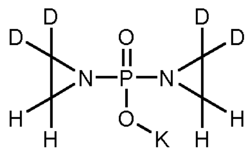
, and
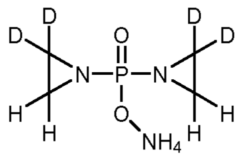
.

**7.** A method for preparing a deuterated compound I, comprising the steps of:

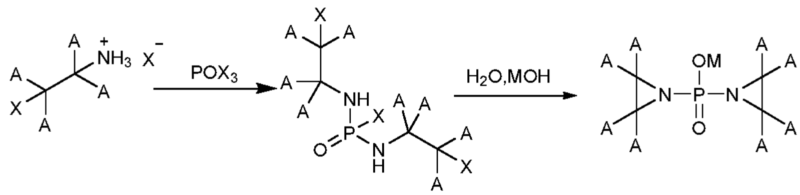


I-a I-b I

reacting compound I-a with phosphorus oxyhalide $POX_3$ to obtain compound I-b; hydrolyzing compound I-b in an aqueous solution with or without a base to correspondingly obtain the deuterated compound I;
wherein compound I-a is deuterated 2-halogenated ethylamine or an inorganic acid salt thereof; A is H or D; and at least one of four As of compound I-a is D; and at least one of eight As of compound I-b and compound I is D; the base in the hydrolysis reaction is selected from MOH, wherein M is an alkali metal, an alkaline earth metal or an ammonium radical; MH, wherein M is an alkali metal; MOR, wherein R is an alkyl group with 1-4 carbon atoms, and M is an alkali metal, carbonate or bicarbonate of alkali metal;
X is halogen.

**8.** The method according to claim 7, wherein compound I-a and the phosphorus oxyhalide $POX_3$ are dissolved in an organic solvent to lower the temperature, and an organic base solution is dropwise added to obtain the compound I-b;

preferably, the temperature is lowered to -78 to -20°C; and/or
preferably, the organic solvent is one or a mixture of two or more of dichloromethane, chloroform, chlorobenzene, 1,2-dichloroethane, ethyl acetate, n-hexane or cyclohexane and tetrahydrofuran; and/or
preferably, the organic base is one or a mixture of two or more of methylamine, ethylamine, propylamine, isopropylamine, N,N-diethylamine, triethylamine, n-butylamine, isobutylamine, 4-dimethylaminopyridine, N,N-diisopropylethylamine, 1,8-diazabicyclo[5.4.0]undec-7-ene, N,N,N',N'-tetramethylethylenediamine, tetramethylguanidine, pyridine, N-methyldicyclohexylamine or dicyclohexylamine; and/or
the reaction of compound I-a with phosphorus oxyhalide $POX_3$ is performed under an atmosphere, wherein the

atmosphere is one of air, nitrogen or argon; preferably, the atmosphere is one of nitrogen or argon; more preferably, the atmosphere is nitrogen.

**9.** A method for measuring the content of the deuterated compound I according to any one of claims 1-6 by using a $^{31}$P-NMR method; preferably, a method for measuring the content of the deuterated compound I in a solution containing the deuterated compound I by using a $^{31}$P-NMR method; or a method for measuring the content of the deuterated compound I according to any one of claims 1-6 by using a liquid chromatography, wherein the liquid chromatography conditions are as follows:

a hydrogen acceptor type stationary phase chromatography column is used;
mobile phase A is methanol solution of ammonium acetate, and mobile phase B is acetonitrile;
mobile phases A and B are used for gradient elution, which gradually increased from 15% by volume ratio to 90% by volume ratio of mobile phase A, and then gradually decreased to 15% by volume ratio of mobile phase A.

**10.** A method for measuring the content of the deuterated compound I according to any one of claims 1-6, comprising the steps of:

detecting $^{31}$P-NMR of the deuterated compound I and the phosphorus-containing compound with known content to obtain their spectra; and
substituting the content of the phosphorus-containing compound with known content to calculate and obtain the content of the deuterated compound I, based on the peak area ratio of the chemical shift characteristic peaks of the deuterated compound I to the phosphorus-containing compound in the $^{31}$P-NMR spectra.

**11.** The method according to claim 10, wherein

the phosphorus-containing compound is preferably a compound containing one phosphorus atom, more preferably is hexamethylphosphoric triamide;
the deuterated compound I and the phosphorus-containing compound with known content are added to the solvent and tested for their $^{31}$P-NMR spectra; preferably, the deuterated compound I and the phosphorus-containing compound with known content are added to water and tested for their $^{31}$P-NMR spectra after they have been dissolved.

**12.** Use of the deuterated compound I according to any one of claims 1-6 as an internal standard for detecting a metabolite II in a biological sample, wherein the metabolite II has a structure as shown in a Formula (II):

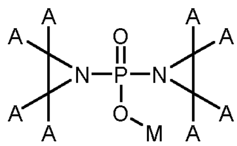 (II),

wherein A is H; M is H or an alkali metal, an alkaline earth metal, or an ammonium radical.

**13.** Use of the deuterated compound I according to any one of claims 1-6 as an internal standard for measuring a content of a metabolite II of an AKR1C3-activated DNA alkylating agent prodrug or a hypoxia-activated DNA alkylating agent prodrug in a biological sample by LC-MS/MS analysis, wherein the metabolite II has a structure as shown in the Formula (II):

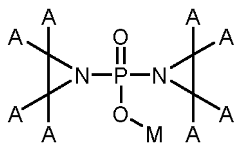 (II),

wherein A is H; M is H or an alkali metal, an alkaline earth metal, or an ammonium radical.

**14.** The use according to claim 13 or 14, wherein the deuterated compound I is selected from

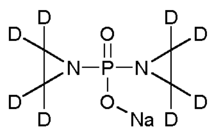, 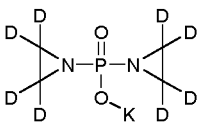, 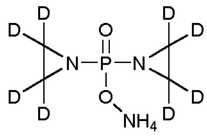,

wherein the metabolite II is selected from

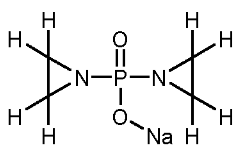, 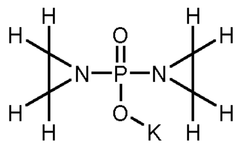, 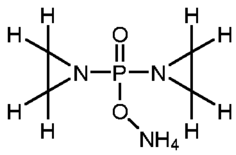.

**15.** The use according to claim 14, wherein the AKR1C3-activated DNA alkylating agent prodrug is selected from the compounds having the following structures as shown in Formulae 1-5:

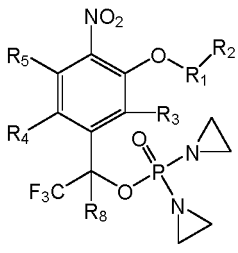 (1) 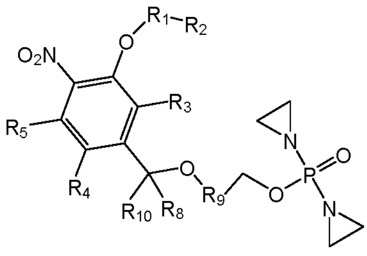 (2),

wherein the definitions of $R_1$, $R_2$, $R_3$, $R_4$, $R_5$, $R_8$, $R_9$, and $R_{10}$ are as described in the claims of Patent Application PCT/CN2020/089692 with Publication No. WO2020228685A1;
or

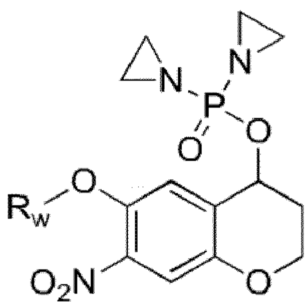 (3),

wherein the definition of Rw is as described in the claims of Patent Application PCT/CN2020/120281 with Publication No. WO2021068952A1;
or

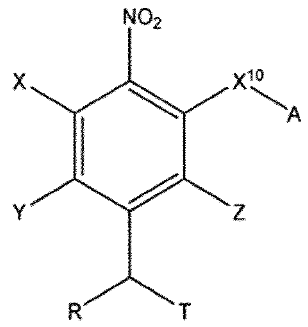

(4),

wherein the definitions of X, Y, Z, R, A and $X^{10}$ are as described in the claims of Patent Application PCT/US2016/021581 with Publication No. WO2016145092A1 (corresponding to Chinese Patent Application No. 2016800150788 with Publication No. CN107530556A), and T is

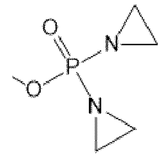

;

or

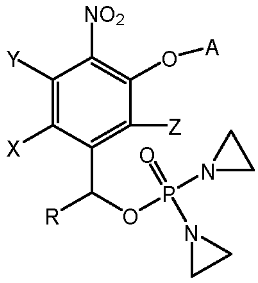

(5)

wherein:

A is a substituted or unsubstituted $C_6$-$C_{10}$ aryl, biaryl or a substituted biaryl, 5-15 membered heteroaryl, or $-N=CR^1R^2$, wherein the substituents are selected from the group consisting of halogeno, -CN, $-NO_2$, $-O-(CH_2)-O-$, $-CO_2H$ and salts thereof, $-OR^{100}$, $-CO_2R^{100}$, $-CONR^{101}R^{102}$, $-NR^{101}R^{102}$, $-NR^{100}SO_2R^{100}$, $-SO_2R^{100}$, $-SO_2NR^{101}R^{102}$, $C_1$-$C_6$ alkyl, and $C_3$-$C_{10}$ heterocyclyl;
wherein $R^{100}$, $R^{101}$ and $R^{102}$ are each independently hydrogen, Ci-Cs alkyl, or $C_6$-$C_{12}$ aryl; or $R^{101}$ and $R^{102}$ together with the nitrogen atom to which they are attached to form a 5-7 membered heterocycle;
wherein the alkyl group and the aryl group are each substituted by 1-3 halogen groups or 1-3 $C_1$-$C_6$ alkyl groups;
$R^1$ and $R^2$ are each independently phenyl or methyl;
X, Y and Z are each independently hydrogen or halogeno; and
R is hydrogen or C1-C6 alkyl or halogen-substituted alkyl.

**16.** The use according to claim 14, wherein the hypoxia-activated DNA alkylating agent prodrug is selected from the group consisting of compounds having a structure as shown in the following structural Formulae 6-12:

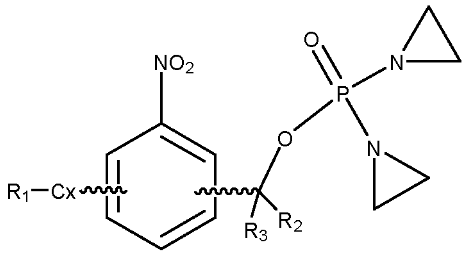

(6)

wherein the definitions of $R_1$, $R_2$, $R_3$ and Cx are as described in the claims of Patent Application PCT/CN2020/114519 with Publication No. WO2021120717A1;
or

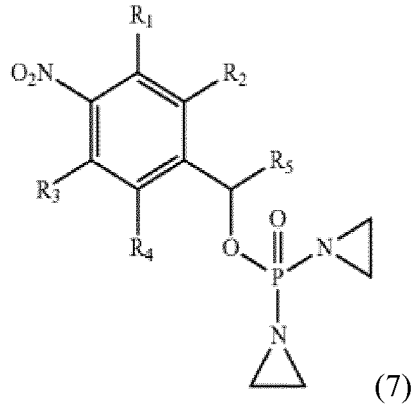

(7)

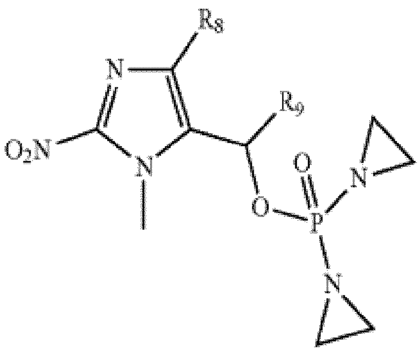

(8)

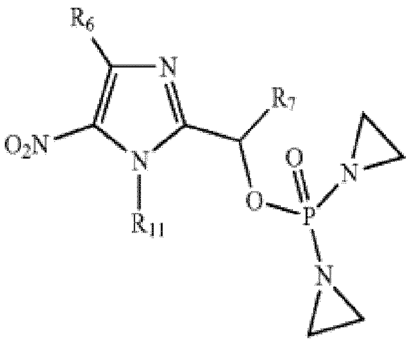

(9)

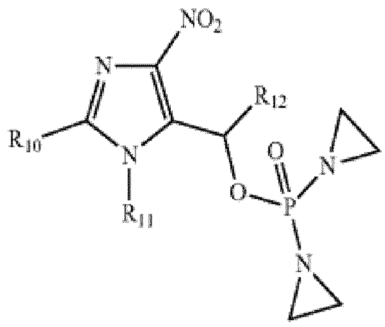

(10)

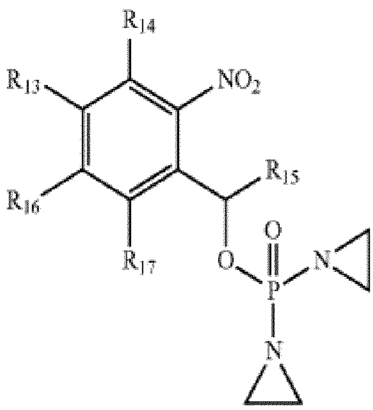

(11)

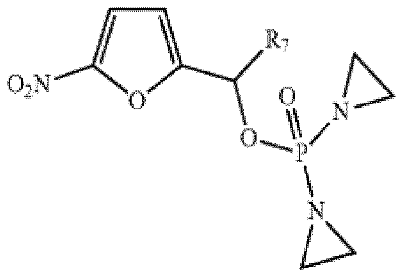

(12)

wherein the definitions of $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, $R_{16}$ and $R_{17}$ are as

described in the claims of Patent Application PCT/US2016/039092 with Publication No. WO2016210175A1 (corresponding to Chinese Patent Application No. 2016800368985 with Publication No. CN108024974A).

**17.** A method for measuring the content of the metabolite in a biological sample, comprising the steps of:

preparing a solution to be tested containing an internal standard compound with known concentration for injection analysis by LC-MS/MS;
preparation of a standard working solution: preparing a series of standard working solutions containing an internal standard compound with known concentration and a metabolite II with known concentration, wherein the concentration of the internal standard compound in the series of standard working solutions is consistent and the same as the concentration of the internal standard compound in the solution to be tested, and the concentration of the metabolite II in the series of standard working solutions is different;
determining a relationship function by liquid chromatography-tandem mass spectrometry (LC-MS/MS): absorbing the prepared standard working solutions of metabolite II with different concentrations, and injecting them into the LC-MS/MS system for detection to obtain the relationship function y = f (x), wherein y represents the ratio of the peak area of the metabolite II to that of the internal standard compound, and x represents the concentration of the metabolite II in the standard working solutions;
determining and calculating the concentration of the metabolite II in the solution to be tested with unknown concentration by using the relationship function: absorbing the solution to be tested added with the internal standard compound with known content, injecting it into the LC-MS/MS system for detection to obtain the ratio y of the peak area of the metabolite II to that of the internal standard compound, substituting it into the function y = f (x) to obtain the concentration x of the metabolite II in the solution to be tested;
wherein the solution to be tested is prepared from the biological sample with or without treatment,
wherein the internal standard compound is a deuterated compound I, which has a structure as shown in a Formula (I):

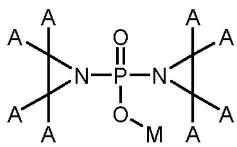 (I),

A is H or D, and at least one of eight As is D;
M is H or an alkali metal, an alkaline earth metal, or an ammonium radical;
wherein the metabolite II has a structure as shown in the formula (II):

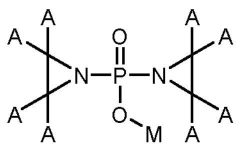 (II),

A is H;
M is H or an alkali metal, an alkaline earth metal, or an ammonium radical.

**18.** A method for measuring the content of the metabolite in a biological sample, comprising the steps of:

adding a quantitative internal standard compound to a biological sample solution to be tested and taking it as a solution to be tested after extraction treatment;
diluting a metabolite II reference substance to obtain a series of standard solutions of metabolite II with different concentrations, adding the quantitative internal standard compound and taking it as a standard working solution after extraction treatment, absorbing the series of standard working solutions, respectively injecting them into an LC-MS/MS system for detection to obtain the peak area of the metabolite II and the internal standard compounds, taking the ratio of the peak area of the metabolite II to that of the internal standard compounds as an ordinate and taking the concentration of the metabolite II as an abscissa to draw a standard curve and calculate a regression equation;
absorbing the solution to be tested, injecting it into the LC-MS/MS system for detection to obtain the ratio of the peak area of the metabolite II to that of the internal standard compound in the solution to be tested, substituting

it into the regression equation to obtain the content of the metabolite II in the solution to be tested; wherein the internal standard is a deuterated compound I, which has a structure as shown in a Formula (I):

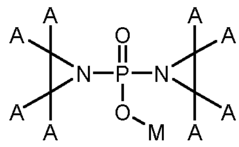 (I),

A is H or D, and at least one of eight As is D;
M is H or an alkali metal, an alkaline earth metal, or an ammonium radical;
wherein the metabolite II has a structure as shown in the formula (II):

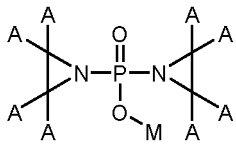 (II),

A is H;
M is H or an alkali metal, an alkaline earth metal, or an ammonium radical.

**19.** The method according to claim 17 or 18, wherein
the conditions for liquid chromatography in liquid chromatography-tandem mass spectrometry are as follows:

a hydrogen acceptor type stationary phase chromatography column is used;
mobile phase A is methanol solution of ammonium acetate, and mobile phase B is acetonitrile;
mobile phases A and B are used for gradient elution: gradually increasing from 15% by volume ratio to 90% by volume ratio of mobile phase A, and then gradually decreasing to 15% by volume ratio of mobile phase A;
the mass spectrometry conditions: electrospray ion source;
in negative ion scanning mode
the monitoring ion pair of the metabolite II is: m/z 147.0 → m/z 62.9;
the monitoring ion pair of the deuterated compound I is: m/z (147.0 + number of deuteration) → m/z 62.9;
or
in positive ion scanning mode
the monitoring ion pair of the metabolite II is: m/z 149.0 → m/z 64.9;
the monitoring ion pair of the deuterated compound I is: m/z (149.0 + number of deuteration) → m/z 64.9.

**20.** The method according to any one of claims 17, 19 and 20, wherein

in the preparation of the solution to be tested containing the deuterated compound I with known content, the deuterated compound I is preferably firstly added into the biological sample solution and then the extraction operation is performed;
correspondingly, in the preparation of the standard working solution, the deuterated compound I is firstly added into a matrix solution containing metabolites II with known different concentrations and then the extraction operation is performed.

**21.** The method according to claim 18 or 20, wherein the biological sample is a urine sample or a plasma sample, and correspondingly, when the urine sample is measured, the corresponding matrix solution is the urine of a patient with an additive and without administration; when the blood sample is measured, the corresponding matrix solution is the plasma of a patient with an anticoagulant and without administration.

**22.** The method according to claim 21, wherein

the operation process for the addition of the deuterated compound and extraction is as follows: the solution to be tested and the standard work solution are added into the solution of the deuterated compound I, methanol is added and mixed uniformly, and a supernatant is obtained by centrifugation;
wherein the additive is $Na_2HPO_4$ or $K_2HPO_4$ and the anticoagulant is $K_2EDTA$ or $Na_2EDTA$.

**23.** The method according to claim 21, wherein

for the blood samples, they should be stored in an environment below -20°C, preferably in an environment at -70°C within 4 hours after collection and can be stored for 28 days at -70°C; if treated, they should be refrigerated at 4°C or below and an injection detection should be completed within 54 hours;
for the urine samples, they should be stored at -70°C within 24 hours, preferably within 4 hours, after collection and can be stored for 32 days at -70°C; if treated, the injection detection should be completed within 94 hours at room temperature or below.

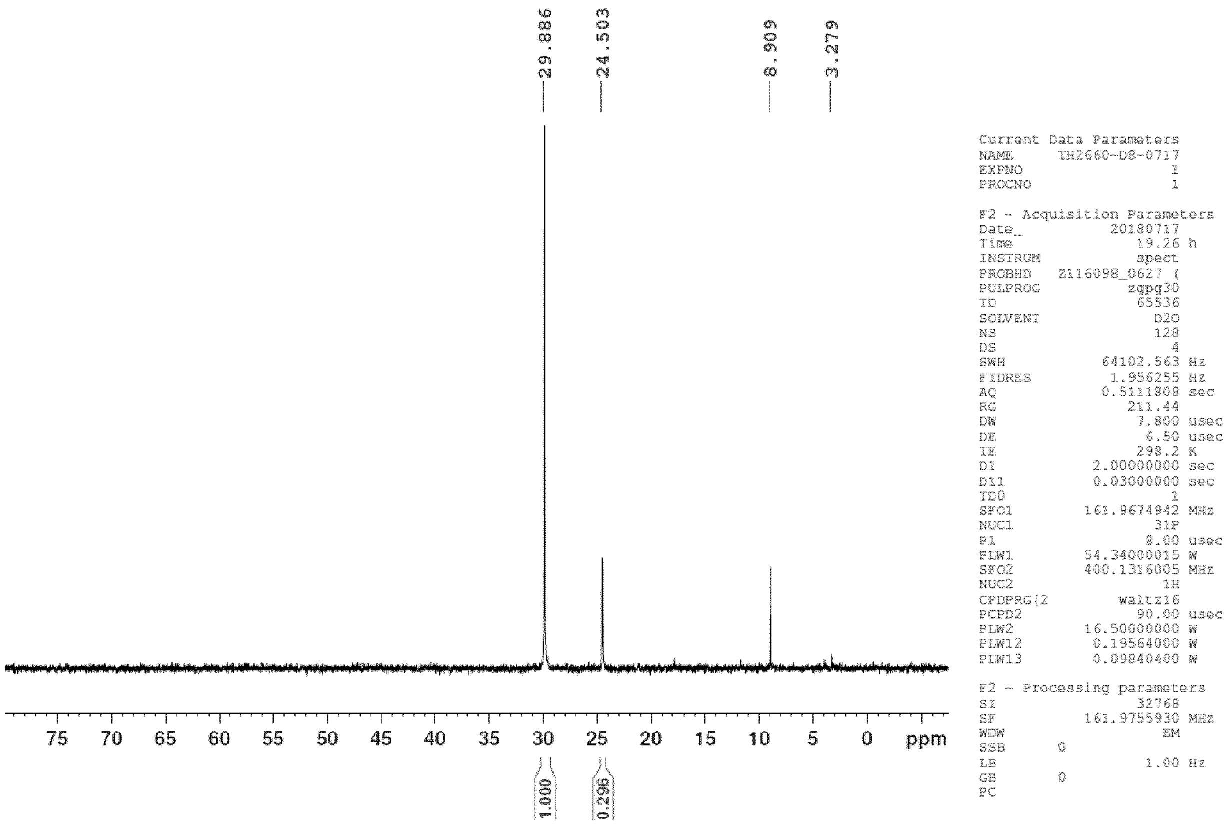
29.886
24.503
8.909
3.279
Current Data Parameters
NAME TH2660-D8-0717
EXPNO 1
PROCNO 1
F2 - Acquisition Parameters
Date_ 20180717
Time 19.26 h
INSTRUM spect
PROBHD Z116098_0627 (
PULPROG zgpg30
TD 65536
SOLVENT D2O
NS 128
DS 4
SWH 64102.563 Hz
FIDRES 1.956255 Hz
AQ 0.5111808 sec
RG 211.44
DW 7.800 usec
DE 6.50 usec
TE 298.2 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC
75 70 65 60 55 50 45 40 35 30 25 20 15 10 5 0 ppm
1.000
0.296

FIG.1

a

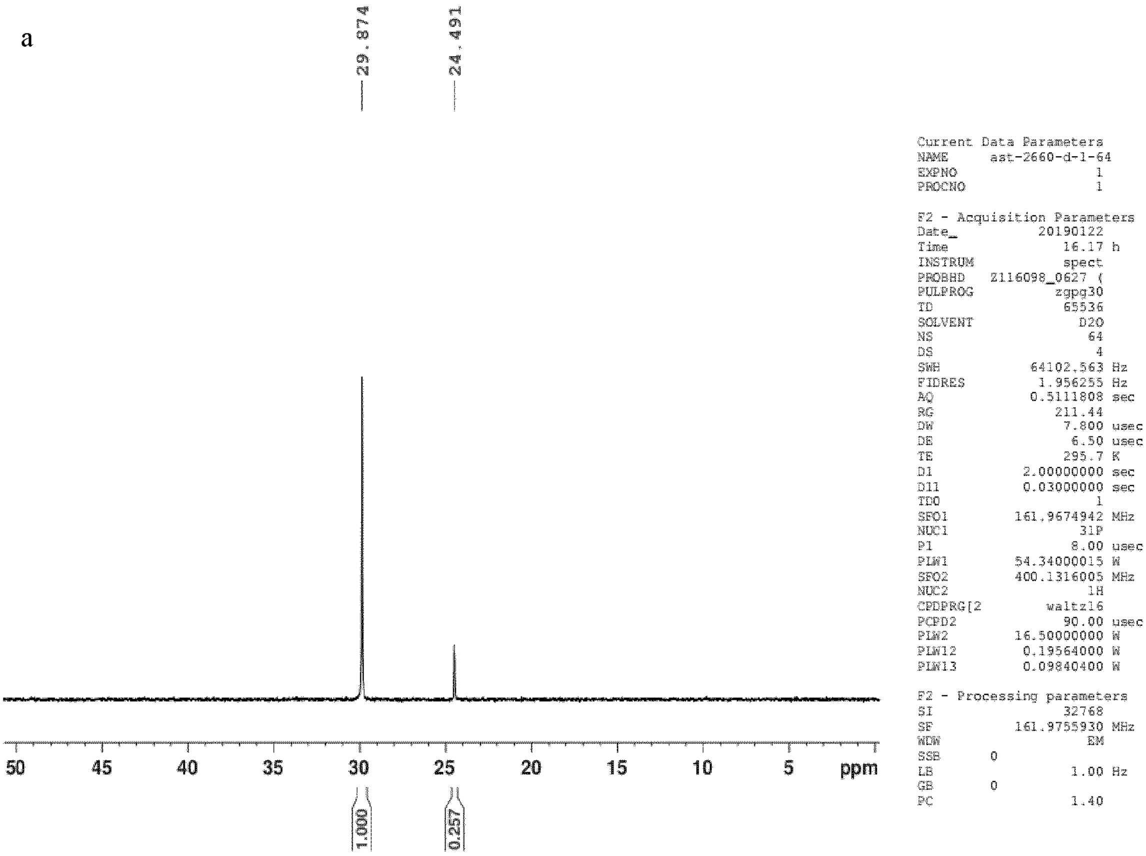
29.874
24.491
Current Data Parameters
NAME ast-2660-d-1-64
EXPNO 1
PROCNO 1
F2 - Acquisition Parameters
Date_ 20190122
Time 16.17 h
INSTRUM spect
PROBHD Z116098_0627 (
PULPROG zgpg30
TD 65536
SOLVENT D2O
NS 64
DS 4
SWH 64102.563 Hz
FIDRES 1.956255 Hz
AQ 0.5111808 sec
RG 211.44
DW 7.800 usec
DE 6.50 usec
TE 295.7 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40
50 45 40 35 30 25 20 15 10 5 ppm
1.000
0.257

b

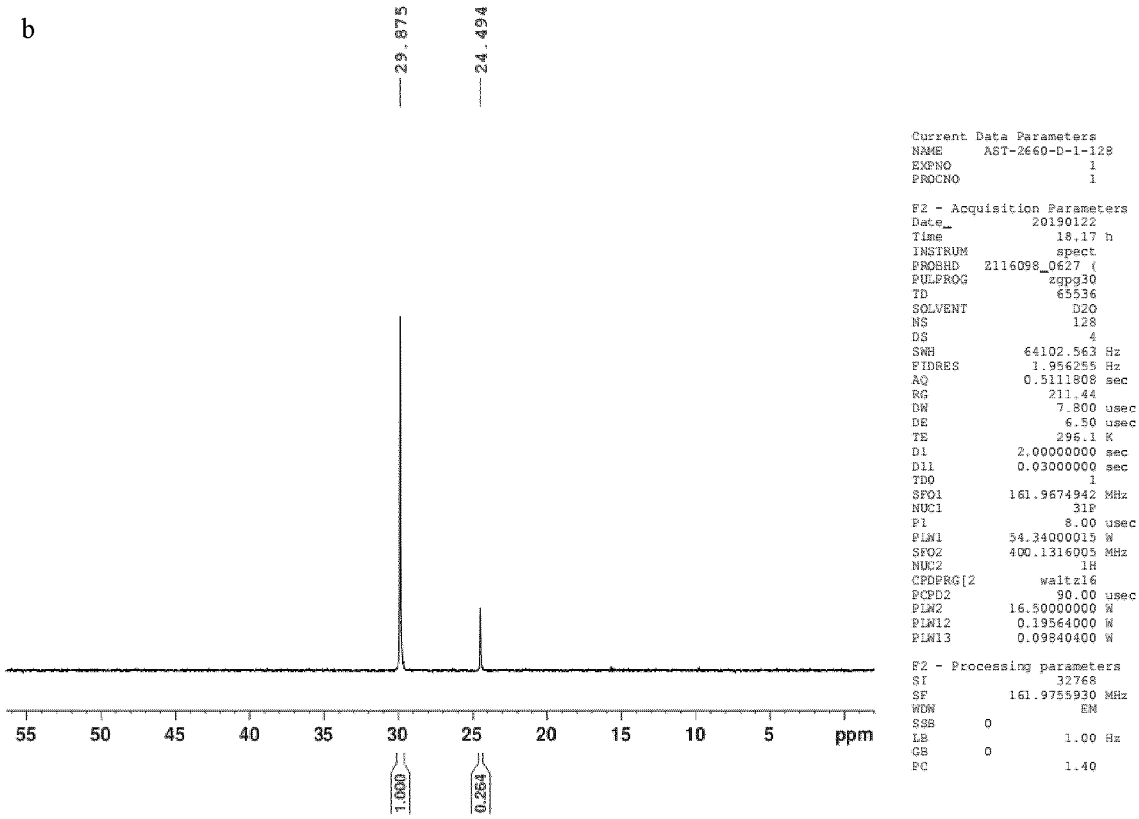
29.875
24.494
Current Data Parameters
NAME AST-2660-D-1-128
EXPNO 1
PROCNO 1
F2 - Acquisition Parameters
Date_ 20190122
Time 18.17 h
INSTRUM spect
PROBHD Z116098_0627 (
PULPROG zgpg30
TD 65536
SOLVENT D2O
NS 128
DS 4
SWH 64102.563 Hz
FIDRES 1.956255 Hz
AQ 0.5111808 sec
RG 211.44
DW 7.800 usec
DE 6.50 usec
TE 296.1 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40
55 50 45 40 35 30 25 20 15 10 5 ppm
1.000
0.264

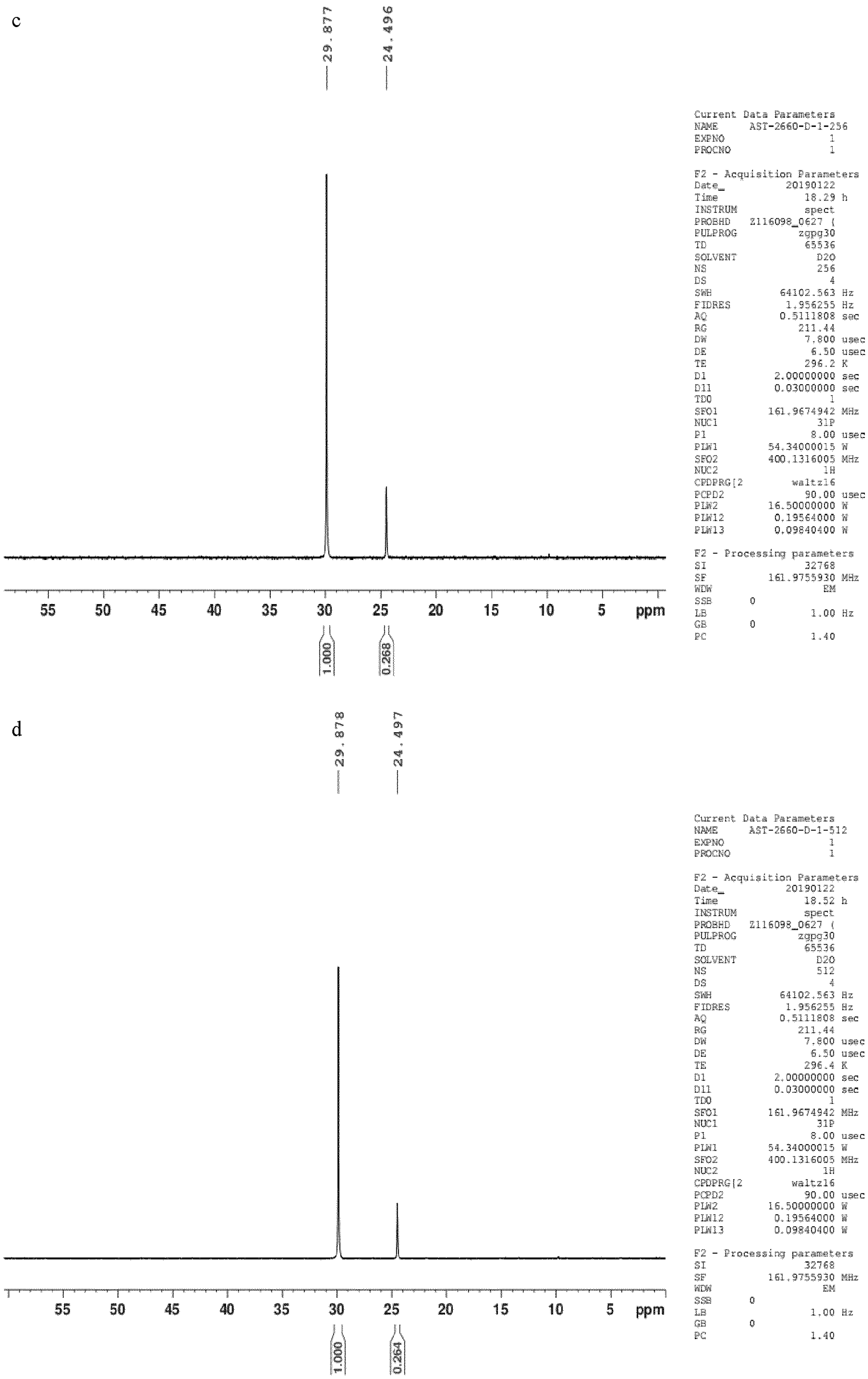
c
29.877
24.496
Current Data Parameters
NAME AST-2660-D-1-256
EXPNO 1
PROCNO 1
F2 - Acquisition Parameters
Date_ 20190122
Time 18.29 h
INSTRUM spect
PROBHD Z116098_0627 (
PULPROG zgpg30
TD 65536
SOLVENT D2O
NS 256
DS 4
SWH 64102.563 Hz
FIDRES 1.956255 Hz
AQ 0.5111808 sec
RG 211.44
DW 7.800 usec
DE 6.50 usec
TE 296.2 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40
55 50 45 40 35 30 25 20 15 10 5 ppm
1.000
0.268
d
29.878
24.497
Current Data Parameters
NAME AST-2660-D-1-512
EXPNO 1
PROCNO 1
F2 - Acquisition Parameters
Date_ 20190122
Time 18.52 h
INSTRUM spect
PROBHD Z116098_0627 (
PULPROG zgpg30
TD 65536
SOLVENT D2O
NS 512
DS 4
SWH 64102.563 Hz
FIDRES 1.956255 Hz
AQ 0.5111808 sec
RG 211.44
DW 7.800 usec
DE 6.50 usec
TE 296.4 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40
55 50 45 40 35 30 25 20 15 10 5 ppm
1.000
0.264

FIG.2

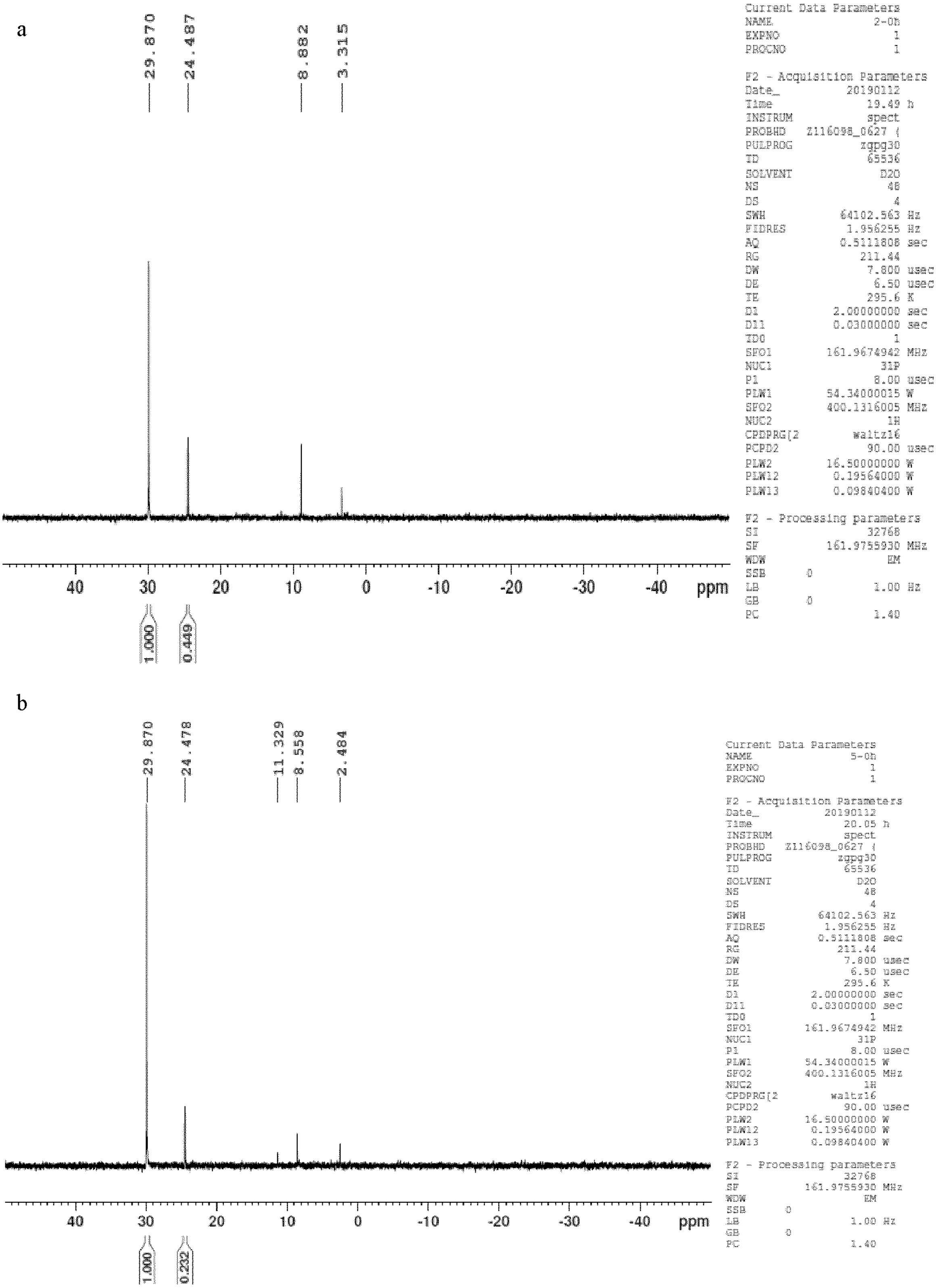
a
29.870
24.487
8.882
3.315
Current Data Parameters
NAME 2-0h
EXPNO 1
PROCNO 1
F2 - Acquisition Parameters
Date_ 20190112
Time 19.49 h
INSTRUM spect
PROBHD Z116098_0627 (
PULPROG zgpg30
TD 65536
SOLVENT D2O
NS 48
DS 4
SWH 64102.563 Hz
FIDRES 1.956255 Hz
AQ 0.5111808 sec
RG 211.44
DW 7.800 usec
DE 6.50 usec
TE 295.6 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40
40 30 20 10 0 -10 -20 -30 -40 ppm
1.000
0.449
b
29.870
24.478
11.329
8.558
2.484
Current Data Parameters
NAME 5-0h
EXPNO 1
PROCNO 1
F2 - Acquisition Parameters
Date_ 20190112
Time 20.05 h
INSTRUM spect
PROBHD Z116098_0627 (
PULPROG zgpg30
TD 65536
SOLVENT D2O
NS 48
DS 4
SWH 64102.563 Hz
FIDRES 1.956255 Hz
AQ 0.5111808 sec
RG 211.44
DW 7.800 usec
DE 6.50 usec
TE 295.6 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40
40 30 20 10 0 -10 -20 -30 -40 ppm
1.000
0.232

FIG.3

a

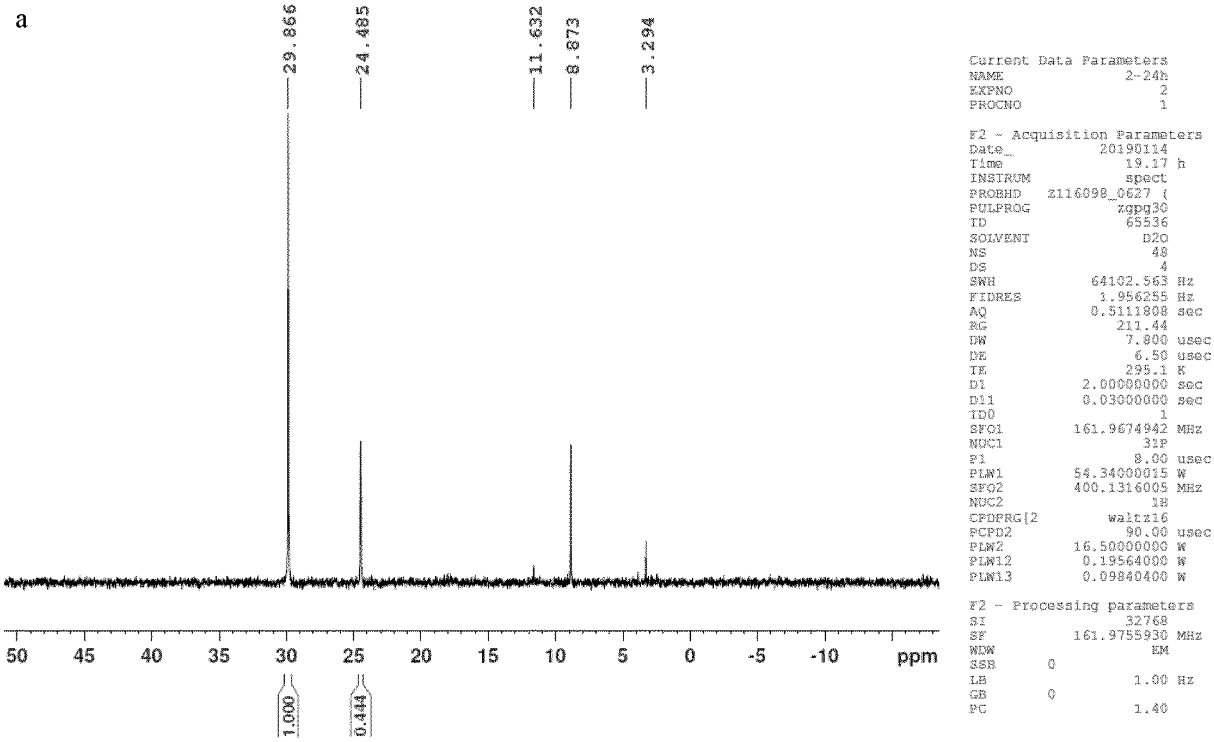
29.866
24.485
11.632
8.873
3.294
50 45 40 35 30 25 20 15 10 5 0 -5 -10 ppm
1.000
0.444
Current Data Parameters
NAME 2-24h
EXPNO 2
PROCNO 1
F2 - Acquisition Parameters
Date_ 20190114
Time 19.17 h
INSTRUM spect
PROBHD Z116098_0627 (
PULPROG zgpg30
TD 65536
SOLVENT D2O
NS 48
DS 4
SWH 64102.563 Hz
FIDRES 1.956255 Hz
AQ 0.5111808 sec
RG 211.44
DW 7.800 usec
DE 6.50 usec
TE 295.1 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40

b

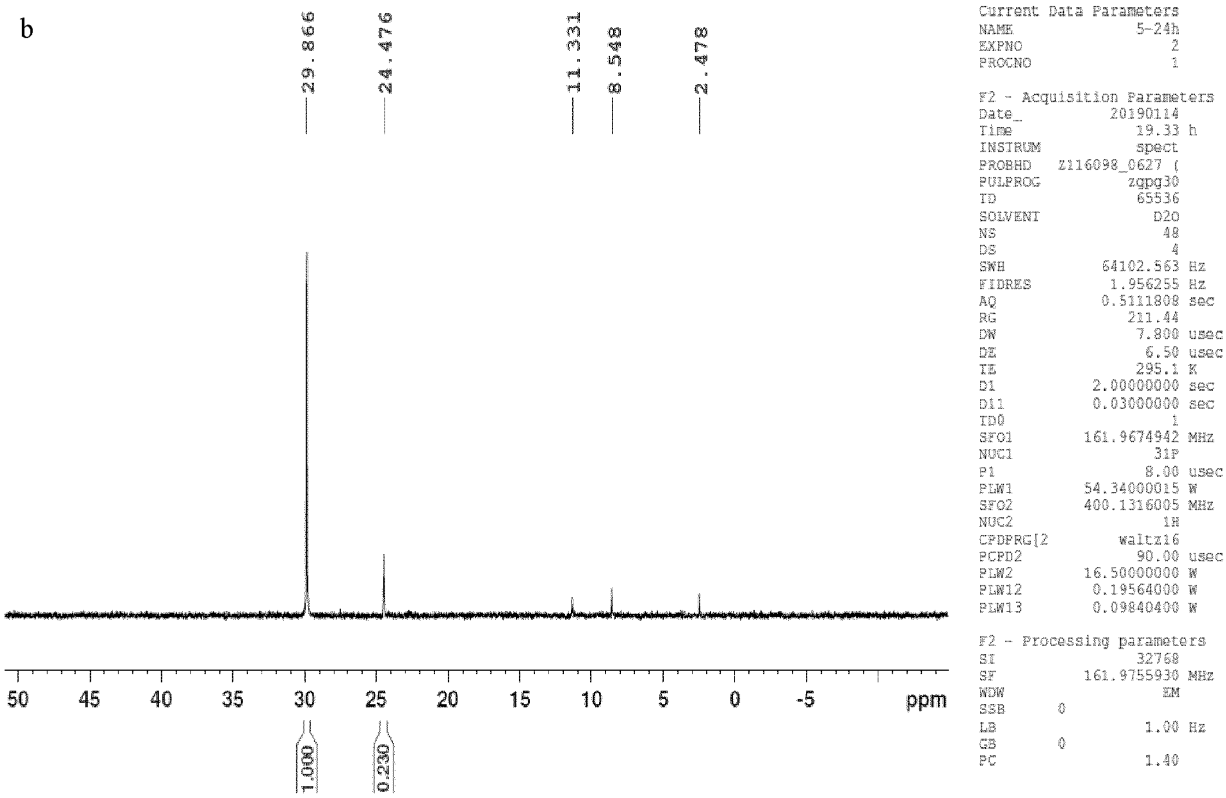
29.866
24.476
11.331
8.548
2.478
50 45 40 35 30 25 20 15 10 5 0 -5 ppm
1.000
0.230
Current Data Parameters
NAME 5-24h
EXPNO 2
PROCNO 1
F2 - Acquisition Parameters
Date_ 20190114
Time 19.33 h
INSTRUM spect
PROBHD Z116098_0627 (
PULPROG zgpg30
TD 65536
SOLVENT D2O
NS 48
DS 4
SWH 64102.563 Hz
FIDRES 1.956255 Hz
AQ 0.5111808 sec
RG 211.44
DW 7.800 usec
DE 6.50 usec
TE 295.1 K
D1 2.00000000 sec
D11 0.03000000 sec
TD0 1
SFO1 161.9674942 MHz
NUC1 31P
P1 8.00 usec
PLW1 54.34000015 W
SFO2 400.1316005 MHz
NUC2 1H
CPDPRG[2 waltz16
PCPD2 90.00 usec
PLW2 16.50000000 W
PLW12 0.19564000 W
PLW13 0.09840400 W
F2 - Processing parameters
SI 32768
SF 161.9755930 MHz
WDW EM
SSB 0
LB 1.00 Hz
GB 0
PC 1.40

FIG.4

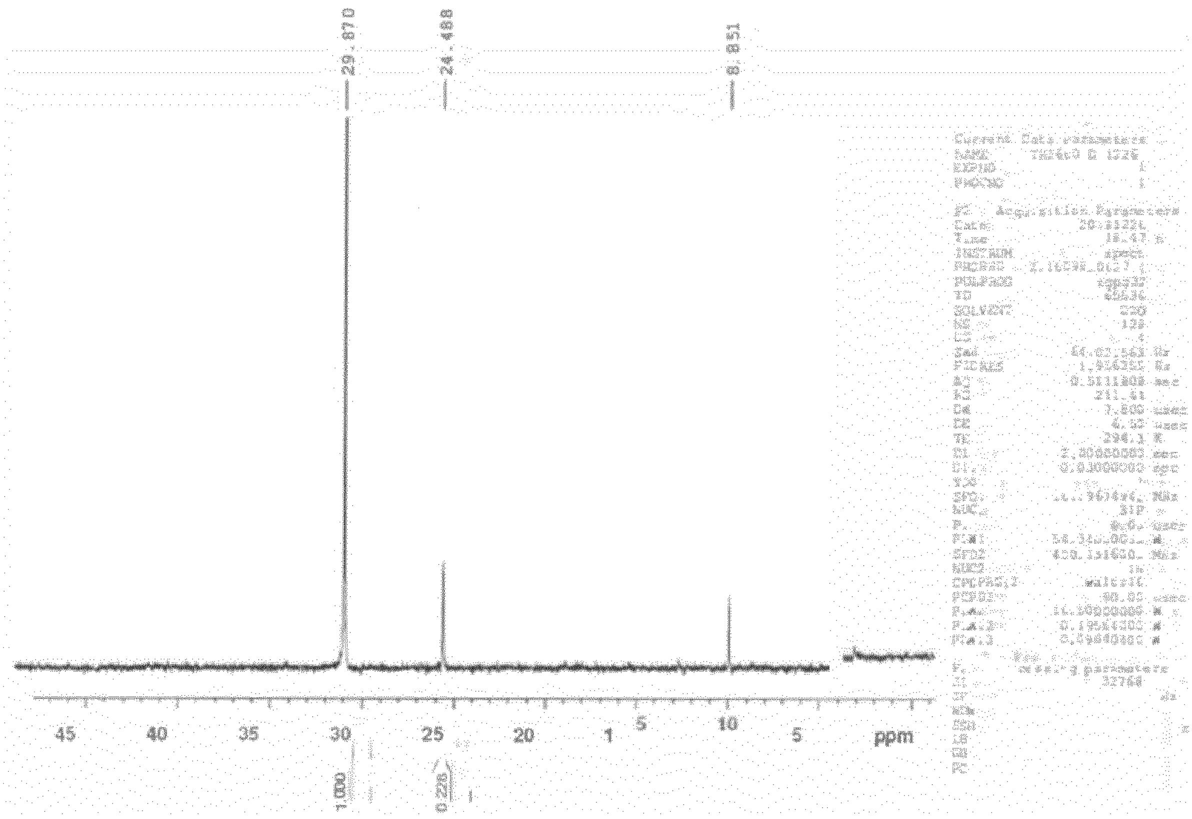
29.870
24.488
8.851
45
40
35
30
25
20
15
10
5
ppm
1.000
0.228

FIG.5

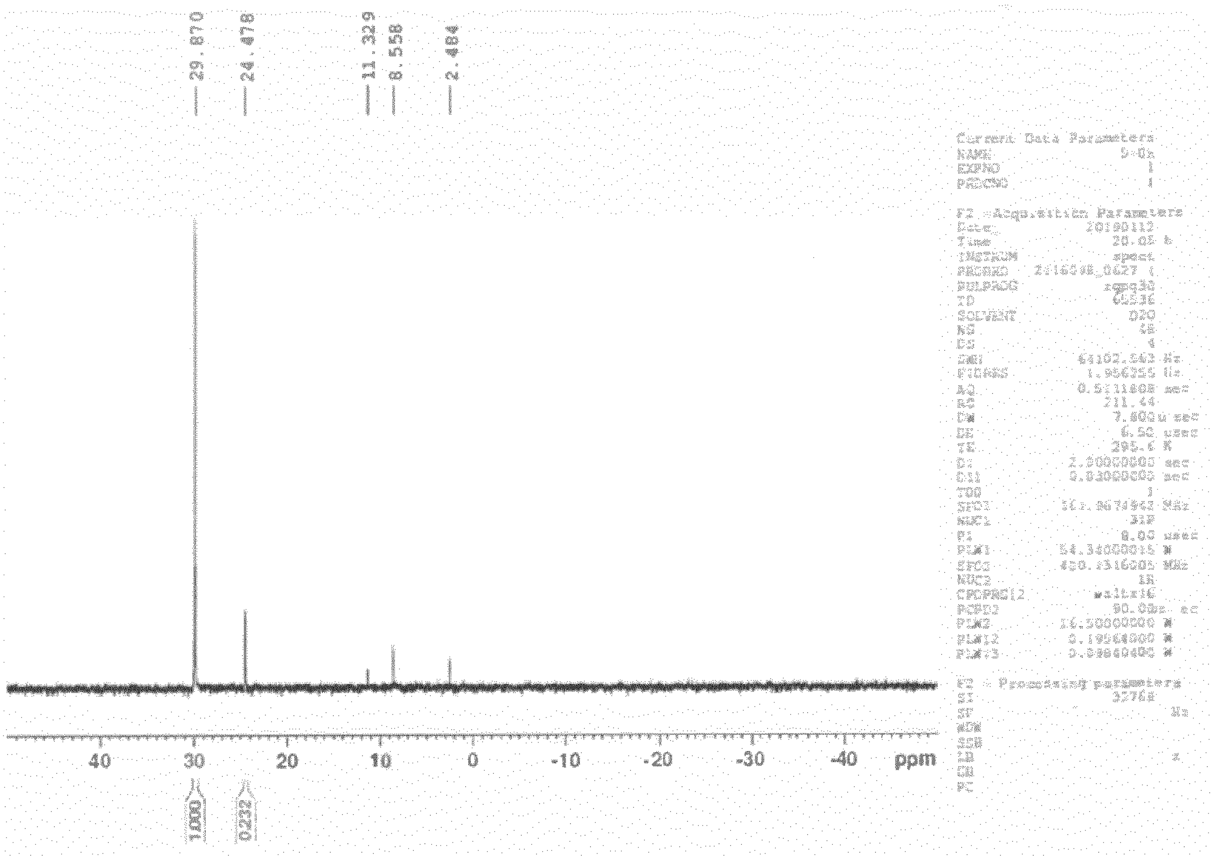
29.870
24.478
11.329
8.558
2.484
40
30
20
10
0
-10
-20
-30
-40
ppm
1.000
0.232

FIG.6

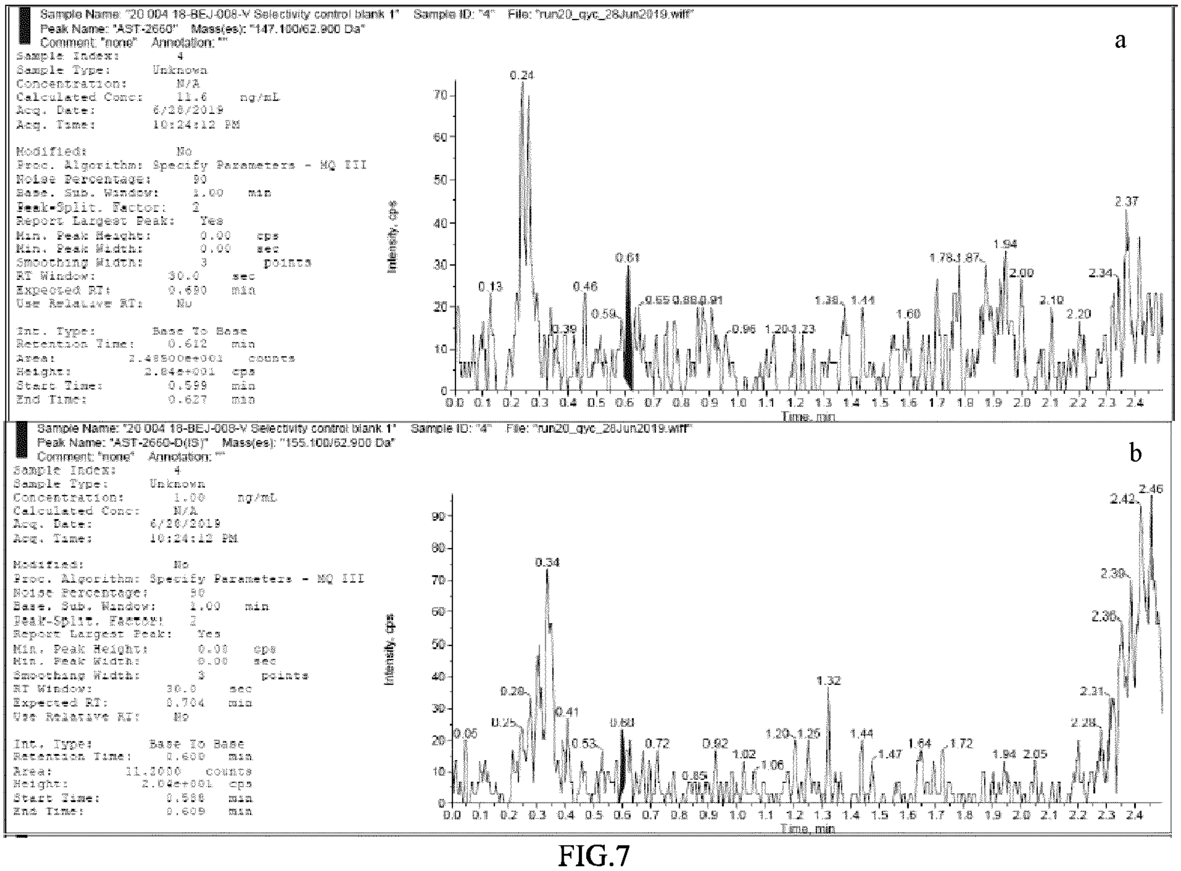


FIG.7

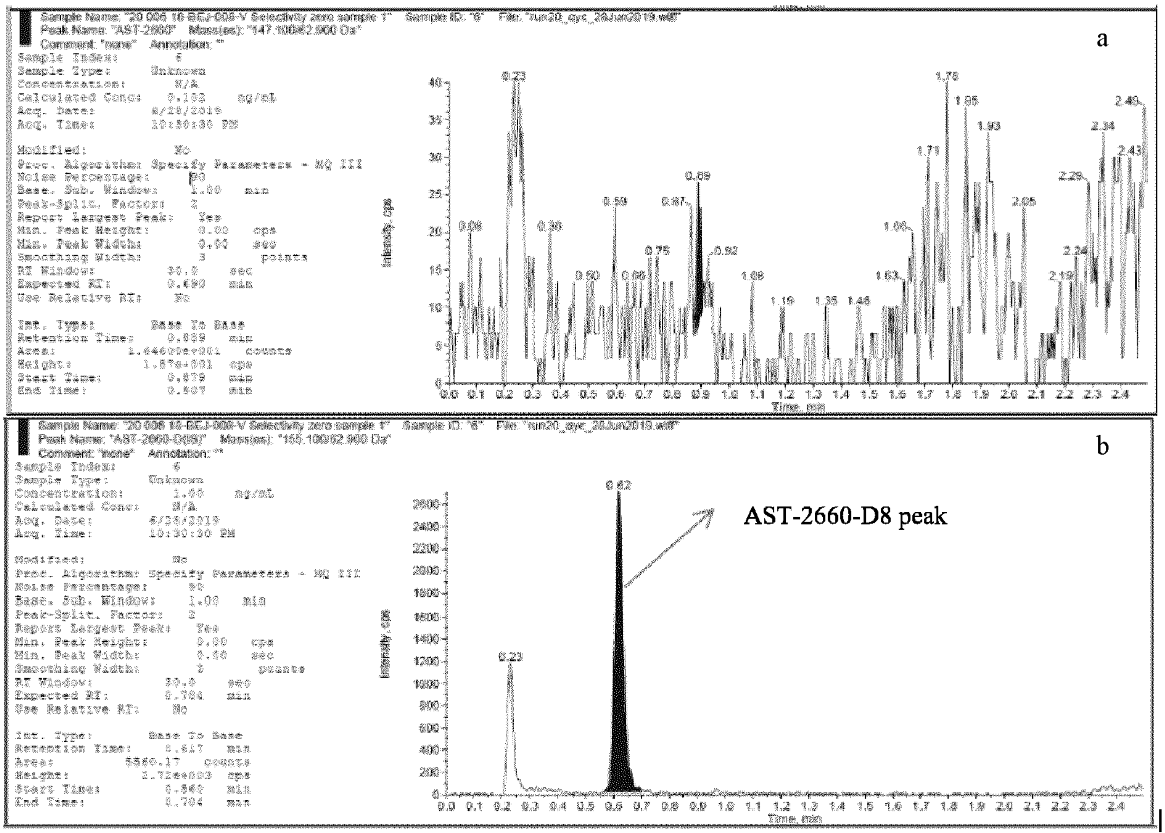


FIG.8

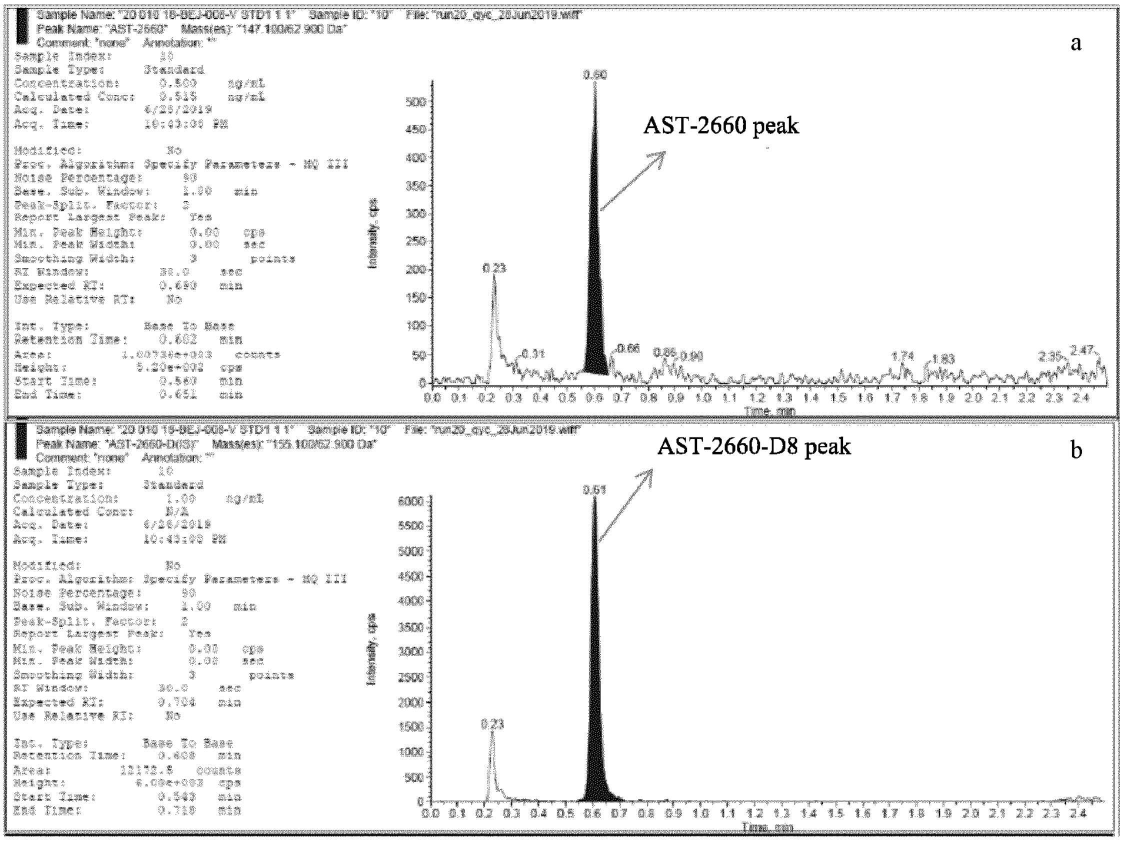
Sample Name: "20 010 18-BEJ-008-V STD1 1 1" Sample ID: "10" File: "run20_qyc_28Jun2019.wiff"
Peak Name: "AST-2660" Mass(es): "147.100/62.900 Da"
Comment: "none" Annotation: ""
Sample Index: 10
Sample Type: Standard
Concentration: 0.500 ng/mL
Calculated Conc: 0.515 ng/mL
Acq. Date: 6/28/2019
Acq. Time: 10:43:00 PM
Modified: No
Proc. Algorithm: Specify Parameters - MQ III
Noise Percentage: 90
Base. Sub. Window: 1.00 min
Peak-Split. Factor: 2
Report Largest Peak: Yes
Min. Peak Height: 0.00 cps
Min. Peak Width: 0.00 sec
Smoothing Width: 3 points
RT Window: 30.0 sec
Expected RT: 0.690 min
Use Relative RT: No
Int. Type: Base To Base
Retention Time: 0.602 min
Area: 1.00736e+003 counts
Height: 5.20e+002 cps
Start Time: 0.560 min
End Time: 0.651 min
a
AST-2660 peak
Intensity, cps
Time, min
Sample Name: "20 010 18-BEJ-008-V STD1 1 1" Sample ID: "10" File: "run20_qyc_28Jun2019.wiff"
Peak Name: "AST-2660-D(IS)" Mass(es): "155.100/62.900 Da"
Comment: "none" Annotation: ""
Sample Index: 10
Sample Type: Standard
Concentration: 1.00 ng/mL
Calculated Conc: N/A
Acq. Date: 6/28/2019
Acq. Time: 10:43:00 PM
Modified: No
Proc. Algorithm: Specify Parameters - MQ III
Noise Percentage: 90
Base. Sub. Window: 1.00 min
Peak-Split. Factor: 2
Report Largest Peak: Yes
Min. Peak Height: 0.00 cps
Min. Peak Width: 0.00 sec
Smoothing Width: 3 points
RT Window: 30.0 sec
Expected RT: 0.704 min
Use Relative RT: No
Int. Type: Base To Base
Retention Time: 0.608 min
Area: 12172.5 counts
Height: 6.08e+003 cps
Start Time: 0.543 min
End Time: 0.718 min
AST-2660-D8 peak
b
Intensity, cps
Time, min

FIG.9

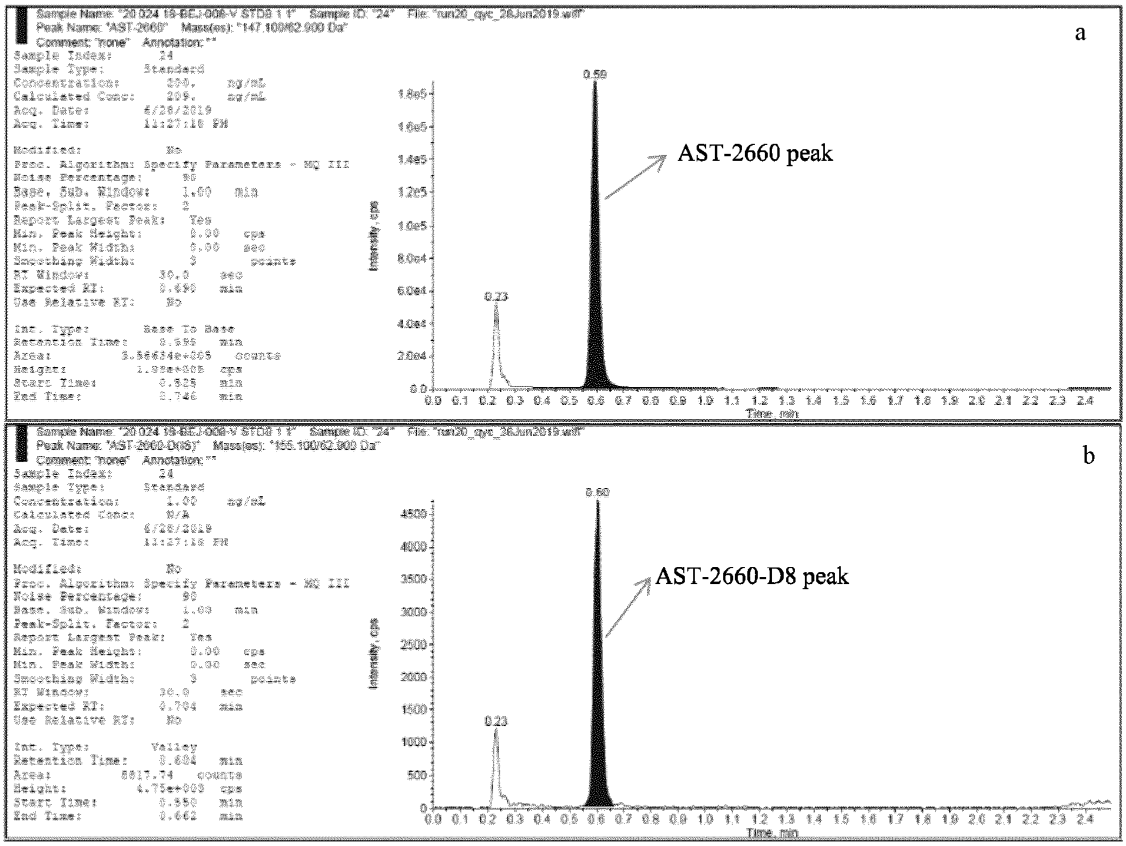
Sample Name: "20 024 18-BEJ-008-V STD8 1 1" Sample ID: "24" File: "run20_qyc_28Jun2019.wiff"
Peak Name: "AST-2660" Mass(es): "147.100/62.900 Da"
Comment: "none" Annotation: ""
Sample Index: 24
Sample Type: Standard
Concentration: 200. ng/mL
Calculated Conc: 209. ng/mL
Acq. Date: 6/28/2019
Acq. Time: 11:27:18 PM
Modified: No
Proc. Algorithm: Specify Parameters - MQ III
Noise Percentage: 90
Base. Sub. Window: 1.00 min
Peak-Split. Factor: 2
Report Largest Peak: Yes
Min. Peak Height: 0.00 cps
Min. Peak Width: 0.00 sec
Smoothing Width: 3 points
RT Window: 30.0 sec
Expected RT: 0.690 min
Use Relative RT: No
Int. Type: Base To Base
Retention Time: 0.595 min
Area: 3.56634e+005 counts
Height: 1.88e+005 cps
Start Time: 0.525 min
End Time: 0.746 min
a
AST-2660 peak
Intensity, cps
Time, min
Sample Name: "20 024 18-BEJ-008-V STD8 1 1" Sample ID: "24" File: "run20_qyc_28Jun2019.wiff"
Peak Name: "AST-2660-D(IS)" Mass(es): "155.100/62.900 Da"
Comment: "none" Annotation: ""
Sample Index: 24
Sample Type: Standard
Concentration: 1.00 ng/mL
Calculated Conc: N/A
Acq. Date: 6/28/2019
Acq. Time: 11:27:18 PM
Modified: No
Proc. Algorithm: Specify Parameters - MQ III
Noise Percentage: 90
Base. Sub. Window: 1.00 min
Peak-Split. Factor: 2
Report Largest Peak: Yes
Min. Peak Height: 0.00 cps
Min. Peak Width: 0.00 sec
Smoothing Width: 3 points
RT Window: 30.0 sec
Expected RT: 0.704 min
Use Relative RT: No
Int. Type: Valley
Retention Time: 0.604 min
Area: 6617.74 counts
Height: 4.75e+003 cps
Start Time: 0.550 min
End Time: 0.662 min
b
AST-2660-D8 peak
Intensity, cps
Time, min

FIG.10

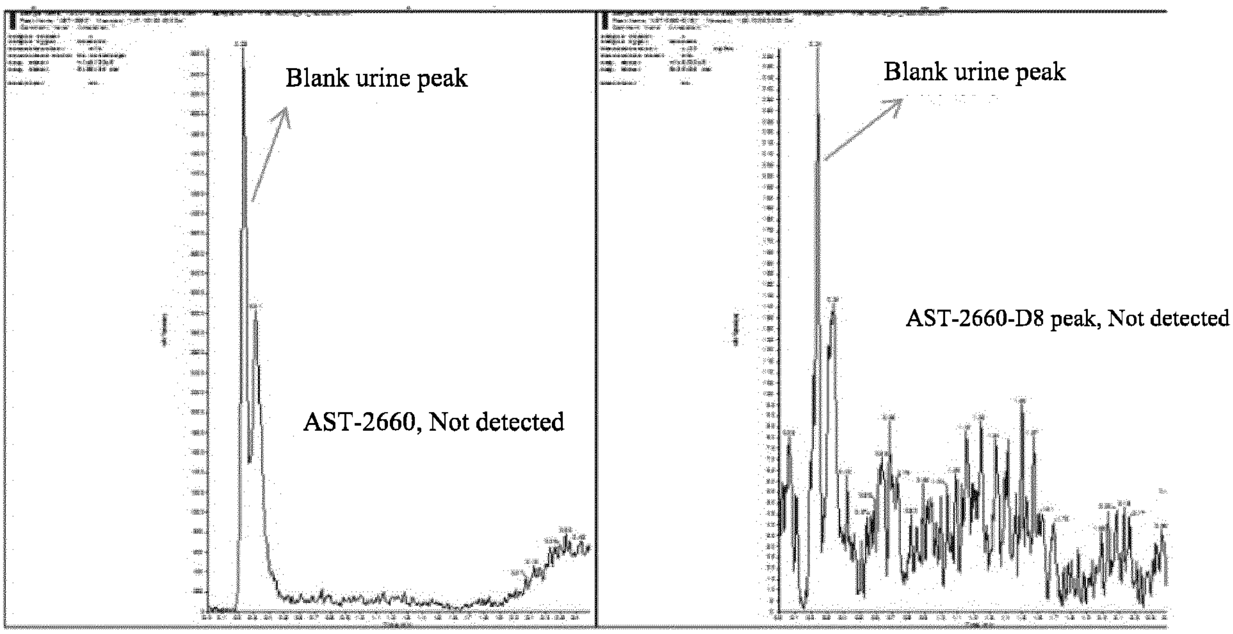
Blank urine peak
AST-2660, Not detected
Blank urine peak
AST-2660-D8 peak, Not detected

FIG.11

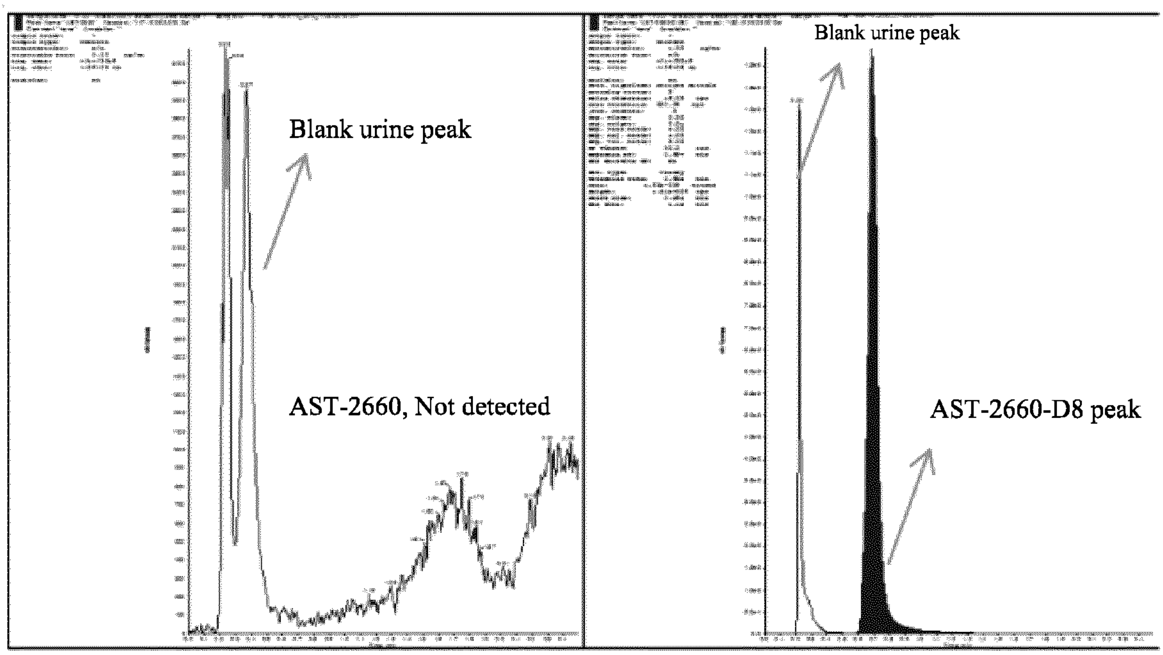
Blank urine peak
AST-2660, Not detected
Blank urine peak
AST-2660-D8 peak

FIG.12

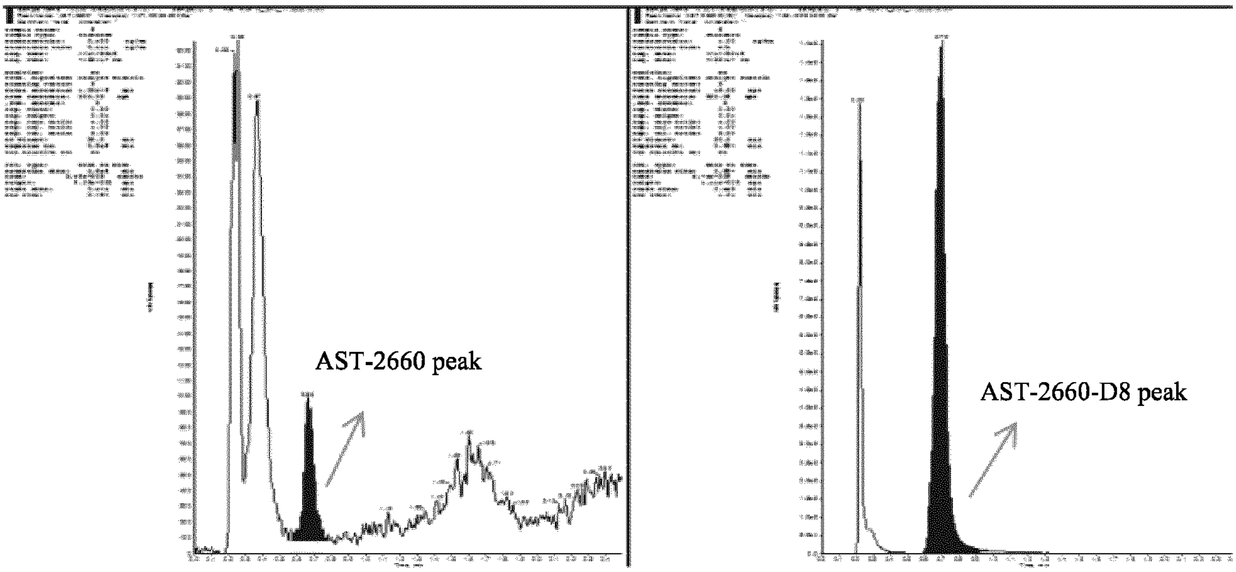


FIG.13

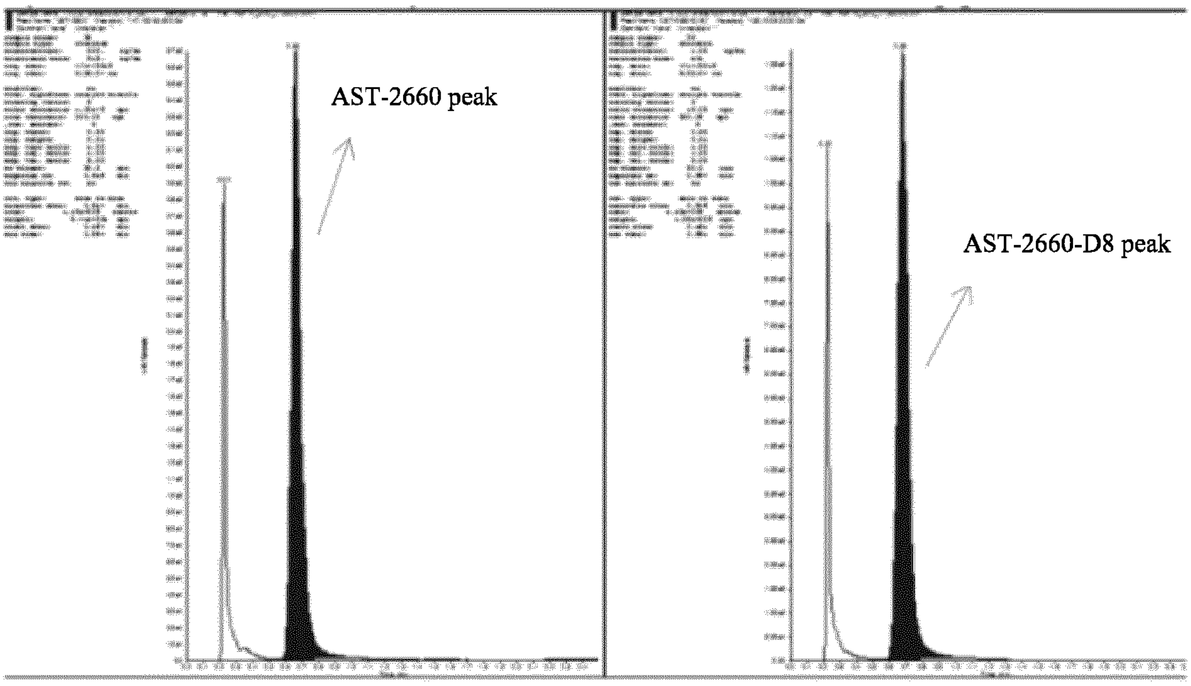


FIG.14

**INTERNATIONAL SEARCH REPORT**

International application No.
**PCT/CN2021/133645**

**A. CLASSIFICATION OF SUBJECT MATTER**

C07F 9/564(2006.01)i; C07B 59/00(2006.01)i; G01N 30/06(2006.01)i

According to International Patent Classification (IPC) or to both national classification and IPC

**B. FIELDS SEARCHED**

Minimum documentation searched (classification system followed by classification symbols)

C07F; C07B; G01N

Documentation searched other than minimum documentation to the extent that such documents are included in the fields searched

Electronic data base consulted during the international search (name of data base and, where practicable, search terms used)

CNKI, CNPAT, WPI, EPODOC, STN: 深圳艾欣达伟医药, 氘代, DMPK, AKR1C3, DNA烷化剂, 前药, 代谢, Deutero, alkylating agent, prodrug, metabolism, structural formula search

**C. DOCUMENTS CONSIDERED TO BE RELEVANT**

| Category* | Citation of document, with indication, where appropriate, of the relevant passages | Relevant to claim No. |
|---|---|---|
| Y | CN 107102079 A (SUZHOU HAIKE MEDICINE TECHNOLOGY CO., LTD.) 29 August 2017 (2017-08-29)<br>abstract | 1-23 |
| Y | EVANS Kathryn, et al. "OBI-3424, a novel AKR1C3-activated prodrug, exhibits potent efficacy against preclinical models of T-ALL"<br>*Clin Cancer Res.*, Vol. 25, 15 July 2019 (2019-07-15),<br>page 16, figure a | 1-23 |
| Y | BREIL Stephane, et al. "Identification of new aqueous chemical degradation products of isophosphoramide mustard"<br>*"Journal of Pharmaceutical and Biomedical Analysis"*,<br>Vol. 25, 31 December 2001 (2001-12-31),<br>page 673, figure 1, and page 675, right column 3.4 | 7-11 |
| Y | ZHANG Wenting, et al. "Synthesis and Evaluation of Radiolabeled Phosphoramide Mustard with Selectivity for Hypoxic Cancer Cells"<br>*ACS Medicinal Chemistry Letters*, Vol. 25, 23 October 2017 (2017-10-23),<br>supplementary information page 3 figure S3 and page 5 last paragraph | 7-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2022** | **18 August 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

INTERNATIONAL SEARCH REPORT

International application No.
PCT/CN2021/133645

C. DOCUMENTS CONSIDERED TO BE RELEVANT

| Category* | Citation of document, with indication, where appropriate, of the relevant passages | Relevant to claim No. |
|---|---|---|
| A | WO 2021120717 A1 (ASCENTAWITS PHARMACEUTICALS, LTD.) 24 June 2021 (2021-06-24)<br>entire document | 1-23 |
| A | WO 2016145092 A1 (THRESHOLD PHARMACEUTICALS, INC.) 15 September 2016 (2016-09-15)<br>entire document | 1-23 |
| A | WO 2020228685 A1 (ASCENTAWITS PHARMACEUTICALS, LTD.) 19 November 2020 (2020-11-19)<br>entire document | 1-23 |
| A | WO 2016210175 A1 (THRESHOLD PHARMACEUTICALS, INC.) 29 December 2016 (2016-12-29)<br>entire document | 1-23 |
| A | WO 2021068952 A1 (MEDSHINE DISCOVERY INC.) 15 April 2021 (2021-04-15)<br>entire document | 1-23 |

Form PCT/ISA/210 (second sheet) (January 2015)

**INTERNATIONAL SEARCH REPORT**
**Information on patent family members**

International application No.
**PCT/CN2021/133645**

| Patent document cited in search report | | | Publication date (day/month/year) | Patent family member(s) | | | Publication date (day/month/year) |
|---|---|---|---|---|---|---|---|
| CN | 107102079 | A | 29 August 2017 | None | | | |
| WO | 2021120717 | A1 | 24 June 2021 | TW | 202128188 | A | 01 August 2021 |
| | | | | TW | 202210083 | A | 16 March 2022 |
| | | | | TW | 202135831 | A | 01 October 2021 |
| | | | | WO | 2022052564 | A1 | 17 March 2022 |
| WO | 2016145092 | A1 | 15 September 2016 | KR | 20190072689 | A | 25 June 2019 |
| | | | | US | 2019225633 | A1 | 25 July 2019 |
| | | | | IL | 254377 | D0 | 30 November 2017 |
| | | | | CA | 2979251 | A1 | 15 September 2016 |
| | | | | US | 2018044360 | A1 | 15 February 2018 |
| | | | | KR | 20210095231 | A | 30 July 2021 |
| | | | | EP | 3277380 | A1 | 07 February 2018 |
| | | | | SG | 11201707293V | A | 30 October 2017 |
| | | | | TW | 201706262 | A | 16 February 2017 |
| | | | | ES | 2828026 | T3 | 25 May 2021 |
| | | | | EP | 3747508 | A1 | 09 December 2020 |
| | | | | KR | 20170128280 | A | 22 November 2017 |
| | | | | ES | 2896960 | T3 | 28 February 2022 |
| | | | | BR | 112017019287 | A2 | 02 May 2018 |
| | | | | KR | 20190072688 | A | 25 June 2019 |
| | | | | JP | 2018513876 | A | 31 May 2018 |
| | | | | AU | 2016229136 | A1 | 05 October 2017 |
| | | | | CN | 107530556 | A | 02 January 2018 |
| | | | | SG | 10201913462 X | A | 30 March 2020 |
| WO | 2020228685 | A1 | 19 November 2020 | US | 2022119429 | A1 | 21 April 2022 |
| | | | | AU | 2020275818 | A1 | 25 November 2021 |
| | | | | CA | 3140070 | A1 | 19 November 2020 |
| | | | | EP | 3971194 | A1 | 23 March 2022 |
| | | | | KR | 20220012274 | A | 03 February 2022 |
| | | | | CN | 113853379 | A | 28 December 2021 |
| WO | 2016210175 | A1 | 29 December 2016 | AU | 2021229128 | A1 | 30 September 2021 |
| | | | | ES | 2872533 | T3 | 02 November 2021 |
| | | | | EP | 3313385 | A1 | 02 May 2018 |
| | | | | US | 2018169064 | A1 | 21 June 2018 |
| | | | | AU | 2016282785 | A1 | 15 February 2018 |
| | | | | US | 2020085786 | A1 | 19 March 2020 |
| | | | | EP | 3854798 | A1 | 28 July 2021 |
| | | | | CA | 2990665 | A1 | 29 December 2016 |
| | | | | JP | 2018527301 | A | 20 September 2018 |
| | | | | JP | 2021091722 | A | 17 June 2021 |
| | | | | TW | 201713646 | A | 16 April 2017 |
| | | | | CN | 108024974 | A | 11 May 2018 |
| WO | 2021068952 | A1 | 15 April 2021 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 2020089692 W
- WO 2020228685 A1
- CN 2020120281 W
- WO 2021068952 A1
- US 2016021581 W
- WO 2016145092 A1
- CN 2016800150788
- CN 107530556 A
- US 2020120281 W
- WO 2020228686 A
- CN 2020114519 W
- WO 2021120717 A1
- US 2016039092 W
- WO 2016210175 A1
- CN 2016800368985
- CN 108024974 A


### Non-patent literature cited in the description


- **MENG, F. ; LI, W. F. ; JUNG, D. ; WANG, C. C. ; QI, T. ; SHIA, C. S. ; HSU, R. Y ; HSIEH, Y C. ; DUAN, J.** A novel selective AKR1C3-activated prodrug AST-3424/OBI-3424 exhibits broad anti-tumor activity. *American Journal of Cancer Research,* 2021, vol. 11 (7), 3645-3659
- Chinese Pharmacopoeia. 2020, vol. 4, 9012